# EUROPEAN PATENT SPECIFICATION

(11) **EP 1 262 229 B1**
(45) Date of publication and mention of the grant of the patent: **04.05.2005**
(21) Application number: 02009669.9
(22) Date of filing: 29.04.2002
(51) Int. Cl.: B01J 13/18, C09B 67/00

(54) **Coloring composition containing a pigment coated by a polyhydroxyalkanoate**
Farbzusammensetzung, enthaltend ein mit einem Polyhydroxyalkanoat beschichtetes Pigment
Composition colorante contenant un pigment recouvert par un polyhydroxyalkanoate

(30) Priority: 27.04.2001 JP 2001133479; 10.07.2001 JP 2001210058
(43) Date of publication of application: 04.12.2002
(73) Proprietor: CANON KABUSHIKI KAISHA, Ohta-ku, Tokyo (JP)
(72) Inventor: Kozaki, Shinya, Tokyo (JP); Yano, Tetsuya, Tokyo (JP); Nomoto, Tsuyoshi, Tokyo (JP); Honma, Tsutomu, Tokyo (JP)
(74) Representative: Weser, Wolfgang, Dr. Dipl.-Phys.

(56) References cited:
- WO-A-01/92359
- WO-A-93/23795
- PATENT ABSTRACTS OF JAPAN vol. 1998, no. 01, 30 January 1998 (1998-01-30) & JP 09 230131 A (KANSAI SHIN GIJUTSU KENKYUSHO:KK;OSHIMA NOBUMASA), 5 September 1997 (1997-09-05)
- PATENT ABSTRACTS OF JAPAN vol. 016, no. 159 (P-1339), 17 April 1992 (1992-04-17) & JP 04 009001 A (OPTREX CORP), 13 January 1992 (1992-01-13)
- PATENT ABSTRACTS OF JAPAN vol. 014, no. 296 (P-1067), 26 June 1990 (1990-06-26) & JP 02 091602 A (SEIKO EPSON CORP), 30 March 1990 (1990-03-30)

### SEQUENCE LISTING

<110> CANON KABUSHIKI KAISHA
<120> Coloring composition for color filters containing microencapsulated pigment composed of polyhydroxyalkanoate
<130> CFO16378
<150> JP P2001-133479
<151> 2001-04-02
<150> JP P2001-210058
<151> 2001-07-10
<160> 12
<170> Microsoft Word
<210> 1
<211> 20
<212> DNA
<213> Artificial Sequence
<400> 1
   tgctggaact gatccagtac 20
<210> 2
<211> 23
<212> DNA
<213> Artificial Sequence
<400> 2
   gggttgagga tgctctggat gtg 23
<210> 3
<211> 1680
<212> DNA
<213> Pseudomonas cichorii YN2 ; FERM BP-7375
<400> 3
   atgagtaaca agagtaacga tgagttgaag tatcaagcct ctgaaaacac 50
   cttggggctt aatcctgtcg ttgggctgcg tggaaaggat ctactggctt 100
   ctgctcgaat ggtgcttagg caggccatca agcaaccggt gcacagcgtc 150
   aaacatgtcg cgcactttgg tcttgaactc aagaacgtac tgctgggtaa 200
   atccgggctg caaccgacca gcgatgaccg tcgcttcgcc gatccggcct 250
   ggagccagaa cccgctctat aaacgttatt tgcaaaccta cctggcgtgg 300
   cgcaaggaac tccacgactg gatcgatgaa agtaacctcg cccccaagga 350
   tgtggcgcgt gggcacttcg tgatcaacct catgaccgaa gccatggcgc 400
   cgaccaacac cgcggccaac ccggcggcag tcaaacgctt tttcgaaacc 450
   ggtggcaaaa gcctgctcga cggcctctcg cacctggcca aggatctggt 500
   acacaacggc ggcatgccga gccaggtcaa catgggtgca ttcgaggtcg 550
   gcaagagcct gggcgtgacc gaaggcgcgg tggtgtttcg caacgatgtg 600
   ctggaactga tccagtacaa gccgaccacc gagcaggtat acgaacgccc 650
   gctgctggtg gtgccgccgc agatcaacaa gttctacgtt ttcgacctga 700
   gcccggacaa gagcctggcg cggttctgcc tgcgcaacaa cgtgcaaacg 750
   ttcatcgtca gctggcgaaa tcccaccaag gaacagcgag agtggggcct 800
   gtcgacctac atcgaagccc tcaaggaagc ggttgatgtc gttaccgcga 850
   tcaccggcag caaagacgtg aacatgctcg gcgcctgctc cggcggcatc 900
   acttgcaccg cgctgctggg ccattacgcg gcgattggcg aaaacaaggt 950
   caacgccctg accttgctgg tgagcgtgct tgataccacc ctcgacagcg 1000
   atgttgccct gttcgtcaat gaacagaccc ttgaagccgc caagcgccac 1050
   tcgtaccagg ccggcgtact ggaaggccgc gacatggcga aggtcttcgc 1100
   ctggatgcgc cccaacgatc tgatctggaa ctactgggtc aacaattacc 1150
   tgctaggcaa cgaaccgccg gtgttcgaca tcctgttctg gaacaacgac 1200
   accacacggt tgcccgcggc gttccacggc gacctgatcg aactgttcaa 1250
   aaataaccca ctgattcgcc cgaatgcact ggaagtgtgc ggcaccccca 1300
   tcgacctcaa gcaggtgacg gccgacatct tttccctggc cggcaccaac 1350
   gaccacatca ccccgtggaa gtcctgctac aagtcggcgc aactgtttgg 1400
   cggcaacgtt gaattcgtgc tgtcgagcag cgggcatatc cagagcatcc 1450
   tgaacccgcc gggcaatccg aaatcgcgct acatgaccag caccgaagtg 1500
   gcggaaaatg ccgatgaatg gcaagcgaat gccaccaagc ataccgattc 1550
   ctggtggctg cactggcagg cctggcaggc ccaacgctcg ggcgagctga 1600
   aaaagtcccc gacaaaactg ggcagcaagg cgtatccggc aggtgaagcg 1650
   gcgccaggca cgtacgtgca cgaacggtaa 1680
<210> 4
<211> 1683
<212> DNA
<213> Pseudomonas cichorii YN2 ; FERM BP-7375
<400> 4
   atgcgcgata aacctgcgag ggagtcacta cccacccccg ccaagttcat      50
   caacgcacaa agtgcgatta ccggcctgcg tggccgggat ctggtttcga     100
   ctttgcgcag tgtcgccgcc catggcctgc gccaccccgt gcacaccgcg     150
   cgacacgcct tgaaactggg tggtcaactg ggacgcgtgt tgctgggcga     200
   caccctgcat cccaccaacc cgcaagaccg tcgcttcgac gatccggcgt     250
   ggagtctcaa tcccttttat cgtcgcagcc tgcaggcgta cctgagctgg 300
   cagaagcagg tcaagagctg gatcgacgaa agcaacatga gcccggatga 350
   ccgcgcccgt gcgcacttcg cgttcgccct gctcaacgat gccgtgtcgc 400
   cgtccaacag cctgctcaat ccgctggcga tcaaggaaat cttcaactcc 450
   ggcggcaaca gcctggtgcg cgggatcggc catctggtcg atgacctctt 500
   gcacaacgat ggcttgcccc ggcaagtcac caggcatgca ttcgaggttg 550
   gcaagaccgt cgccaccacc accggcgccg tggtgtttcg caacgagctg 600
   ctggagctga tccaatacaa gccgatgagc gaaaagcagt attccaaacc 650
   gctgctggtg gtgccgccac agatcaacaa gtactacatt tttgacctca 700
   gcccccataa cagcttcgtc cagttcgcgc tcaagaacgg cctgcaaacc 750
   ttcgtcatca gctggcgcaa tccggatgta cgtcaccgcg aatggggcct 800
   gtcgacctac gtcgaagcgg tggaagaagc catgaatgtc tgccgggcaa 850
   tcaccggcgc gcgcgaggtc aacctgatgg gcgcctgcgc tggcgggctg 900
   accattgctg ccctgcaggg ccacttgcaa gccaagcgac agctgcgccg 950
   cgtctccagc gcgacgtacc tggtgagcct gctcgacagc caactggaca 1000
   gcccggccac actcttcgcc gacgaacaga ccctggaggc ggccaagcgc 1050
   cgctcctacc agaaaggtgt gctggaaggc cgcgacatgg ccaaggtttt 1100
   cgcctggatg cgccccaacg atttgatctg gagctacttc gtcaacaatt 1150
   acctgatggg caaggagccg ccggcgttcg acattctcta ctggaacaat 1200
   gacaacacac gcctgccggc cgccctgcat ggtgacttgc tggacttctt 1250
   caagcacaac ccgctgagcc atccgggtgg cctggaagtg tgcggcaccc 1300
   cgatcgactt gcaaaaggtc accgtcgaca gtttcagcgt ggccggcatc 1350
   aacgatcaca tcacgccgtg ggacgcggtg tatcgctcaa ccctgttgct 1400
   cggtggcgag cgtcgctttg tcctggccaa cagcggtcat gtgcagagca 1450
   ttctcaaccc gccgaacaat ccgaaagcca actacctcga aggtgcaaaa 1500
   ctaagcagcg accccagggc ctggtactac gacgccaagc ccgtcgacgg 1550
   tagctggtgg acgcaatggc tgggctggat tcaggagcgc tcgggcgcgc 1600
   aaaaagaaac ccacatggcc ctcggcaatc agaattatcc accgatggag 1650
   gcggcgcccg ggacttacgt gcgcgtgcgc tga 1683
<210> 5
<211> 29
<212> DNA
<213> Artificial Sequence
<220>
<223> Primer for PCR multiplication
<400> 5
   ggaccaagct tctcgtctca gggcaatgg 29
<210> 6
<211> 29
<212> DNA
<213> Artificial Sequence
<220>
<223> Primer for PCR multiplication
<400> 6
   cgagcaagct tgctcctaca ggtgaaggc 29
<210> 7
<211> 29
<212> DNA
<213> Artificial Sequence
<220>
<223> Primer for PCR multiplication
<400> 7
   gtattaagct tgaagacgaa ggagtgttg 29
<210> 8
<211> 30
<212> DNA
<213> Artificial Sequence
<220>
<223> Primer for PCR multiplication
<400> 8
   catccaagct tcttatgatc gggtcatgcc 30
<210> 9
<211> 30
<212> DNA
<213> Artificial Sequence
<220>
<223> Primer for PCR multiplication
<400> 9
   cgggatccag taacaagagt aacgatgagt 30
<210> 10
<211> 30
<212> DNA
<213> Artificial Sequence
<220>
<223> Primer for PCR multiplication
<400> 10
   cgatctcgag ttaccgttcg tgcacgtacg 30
<210> 11
<211> 30
<212> DNA
<213> Artificial Sequence
<220>
<223> Primer for PCR multiplication
<400> 11
   cgggatcccg cgataaacct gcgagggagt 30
<210> 12
<211> 30
<212> DNA
<213> Artificial Sequence
<220>
<223> Primer for PCR multiplication
<400> 12
   cgatctcgag gcgcacgcgc acgtaagtcc 30

## Description

### BACKGROUND OF THE INVENTION

### Field of the Invention

The present invention relates to a coloring composition useful for production of a color filter used in a color liquid crystal display device and to a process for producing said coloring composition.

### Related Background Art

As a representative system of color liquid crystal display devices such as color liquid crystal displayers and color video cameras, there is mainly adopted a color filter system in which a color filter is provided in the interior or exterior of a liquid crystal cell, and a liquid crystal is used as an optical shutter.

This color filter is generally produced by forming a fine colored pattern on a transparent substrate such as glass or an opaque substrate such as silicon with three coloring compositions of red (R), green (G) and blue (B) colors.

Dyes have heretofore been often used in these coloring compositions. However, pigments having excellent light fastness and heat fastness, particularly, organic pigments have come to be often used in place of the dyes because the dyes have limits in light fastness and heat fastness though they are excellent in color characteristics.

For example, Japanese Patent Application Laid-Open Nos. 58-46325 and 60-184203 disclose color filters with pigment particles dispersed in a polyimide resin. Japanese Patent Application Laid-Open Nos. 5-224007 and 5-224008 disclose color filters with pigment particles dispersed in methylol melamine or silanol oligomer.

When the conventional pigment-containing coloring compositions are used, however, occurrence of pixel unevenness, lowering of transmittance, lowering of color rendition, etc. are caused because the dispersed state of fine pigment particles is unstable, and so aggregation is easy to occur. There is thus a demand for further improvements from the viewpoints of contrast and transparency that are required of color filters.

In order to solve these problems, it is thus conducted to microencapsulate a pigment in a coloring composition for color filters to evenly disperse the pigment. For example, Japanese Patent Application Laid-Open Nos. 63-95401, 63-254402, 2-91602, 4-9001 and 9-230131 describe a process for producing a color filter by dispersing a microencapsulated pigment in a transparent resin binder and applying the resultant dispersion to a substrate.

These conventional microcapsules are prepared by any of various chemical preparation processes, for example, an interfacial polymerization process (a process in which two monomers or reactants are separately dissolved in a dispersed phase and a continuous phase, and the monomers are polymerized at an interface between both phases to form a wall film), a suspension polymerization process (a process in which a core material is dispersed in a monomer in an aqueous medium, and the temperature of the system is then raised to form a wall film), an emulsion polymerization process (a process in which a water-insoluble monomer is added to an aqueous medium in which a surfactant has been dissolved, the mixture is stirred to take the monomer in the micelle of the emulsifier, and the monomer is polymerized in the micelle to form a wall film), an in-situ polymerization process (a process in which liquid or gaseous monomer and catalyst, or two reactive substances are fed from either a continuous phase or a core particle side to cause a reaction, thereby forming a wall film), a coacervation (phase separation) process (a process in which a polymer solution in which core particles have been dispersed is separated into a thick phase having a high polymer concentration and a dilute phase to form a wall film), and a submerged drying process (a process in which a liquid with a core material dispersed in a solution of a wall film material is prepared, the dispersion is poured into a liquid, in which the continuous phase of the dispersion is not miscible, to prepare a complex emulsion, and the medium, in which the wall film material has been dissolved, is gradually removed to form a wall film).

In the microcapsules prepared in accordance with these conventional processes, however, surfactants such as suspension stabilizers and emulsifiers, which are used in plenty, remain in capsules or on capsule films, and so there is a demand for further improvements from the viewpoints of water fastness of colored images after application of coloring compositions and adhesion of the colored images to substrates.

In an electrodeposition process which is one of the production processes of a color filter, hydrophilic coloring compositions are used, and so a surfactant or the like must be used in plenty when an ordinary hydrophobic resin is used. Therefore, the same improvements as described above are desired.

Japanese Patent Application Laid-Open No. 8-313718 thus discloses a process in which an anionic polymer is used to prepare microcapsules by emulsion polymerization without using any surfactant, and the microcapsules are self-dispersed in the resulting hydrophilic coloring composition without using any surfactant. However, this process has been complicated in operation because a solvent contained in the hydrophilic reaction solution must be distilled off by distillation or the like after the preparation of the microcapsules.

In these conventional production processes, a dispersion medium is also contained in the microcapsules in addition to a pigment, and so the density of the pigment occupied in the microcapsules cannot be raised in some cases. In such a case, there is a demand for further improvements from the viewpoint of uses of a color filter of which high-quality images high in definition and resolution are required.

### SUMMARY OF THE INVENTION

It is an object of the present invention to provide a coloring composition for color filters making use of a pigment, in which the dispersed state of a pigment is stable without using any surfactant, and so aggregation is hard to occur, and which permits formation of high-definition and high-quality images excellent in color rendition, transparency and contrast, and a simple production process thereof, by which the use of surfactants can be abolished, or the amount of surfactants used can be reduced to a great extent.

The above object is achieved by the coloring composition according to claim 1 and the process for producing a coloring composition according to claim 19. The dependent claims relate to further developments.

In order to achieve the above object, the present inventors have carried out an extensive investigation. As a result, it has been found that a polyhydroxyalkanoate (hereinafter may be abbreviated as "PHA") synthetic enzyme is immobilized on a pigment for color filters, and 3-hydroxyacyl coenzyme A (3-hydroxyacyl CoA) is added thereto and reacted, whereby the pigment can be easily encapsulated in fine microcapsules without using any surfactant, that at that time, the pigment can be encapsulated at a high density because the surface of the pigment is coated directly with PHA, and that the composition of PHA, which is a shell of the microencapsulated pigment, can be optionally set so as to have hydrophilicity, lipophilicity or any other nature by . suitably selecting the kind of the 3-hydroxyacyl CoA. It has also been found that a microencapsulated pigment improved in various properties can be provided by subjecting the PHA to chemical modification. More specifically, for example, it has been found that a graft chain is introduced in the PHA, whereby a microencapsulated pigment in which at least a part of a pigment is coated with a PHA having various properties attributable to the graft chain can be provided. Further, it has been found that the PHA is crosslinked, whereby a microencapsulated pigment in which at least a part of a pigment is coated with a PHA having desired physicochemical properties (for example, mechanical strength, chemical resistance, heat resistance, etc.) can be provided. In the present invention, the term "chemical modification" means that a chemical reaction is performed in a molecule of a polymeric material, between molecules thereof or between the polymeric material and another chemical substance, whereby the molecular structure of the polymeric material is modified. The term "crosslinking" means that a polymeric material is chemically or physicochemically bonded in its molecule or between molecules thereof to form a network structure. The term "crosslinking agent" means a substance added for conducting the crosslinking reaction and having certain reactivity to the polymeric material.

It has been found that owing to the above-described properties, the microencapsulated pigment has good dispersibility in the resulting hydrophilic, lipophilic or amphipathic coloring composition without using any surfactant by suitably selecting the kind of the PHA and can hence form images excellent in color rendition, transparency and contrast, and the images formed are excellent in water fastness and adhesion to substrates, thus leading to completion of the present invention.

According to the present invention, there is thus provided a coloring composition for color filters, comprising a coloring material obtained by coating at least a part of pigment particles with PHA, and a dispersion medium for the coloring material.

According to the present invention, there is also provided a coloring composition for color filters, comprising a coloring material obtained by coating at least a part of pigment particles with hydrophilic PHA, and a dispersion medium for the coloring material.

According to the present invention, there is further provided a process for producing a coloring composition for color filters containing a coloring material and a dispersion medium for the coloring material, which comprises the steps of:
performing a synthetic reaction of a polyhydroxyalkanoate using a 3-hydroxyacyl CoA as a substrate in the presence of a polyhydroxyalkanoate-synthesizing enzyme immobilized on the surfaces of pigment particles dispersed in an aqueous medium, thereby coating at least a part of the surfaces of the pigment particles with the polyhydroxyalkanoate to obtain a coloring material, and
dispersing the coloring material in a dispersion medium.

In particular, the production process comprises the step of using a 3-hydroxyacyl CoA having an anionic functional group to coat at least a part of the surfaces of the pigment particles with an anionic PHA, thereby obtaining a coloring material.

In the present invention, the coloring material has a structure in which at least a part of the surfaces of pigment particles is coated with a polyhydroxyalkanoate, and it is not always necessary to coat the whole surfaces of the pigment particles so far as the intended properties of the coloring material are achieved. In the state that the whole surfaces has been coated, a microencapsulated pigment in which the pigment particles are used as a core, and the coating layer of the polyhydroxyalkanoate is used as a shell is provided as a coloring material.

### BRIEF DESCRIPTION OF THE DRAWINGS

Figure is a cross-sectional view illustrating a fundamental structure of a color liquid crystal display device according to the present invention.

### DESCRIPTION OF THE PREFERRED EMBODIMENTS

The present invention will hereinafter be described in more detail.

### <PHA>

No particular limitation is imposed on PHA usable in the present invention so far as it is a PHA which can be synthesized by a PHA-synthesizing enzyme which contributes to a biosynthesis of PHA.

The biosynthesis of PHA is performed by a polymerization reaction by an enzyme using, as a substrate, an (R)-3-hydroxyacyl CoA formed from various alkanoic acids as raw materials through various metabolic pathways (for example, β-oxidation systems and fatty acid synthesis pathways) in vivo. The enzyme that catalyzes this polymerization reaction is a PHA-synthesizing enzyme (also referred to as PHA polymerase or PHA synthase). CoA is an abbreviation for coenzyme A, and the chemical structure thereof is as follows:

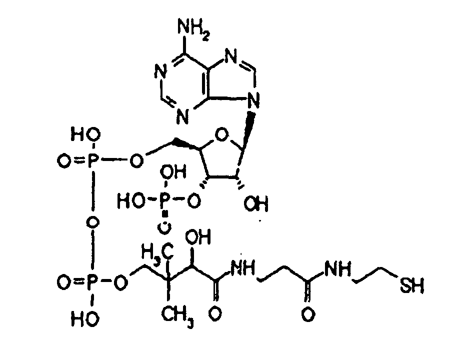

Reactions until an alkanoic acid is converted to a PHA through β-oxidation system and polymerization reaction by the PHA-synthesizing enzyme will hereinafter be shown.

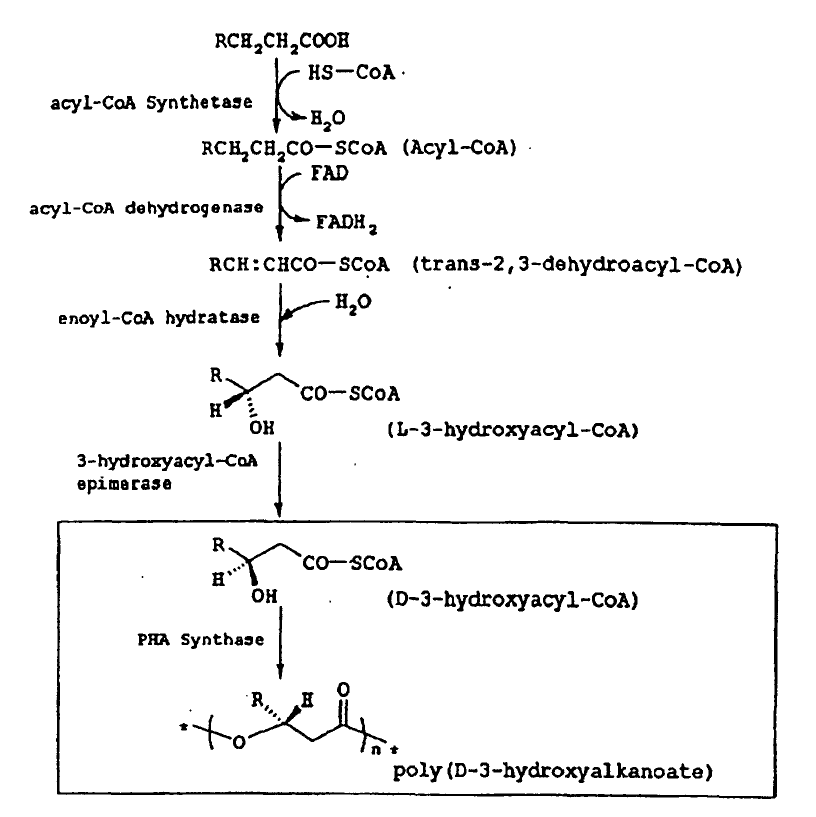

On the other hand, in the case of passing through a fatty acid synthesis pathway, it is considered that an (R)-3-hydroxyacyl CoA converted from an (R)-3-hydroxyacyl-ACP (ACP means acyl carrier protein) formed in the pathway is used as a substrate, and PHA is synthesized by the PHA synthase in the same manner as described above.

It is known that PHA can be synthesized in vitro by taking the PHB synthase or PHA synthase out of a strain, and the following examples are present.

For example, Proc. Natl. Acad. Sci. USA, 92, 6279-6283 (1995) succeeds in synthesizing a PHB composed of a 3-hydroxy-n-butyric acid unit by causing a 3-hydroxybutyryl CoA to act on a PHB synthase derived from *Alcaligenes eutrophus.* Int. J. Biol. Macromol., 25, 55-60 (1999) succeeds in synthesizing a PHA composed of a 3-hydroxy-n-butyric acid unit or 3-hydroxy-n-valeric acid unit by causing a 3-hydroxybutyryl CoA or 3-hydroxyvaleryl CoA to act on a PHB synthase derived from *Alcaligenes eutrophus.* In this literature, it is also reported that when a racemic 3-hydroxybutyryl CoA was reacted, a PHB composed of an (R)-3-hydroxy-n-butyric acid unit alone was synthesized. Macromol. Rapid Commun., 21, 77-84 (2000) also reports PHB synthesis in vitro using a PHB synthase derived from *Alcaligenes eutrophus.* FEMS Microbiol. Lett., 168, 319-324 (1998) succeeds in synthesizing a PHB composed of a 3-hydroxy-n-butyric acid unit by causing a 3-hydroxybutyryl CoA to act on a PHB synthase derived from *Chromatium vinosum.* Appl. Microbiol. Biotechnol., 54, 37-43 (2000) succeeds in synthesizing a PHA composed of a 3-hydroxy-decanoic acid unit by causing a 3-hydroxydecanoyl CoA to act on a PHA synthase derived from *Pseudomonas aeruginosa.*

As described above, PHA synthases are enzymes catalyzing a final stage in a PHA synthesizing reaction system in vivo. Accordingly, all PHAs known to be synthesized in vivo come to be synthesized by the catalytic action of such enzymes. It is thus possible to produce microencapsulated pigments with a pigment coated with all kinds of PHAs, which have been known to be synthesized in vivo, by causing a 3-hydroxyacyl CoA corresponding to the desired PHA to act on such an enzyme immobilized on a substrate in the present invention.

As specific examples of PHAs used in the present invention, may be mentioned PHA having at least one of the monomer units represented by the following formulae [1] to [10]. 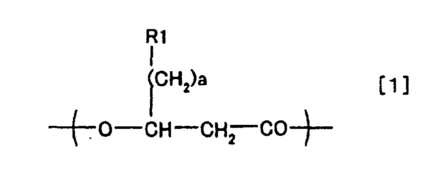 wherein the monomer unit is at least one selected from the group consisting of the monomer units in which the combination of R1 and "a" is any of the following combinations:
a monomer unit in which R1 is a hydrogen (H) atom, and "a" is any one integer selected from 0 to 10;
a monomer unit in which R1 is a halogen atom, and "a" is any one integer selected from 1 to 10;
a monomer unit in which R1 is a carboxyl group or a salt thereof, and "a" is any one integer selected from 1 to 10;
a monomer unit in which R1 is a chromophoric group, and "a" is any one integer selected from 1 to 10; and
a monomer unit in which R1 is 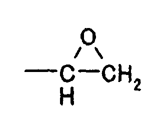
and "a" is any one integer selected from 1 to 7. 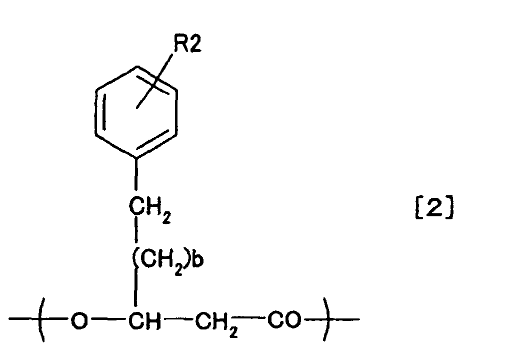
wherein "b" is any one integer selected from 0 to 7, and R2 is any one selected from the group consisting of a hydrogen (H) atom, a halogen atom, -CN, -NO₂, -CF₃, -C₂F₅ and -C₃F₇. 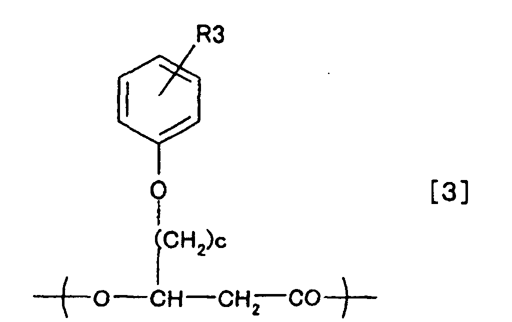 wherein "c" is any one integer selected from 1 to 8, and R3 is any one selected from the group consisting of a hydrogen (H) atom, a halogen atom, -CN, -NO₂, -CF₃, -C₂F₅ and -C₃F₇. 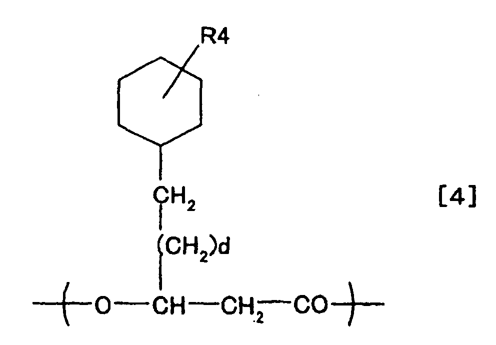 wherein "d" is any one integer selected from 0 to 7, and R4 is any one selected from the group consisting of a hydrogen (H) atom, a halogen atom, -CN, -NO₂, -CF₃, -C₂F₅ and -C₃F₇. 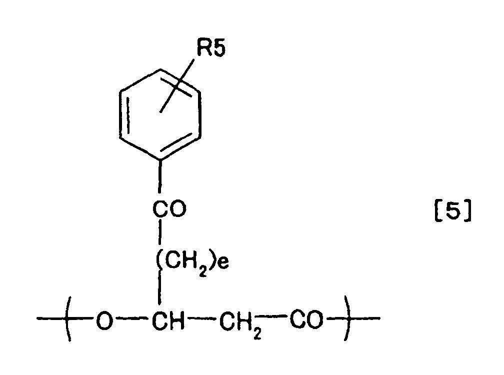 wherein "e" is any one integer selected from 1 to 8, and R5 is any one selected from the group consisting of a hydrogen (H) atom, a halogen atom, -CN, -NO₂, -CF₃, -C₂F₅, -C₃F₇ -CH₃, -C₂H₅ and -C₃H₇. 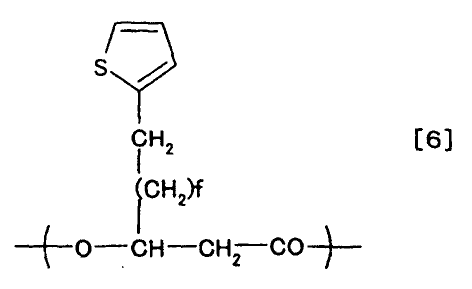 wherein "f" is any one integer selected from 0 to 7. 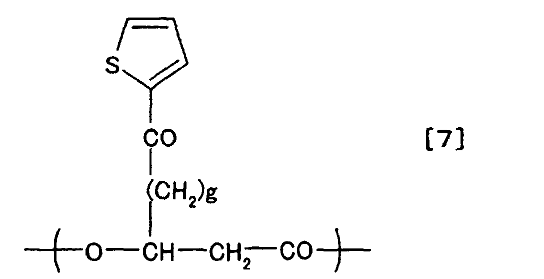 wherein "g" is any one integer selected from 1 to 8. 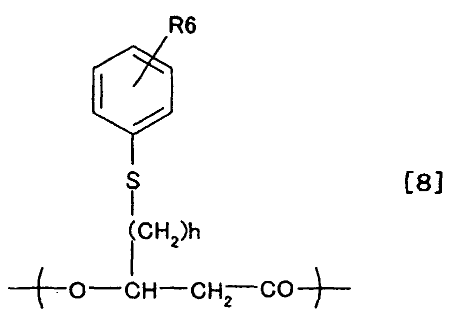 wherein "h" is any one integer selected from 1 to 7, and R6 is any one selected from the group consisting of a hydrogen (H) atom, a halogen atom, -CN, -NO₂, -COOR', -SO₂R", -CH₃, -C₂H₅, -C₃H₇, -CH(CH₃)₂ and -C(CH₃)₃, in which R' is any of a hydrogen (H) atom, Na, K, -CH₃ and -C₂H₅, and R" is any of -OH, -ONa, -OK, a halogen atom, -OCH₃ and -OC₂H₅. 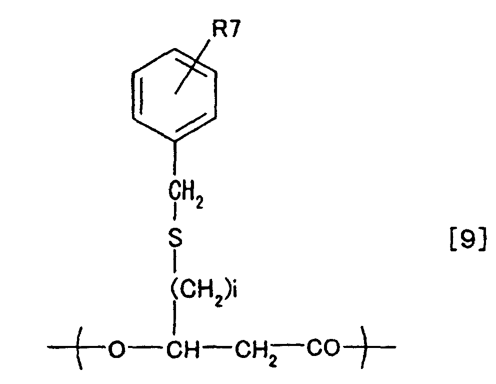 wherein "i" is any one integer selected from 1 to 7, and R7 is any one selected from the group consisting of a hydrogen (H) atom, a halogen atom, -CN, -NO₂, -COOR' and -SO₂R", in which R' is any of a hydrogen (H) atom, Na, K, -CH₃ and -C₂H₅, and R" is any of -OH, -ONa, -OK, a halogen atom, -OCH₃ and -OC₂H₅. 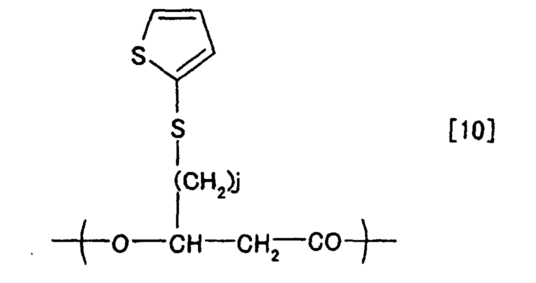 wherein "j" is any one integer selected from 1 to 9.

Incidentally, specific examples of the halogen atom in the above formulae include fluorine, chlorine and bromine.

Specific examples of the 3-hydroxyacyl CoA used as a substrate in the syntheses of the PHA include 3-hydroxyacyl CoAs represented by the following formulae [12] to [21]. 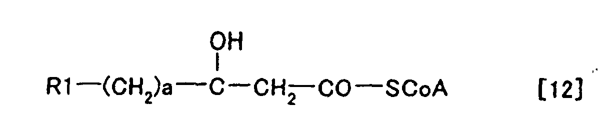 wherein -SCoA is a coenzyme A bonded to an alkanoic acid, and the combination of R1 and "a" is at least one selected from the group consisting of the following combinations and corresponds to the combination of R1 and "a" in the monomer unit represented by the formula [1]:
a monomer unit in which R1 is a hydrogen (H) atom, and "a" is any one integer selected from 0 to 10;
a monomer unit in which R1 is a halogen atom, and "a" is any one integer selected from 1 to 10;
a monomer unit in which R1 is a carboxyl group or a salt thereof, and "a" is any one integer selected from 1 to 10;
a monomer unit in which R1 is a chromophoric group, and "a" is any one integer selected from 1 to 10; and
a monomer unit in which R1 is 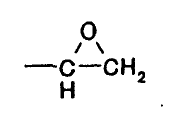
and "a" is any one integer selected from 1 to 7. 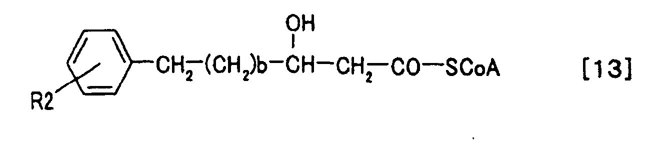
wherein -SCoA is a coenzyme A bonded to an alkanoic acid, "b" corresponds to "b" in the monomer unit represented by the formula [2] and is any one integer selected from 0 to 7, and R2 corresponds to R2 in the monomer unit represented by the formula [2] and is any one selected from the group consisting of a hydrogen (H) atom, a halogen atom, -CN, -NO₂, -CF₃, -C₂F₅ and -C₃F₇. 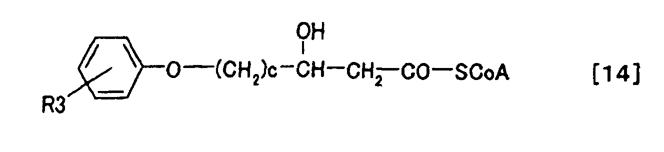 wherein -SCoA is a coenzyme A bonded to an alkanoic acid, "c" corresponds to "c" in the monomer unit represented by the formula [3] and is any one integer selected from 1 to 8, and R3 corresponds to R3 in the monomer unit represented by the formula [3] and is any one selected from the group consisting of a hydrogen (H) atom, a halogen atom, -CN, -NO₂, -CF₃, -C₂F₅ and -C₃F₇. 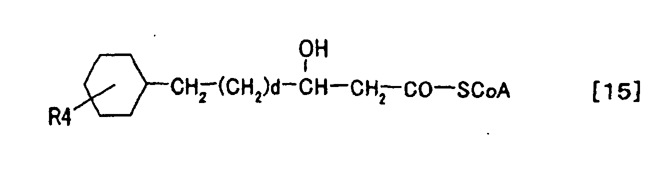 wherein -SCoA is a coenzyme A bonded to an alkanoic acid, "d" corresponds to "d" in the monomer unit represented by the formula [4] and is any one integer selected from 0 to 7, and R4 corresponds to R4 in the monomer unit represented by the formula [4] and is any one selected from the group consisting of a hydrogen (H) atom, a halogen atom, -CN, -NO₂, -CF₃, -C₂F₅ and -C₃F₇. 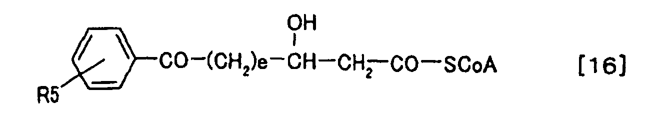 wherein -SCoA is a coenzyme A bonded to an alkanoic acid, "e" corresponds to "e" in the monomer unit represented by the formula [5] and is any one integer selected from 1 to 8, and R5 corresponds to R5 in the monomer unit represented by the formula [5] and is any one selected from the group consisting of a hydrogen (H) atom, a halogen atom, -CN, -NO₂, -CF₃, -C₂F₅, -C₃F₇ -CH₃, -C₂H₅ and -C₃H₇. 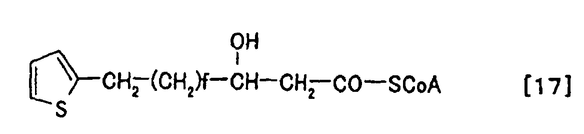 wherein -SCoA is a coenzyme A bonded to an alkanoic acid, and "f" corresponds to "f" in the monomer unit represented by the formula [6] and is any one integer selected from 0 to 7. 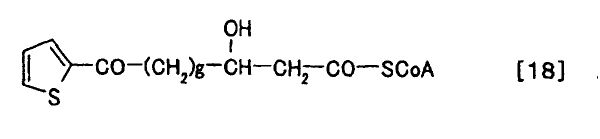 wherein -SCoA is a coenzyme A bonded to an alkanoic acid, and "g" corresponds to "g" in the monomer unit represented by the formula [7] and is any one integer selected from 1 to 8. 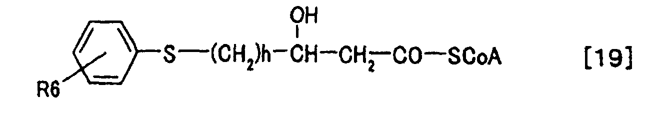 wherein -SCoA is a coenzyme A bonded to an alkanoic acid, "h" corresponds to "h" in the monomer unit represented by the formula [8] and is any one integer selected from 1 to 7, and R6 corresponds to R6 in the monomer unit represented by the formula [8] and is any one selected from the group consisting of a hydrogen (H) atom, a halogen atom, -CN, -NO₂, -COOR', -SO₂R", -CH₃, -C₂H₅, -C₃H₇, -CH(CH₃)₂ and -C(CH₃)₃, in which R' is any of a hydrogen (H) atom, Na, K, -CH₃ and -C₂H₅, and R" is any of -OH, -ONa, -OK, a halogen atom, -OCH₃ and -OC₂H₅. 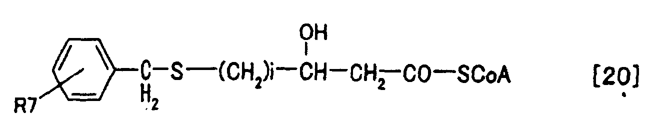 wherein -SCoA is a coenzyme A bonded to an alkanoic acid, "i" corresponds to "i" in the monomer unit represented by the formula [9] and is any one integer selected from 1 to 7, and R7 corresponds to R7 in the monomer unit represented by the formula [9] and is any one selected from the group consisting of a hydrogen (H) atom, a halogen atom, -CN, -NO₂, -COOR' and -SO₂R", in which R' is any of a hydrogen (H) atom, Na, K, -CH₃ and -C₂H₅, and R" is any of -OH, -ONa, -OK, a halogen atom, -OCH₃ and -OC₂H₅. 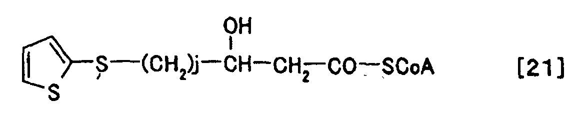 wherein -SCoA is a coenzyme A bonded to an alkanoic acid, and "j" corresponds to "j" in the monomer unit represented by the formula [10] and is any one integer selected from 1 to 9.

As the PHA making up the microencapsulated pigment, one having a hydrophilic functional group is used, whereby the microencapsulated pigment can be dispersed in the resulting hydrophilic coloring composition while reducing the use of a surfactant. Any hydrophilic functional group may be used, and an anionic functional group may be used. Further, any anionic functional group may be used, and a carboxyl group may be particularly used. Examples of a PHA having the carboxyl group include PHAs in which a carboxyl group has been introduced by at least one of monomer units represented by the formula 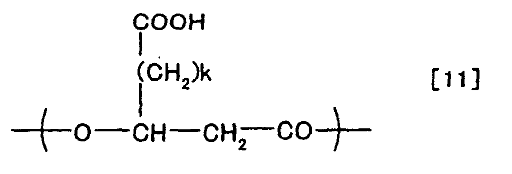 wherein "k" is any one integer selected from 1 to 10.

More specifically, among the above-mentioned PHAs, a PHA having a monomer unit derived from 3-hydroxy-pimelic acid represented by the formula 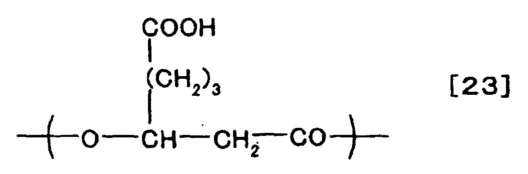 may be exemplified.

As examples of the 3-hydroxyacyl CoA used as a substrate for introduction of the monomer unit represented by the formula [11], may be mentioned hydroxyacyl CoAs represented by the formula 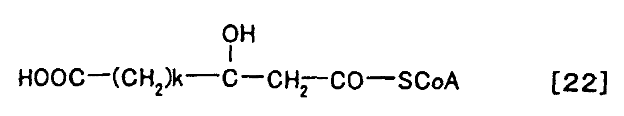 wherein -SCoA is a coenzyme A bonded to an alkanoic acid, and "k" corresponds to "k" in the monomer unit represented by the formula [11] and is any one integer selected from 1 to 10. At least one of these substrates may be used. As the 3-hydroxyacyl CoA used as a substrate for synthesizing the PHA having 3-hydroxypimelic acid represented by the formula [22], may be mentioned a 3-hydroxypimelyl CoA represented by the formula

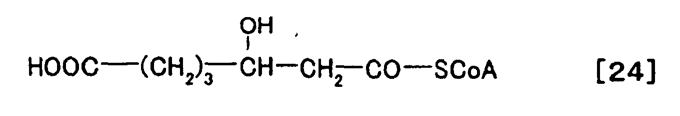

Incidentally, specific examples of the halogen atom in the above formulae include fluorine, chlorine and bromine. No particular limitation is imposed on the chromophoric group so far as the 3-hydroxyacyl CoA thereof can be affected by the catalytic action of the PHA synthase. However, it is desirable that a methylene chain having 1 to 5 carbon atoms be present between the carboxyl group, to which the CoA has been bonded, and the chromophoric group in view of steric hindrance upon the synthesis of the polymer. As uses of the coloring composition containing the microencapsulated pigment coated with the PHA having the chromophoric group, can be expected more effective coloring ability by, for example, the combined action with the coloring component of the pigment. Examples of the chromophoric group include nitroso, nitro, azo, diarylmethane, triarylmethane, xanthene, acridine, quinoline, methine, thiazole, indamine, indophenol, lactone, aminoketone, hydroxyketone, stilbene, azine, oxazine, thiazine, anthraquinone, phthalocyanine and indigoid.

As the PHA used in the present invention, may also be used a random copolymer or block copolymer containing a plurality of the monomer units described above, whereby the properties of the functional groups contained in the respective monomer units can be utilized to control the properties of the PHA, impart a plurality of functions to the PHA and develop new functions using interactions between the functional groups.

The compositions such as the kind and concentration of the 3-hydroxyacyl CoA as a substrate are changed with time, whereby the monomer unit composition of the PHA can be changed in a direction from the inside of the pigment toward the outside. In the case of, for example, a microencapsulated pigment for fabrication of a color filter by an ink-jet system, thereby, plural functions such as excellent blocking resistance upon storage and excellent low-temperature fixing ability upon fixing can be given at the same time by forming a PHA having a high glass transition temperature in a skin layer of the microencapsulated pigment and a PHA having a low glass transition temperature in an inner layer thereof.

For example, when the coated structure must be formed with a PHA having low affinity for a pigment, a base material is first coated with a PHA having high affinity for the base material, and the monomer unit composition of the PHA having high affinity for the pigment can be changed to a monomer unit composition of the intended PHA in a direction from the inside toward the outside to form, for example, a multi-layer structure or gradient structure, whereby a PHA film firmly bonded to the pigment can be formed.

A graft chain is introduced into the PHA of the skin layer of the microencapsulated pigment, whereby a microencapsulated pigment having properties attributable to the graft chain can be provided. The PHA of the skin layer of the microencapsulated pigment is crosslinked, whereby a microencapsulated pigment having excellent mechanical strength can be provided.

PHAs synthesized by the PHA synthases used in the structures according to the present invention are generally isotactic polymers composed of R-configuration alone.

A 3-hydroxyacyl CoA, which is a substrate for synthesis of a PHA, can be synthesized for use in accordance with a process suitably selected from among, for example, an in vitro synthesis process using an enzyme, an in vivo synthesis process using an organism such as a microorganism or plant, a chemical synthesis process, etc. In particular, the synthesis process using the enzyme is a generally used process in the synthesis of the substrate, and there are known processes using the following reaction making use of a commercially available acyl CoA synthase (Acyl CoA ligase, E.C.6.2.1.3) (Eur. J. Biochem., 250, 432-439 (1997); Appl. Microbiol. Biotechnol., 54, 37-43 (2000), etc.).

### Acyl CoA synthase 3-Hydroxyalkanoic acid + CoA → 3-Hydroxyacyl CoA

In synthetic processes using an enzyme or organism, a batch type synthesis process may also be used, or an immobilized enzyme or immobilized cell may be used to perform continuous production.

### <PHA synthase and productive bacteria>

As a PHA synthase used in the present invention, may be used that produced by a microorganism suitably selected from microorganisms that produces such an enzyme, or by a transformant obtained by introducing a PHA synthase gene of such a microorganism into a host microorganism.

As the microorganisms producing the PHA synthases, may be used PHB- or PHB/V-producing bacteria. As such bacteria, may be used *Aeromonas sp*., *Alcaligenes sp*., *Chromatium sp., Comamonas sp., Methylobacterium sp., Paracoccus sp.* and *Pseudomonas sp.,* and besides *Burkholderia cepacia* KK01 strain, *Ralstonia eutropha* TB64 strain, *Alcaligenes sp.* TL2 strain which have been isolated by the present inventors. Incidentally, the KK01 strain, TB64 strain and TL2 strain are deposited as Accession Nos. FERM BP-4235, FERM BP-6933 and FERM BP-6913, respectively, in Patent Microorganism Deposit Center, Institute of Bioscience and Human-Technology, Ministry of Economy and Industry.

As the microorganisms producing the PHA synthases, may be used mcl-PHA- or unusual-PHA-producing bacteria. As such bacteria, may be used *Pseudomonas aureovorans, Pseudomonas resinovorans, Pseudomonas* 61-3 strain, *Pseudomonas putida* KT2442 strain and *Pseudomonas aeruginosa,* and besides microorganisms of *Pseudomonas sp.* such as *Pseudomonas putida* P91 strain, *Pseudomonas cichorii* H45 strain, *Pseudomonas cichorii* YN2 strain and *Pseudomonas jessenii* P161 strain which have been isolated by the present inventors, and microorganisms of *Burkholderia sp.* such as *Burkholderia sp.* OK3 strain (FERM P-17370) described in Japanese Patent Application Laid-Open No. 2001-78753, *Burkholderia sp.* OK4 strain (FERM P-17371) described in Japanese Patent Application Laid-Open No. 2001-69968. In addition to these microorganisms, microorganism belonging to *Aeromonas sp., Comamonas sp*., etc. and producing mcl-PHA and unusual-PHA may also be used.

Incidentally, the P91 strain, H45 strain, YN2 strain and P161 strain are internationally deposited as Accession Nos. FERM BP-7373, FERM BP-7374, FERM BP-7375 and FERM BP-7376, respectively, in Patent Microorganism Deposit Center, Institute of Bioscience and Human-Technology, Synthetic Institute of Industrial Technology (formerly, Agency of Industrial Science and Technology, Ministry of Trade and Industry), Ministry of Economy and Industry on the basis of Budapest Treaty on the International Recognition of the Deposit of Microorganisms for the Purposes of Patent Procedure.

In ordinary culture of microorganisms used in the production of the PHA synthases according to the present invention, for example, preparation of stock strains, growth for ensuring the number of bacteria and activated state necessary for the production of the PHA synthases, etc., a medium containing components necessary for the growth of microorganism used is suitably selected for use. Any kinds of media, for example, general complex media (nutrient broth, yeast extract, etc.), synthetic media to which nutrient has been added, etc. may be used so far as they do not adversely affect the growth and survival of the microorganisms.

As the culture, any methods such as liquid culture and solid culture may be used so far as they are methods for growing the microorganisms. The culture may be conducted irrespective of the kind of the culture, such as batch culture, fed-batch culture, semi-continuous culture or continuous culture. The forms of liquid batch culture include a method of conducting shaking by a shaking flask to feed oxygen and an oxygen feeding method of a stirred aeration system by means of a jar fermenter. A multi-stage system that a plurality of these steps are connected may be adopted.

When such a PHA-producing microorganism as described above is used to produce a PHA synthase, there is used, for example, a process in which the microorganism is grown in an inorganic medium containing an alkanoic acid such as octanoic acid or nonanoic acid, microorganisms from a logarithmic growth phase to an initial stage of a stationary phase are collected by centrifugation or the like, and a desired enzyme is extracted. When the culture is performed under such conditions as described above, a mcl-PHA derived from the alkanoic acid added is synthesized within the microorganisms. In this case, the PHA synthase is said to be present in the form bonded to fine particles of the PHA formed within the microorganisms. However, an investigation by the present inventors have revealed that enzymatic activity is present to a considerable extent even in a supernatant obtained by centrifuging a fracture liquid of the microorganisms cultured by the above-described method. This is considered to be attributable to the fact that since the enzyme is actively produced in the microorganisms in such a comparatively initial stage of the culture from the logarithmic growth phase to the initial stage of the stationary phase as described above, free PHA synthases are also present to a considerable extent.

The inorganic medium used in the above-described culture process may be any medium so far as it contains components capable of growing microorganisms, such as phosphorus source (for example, phosphate) and nitrogen source (for example, ammonium salt or nitrate). As examples of an inorganic salt medium, may be mentioned an MSB medium, an E medium (j. Biol. Chem., 218, 97-106 (1956)) and an M9 medium. The composition of the M9 medium used in the present invention is as follows.
Na₂HPO₄: 6.2 g
KH₂PO₄: 3.0 g
NaCl: 0.5 g
NH₄Cl: 1.0 g
(in 1 liter of the medium; pH 7.0).

In order to conduct good growth and production of the PHA synthase, it is preferable that the following solution of trace components be added in an amount of about 0.3 % (v/v) to the inorganic salt medium.

### (Trace component solution)

Nitrilotriacetic acid: 1.5 g
MgSO₄: 3.0 g
MnSO₄: 0.5 g
NaCl: 1.0 g
FeSO₄: 0.1 g
CaCl₂: 0.1 g
CoCl₂: 0.1 g
ZnSO₄: 0.1 g
CuSO₄: 0.1 g
AlK(SO₄)₂: 0.1 g
H₃BO₃: 0.1 g
Na₂MoO₄: 0.1 g
NiCl₂: 0.1 g
(in 1 liter of the medium).

The temperature of the culture may be any temperature so far as the above strain can be well grown. For example, 14 to 40°C, preferably 20 to 35°C is suitable.

A transformant obtained by introducing a PHA. synthase gene owned by the PHA-producing bacterium may be used to produce a desired PHA synthase. Cloning of the PHA synthase gene, preparation of a manifestation vector and preparation of the transformant can be performed in accordance with the methods known per se in the art. In a transformant obtained by using a bacterium such as *Escherichia coli* as a host, examples of a medium used in the culture include complex media and synthetic media, for example, LB and M9 media. The culture is aerobically performed at a temperature within a range of from 25 to 37°C for 8 to 27 hours, thereby growing the microorganisms. Thereafter, the bacteria can be collected to recover the PHA synthase accumulated in the bacteria. An antibiotic such as kanamycin, ampicillin, tetracycline, chloramphenicol or streptomycin may be added to the medium as needed. When an inducible promoter is used in the manifestation vector, an inducer corresponding to the promoter may be added to the medium upon the culture of the transformant to facilitate manifestation. Examples of the inducer include isopropyl-β-D-thiogalactopyranoside (IPTG), tetracycline and indol acrylic acid (IAA).

As the PHA synthase, a crude enzyme such as a fracture liquid of the microorganisms, an ammonium sulfate-salted out substance obtained by precipitating a protein component with ammonium sulfate or the like and collecting it may also be used. Alternatively, a purified enzyme purified by any of various methods may be used. Stabilizers and activators such as metal salts, glycerol, dithiothreitol, EDTA and bovine serum albumin (BAS) may be suitably added to the enzyme as needed.

Any methods may be used for isolation and purification of the PHA synthase so far as the enzymatic activity of the PHA synthase is retained. For example, a crude enzyme solution obtained by rupturing the resultant microbial strain by means of a French press, ultrasonic breaker, lysozyme or any of various kinds of surfactants and centrifuging it, or an ammonium sulfate-salted out substance prepared therefrom is treated by a means such as affinity chromatography, cation- or anion-exchange chromatography or gel filtration or a suitable combination thereof, whereby a purified enzyme can be obtained. In particular, a recombinant protein can be more simply purified by its manifestation in the form of a fused protein with a "tag" such as a histidine residue bonded to an N terminal or C terminal and bonding it to an affinity resin through this tag. In order to isolating the intended protein from the fused protein, it is better to use a method such as scission with a protease such as thrombin or blood coagulation factor Xa, lowering of pH, or addition of a high-concentration imidazole as a bonding competitor. Alternatively, when the tag contains an intein like the case where pTYB1 (product of New England Biolab Co.) is used as a manifestation vector, scission is performed under reducing conditions with dithiothreitol. As fused proteins which permits the purification by affinity chromatography, glutathione-S-transferase (GST), chitin-bonded domain (CBD), maltose-bonded protein (MBP) and thioredoxin (TRX) are also publicly known in addition to the histidine tag. The GST fused protein can be purified with a GST affinity resin.

Activity measurement of the PHA synthase can be performed by using the already known various methods. For example, the measurement can be performed in accordance with the following process using a measurement principle that CoA released in the course of a process in which a 3-hydroxyacyl CoA is polymerized into a PHA by the catalytic action of the PHA synthase is colored with 5,5"-dithiobis (2-nitrobenzoic acid) to conduct measurement. Reagent 1: Dissolving bovine serum albumin (product of Sigma Co.) at a concentration of 3.0 mg/ml in 0.1 M Tris hydrochloride buffer (pH: 8.0); Reagent 2: Dissolving 3-hydroxyoctanoyl CoA at a concentration of 3.0 mM in 0.1 M Tris hydrochloride buffer (pH: 8.0); Reagent 3: Dissolving trichloroacetic acid at a concentration of 10 mg/ml in 0.1 M Tris hydrochloride buffer (pH: 8.0); Reagent 4: Dissolving 5,5"-dithiobis (2-nitrobenzoic acid) at a concentration of 2.0 mM in 0.1 M Tris hydrochloride buffer (pH: 8.0). First reaction (PHA synthesis reaction): Reagent 1 (100 µl) is added to a sample (enzyme) solution (100 µl), they are mixed, and the mixture was preincubated at 30°C for 1 minute. After Reagent 2 (100 µl) was added to the mixture and mixed, and the resultant mixture was incubated at 30°C for 1 to 30 minutes, Reagent 3 was added to terminate the reaction. Second reaction (Coloring reaction of free CoA): The first reaction mixture the reaction of which has been terminated is centrifuged (15,000 × g, 10 minutes), and Reagent 4 (500 µl) is added to the resultant supernatant (500 µl). After the mixture was incubated at 30°C for 10 minutes, its absorbancy is measured at 412 nm. Calculation of enzymatic activity: An amount of the enzyme that releases 1 µmol of CoA per 1 minute is regarded as 1 unit (U).

### <Preparation process of coloring composition>

As an example of a preparation process of a coloring composition using the microencapsulated pigment according to the present invention, may be mentioned a process comprising the steps of (1) dispersing a pigment in an aqueous medium, (2) immobilizing a polyhydroxyalkanoate synthase on the pigment dispersed in the aqueous medium, (3) adding a 3-hydroxyacyl CoA as a substrate, (4) performing a PHA synthesis reaction and (5) processing the resultant microencapsulated pigment into a coloring composition.

The step of dispersing the pigment in the aqueous medium is conducted by adding one or more pigments selected to the aqueous medium to perform a dispersing treatment and then classifying the dispersed pigment particles to particle diameters within the desired range if necessary.

The pigments used in the present invention may be either organic or inorganic. However, they are desirably excellent in heat fastness and light fastness. As examples of organic pigments, may be mentioned pigments of the azo, phthalocyanine, benzoimidazolone, quinacridone, isoindolinone, pyranthrone, dibromoanthanthrone, indanthrone, anthrapyrimidine, flavanthrone, perylene, perinone, quinophtharone, phtharone, thioindigo, indigo, dioxazine, anthraquinone, xanthene, methine and azomethine types, and other fused polycyclic pigments including metal complex types. As examples of inorganic pigments, may be mentioned Milori blue, iron oxide, cobalt violet, manganese violet, ultramarine blue, cobalt blue, Cerulean blue, viridian, emerald green and cobalt green. One or more pigments may be suitably selected for use from these pigments. The above-mentioned pigments may also be used after subjected to publicly known various surface treatments. Examples of the surface treatments include treatments with surfactants, coupling treatments and treatments with pigment derivatives.

The dispersing treatment can be performed by means of a homomixer, horizontal minimill, ball mill, roll mill, sand grinder, attritor, ultrasonic treatment and/or the like. The treatment may also be conducted by a method in which the mixture is passed through a number of nozzles under a liquid pressure of at least 1,000 psi (about 70.3 kg/cm²) in a liquid jet interacting chamber.

The particle diameter of the dispersed pigment is at least 0.7 µm or smaller, preferably 0.01 to 0.4 µm from the viewpoints of light transmission property and evenness of film surface, and the particles are desirably monodispersed. When the particle diameter of the pigment dispersed does not fall within the desired range, the particle diameter can be controlled by conducting classification by filtration, precipitation or the like.

The particle diameter of the dispersed pigment can be measured by the already known method such as absorptometery, static light scattering method, dynamic light scattering method or centrifugal sedimentation method. For example, a particle diameter measuring device such as Coulter Counter Multisizer may be used.

The composition of the aqueous medium for the synthesis reaction in this step may be any one so far as it can disperse in the desired state and does not interfere with the subsequent steps, i.e., the step of immobilizing the enzyme on the pigment and the step of performing the PHA synthesis reaction. However, the composition of the aqueous medium in this step may also be made a composition capable of causing the activity of the PHA synthase. As the composition capable of causing the activity of the PHA synthase, may be used, for example, a buffer. As the buffer, may be suitably used a general buffer used in biochemical reactions, for example, acetate buffer, phosphate buffer, potassium phosphate buffer, 3-(N-morpholino)propane-sulfonate (MOPS) buffer, N-tris(hydroxymethyl)methyl-3-aminopropanesulfonate (TAPS) buffer, Tris hydrochloride buffer, glycine buffer or 2-(cyclohexylamino)ethane-sulfonate (CHES) buffer. The concentration of the buffer capable of causing the activity of the PHA synthase may be used at an ordinary concentration, i.e., a concentration ranging from 5 mM to 1.0 M, preferably from 10 to 200 mM. The pH is adjusted so as to be 5.5 to 9.0, preferably 7.0 to 8.5. However, the conditions may be set outside the above range according to the optimum pH and pH stability of the PHA synthase used.

In order to retain the dispersed state of the pigment in the aqueous medium, a proper surfactant may be added so far as it is the kind and concentration not inhibiting the subsequent steps, and besides the kind and concentration not inhibiting the object of the coloring composition according to the present invention. As examples of such a surfactant, may be mentioned anionic surfactants such as sodium oleate, sodium dodecylsulfonate, sodium dodecylsulfate, sodium dodecyl-N-sarcosinate, sodium cholate, sodium deoxycholate and sodium taurodeoxycholate; cationic surfactants such as cetyltrimethylammonium bromide and dodecylpyridinium chloride; amphoteric surfactants such as 3-((cholamidopropyl)dimethylammonio)-1-propanesulfonic acid (CHAPS), 3-((3-cholamidopropyl)-dimethylammonio)-2-hydroxy-1-propanesulfonic acid (CHAPSO), palmitoylresorcin, dodecyl-β-alanine; and nonionic surfactants such as octyl glucoside, octyl thioglucoside, heptyl thioglucoside, decanoyl-N-methyl glucamide (MEGA-10), polyoxyethylene dodecyl ether (Brij, Lubrol), polyoxyethylene isooctyl phenyl ether (Triton X), polyoxyethylene nonyl phenyl ether (Nonidet P-40, Triton N), polyoxyethylene fatty acid esters (Span) and polyoxyethylene sorbitol esters (Tween).

In order to retain the dispersed state of the pigment in the aqueous medium, a proper co-solvent may be added so far as it is the kind and concentration not inhibiting the subsequent steps, and besides the kind and concentration not inhibiting the object of the coloring composition according to the present invention. As the co-solvent, one or more selected from linear hydrocarbons such as hexane; monohydric alcohols such as methanol and ethanol; polyhydric alcohols such as glycerol; and derivatives such as fatty acid ethers and carboxylic esters may be used.

The step of immobilizing the PHA synthase can be performed by adding the PHA synthase to the pigment dispersion prepared above to subject it to an immobilizing treatment. The immobilizing treatment may be optionally selected from the enzyme immobilizing methods usually performed so far as it can retain the activity of the enzyme and be applied to the desired pigment. Examples thereof include covalent bonding method, ionic adsorption method, hydrophobic adsorption method, physical adsorption method, affinity adsorption method, crosslinking method and lattice-type entrapping method. In particular, immobilizing methods utilizing ionic adsorption or hydrophobic adsorption are convenient.

Enzyme proteins such as PHA synthases are polypeptides to which a large number of amino acids are bonded, exhibit a nature as an ionic adsorbent owing to amino acids having a free ionic group, such as lysine, histidine, arginine, asparagic acid and glutamic acid and/or have a nature as an hydrophobic adsorbent owing to amino acids having a free hydrophobic group, such as alanine, valine, leucine, isoleucine, methionine, tryptophan, phenylalanine and proline or in that they are organic polymers. Accordingly, they can be caused to be adsorbed on pigments having ionicity, hydrophobicity or both ionicity and hydrophobicity.

In the method of immobilizing the PHA synthase mainly by the ionic adsorption method, it is only necessary to use a pigment developing an ionic functional group on its surface, and there can be used, for example, an inorganic pigment comprising a clay mineral or metal oxide as a main component.

In the method of immobilizing the PHA synthase mainly by the hydrophobic adsorption method, it is only necessary to use a pigment the surface of which is nonpolar, and there can be used, for example, an organic pigment such as an azo pigment having a plurality of aromatic rings, or a fused polycyclic phthalocyanine pigment or anthraquinone pigment, or an inorganic pigment composed of carbon crystals, such as carbon black.

The immobilization of the PHA synthase on the pigment by the ionic adsorption method or hydrophobic adsorption method is achieved by mixing the pigment and the PHA synthase in a prescribed aqueous medium so as to give a predetermined concentration. At this time, it is desirable to moderately shake or stir a reaction vessel in such a manner that the enzyme is uniformly adsorbed on the surface of the pigment.

Since the polarity and quantity of surface charge and the hydrophobicity of the pigment and PHA synthase are changed by the pH and salt concentration of the aqueous medium in which the pigment and enzyme are mixed in the above immobilizing treatment, the composition of the aqueous medium is desirably adjusted in view of this matter. In the case of a pigment mainly having ionic adsorptivity, the quantity of charge contributing to the adsorption between the pigment and the PHA synthase can be increased by lowering the salt concentration. Opposite charges of both can be increased by changing the pH. In the case of a pigment mainly having hydrophobic adsorptivity, the hydrophobicity of both can be increased by raising the salt concentration. A composition suitable for the adsorption may also be preset by measuring electrophoresis, angle of wetting, or the like in advance to determine the charged states of the pigment and PHA synthase. Further, the composition may also be determined by directly measuring an adsorption between the pigment and the PHA synthase. The measurement of the adsorption may be conducted by, for example, a method in which a solution of the PHA synthase, the concentration of which has been already known, is added to a dispersion of the pigment, an adsorbing treatment is conducted, and an amount of the enzyme adsorbed is then determined by subtraction.

In the case of a pigment hard to immobilize the enzyme by the ionic adsorption method or hydrophobic adsorption method, the immobilization by the covalent bonding method may also be used by performing a treatment taking the complication of the operation and the possibility of deactivating the enzyme into consideration as needed. Examples of such a process include a process in which a pigment having an aromatic amino group is diazotized, and the enzyme is bonded to this pigment by diazo coupling, a process of forming a peptide bond between a pigment having a carboxyl group and an amino group and the enzyme, a process of conducting alkylation between a pigment having a halogeno group and an amino group or the like of the enzyme, a process of crosslinking between an amino group of the solid particles and an amino group of the enzyme, a process of reacting a pigment having a carboxyl group and an amino group with the enzyme in the presence of a compound having an aldehyde group or ketone group and an isocyanide compound, and a process of conducting an exchange reaction between a pigment having a disulfide group and a thiol group of the enzyme.

The enzyme may be immobilized on a pigment, into which a ligand has been introduced, by the affinity adsorption. As the ligand in this case, any ligand may be selected so far as it permits the affinity adsorption while retaining the enzymatic activity of the PHA synthase. The enzyme may also be immobilized by bonding another biopolymer such as a protein to the PHA synthase and subjecting the bonded biopolymer to affinity adsorption. The bonding between the PHA synthase and the biopolymer may be performed either by gene recombination or the like or chemically. For example, as will be described subsequently in Examples, glutathione-S-transferase is fused with the PHA synthase by transformation, and the fused protein is bonded to Sepharose, into which glutathione as a ligand for the glutathione-S-transferase has been introduced, by affinity adsorption, whereby the enzyme can be immobilized.

A polyhydroxyalkanoate synthase can also be immobilized on the surface of a pigment by fusing a peptide containing an amino acid sequence having the bonding ability to the pigment with the polyhydroxyalkanoate synthase to manifest it on the basis of the bonding property between a peptide moiety of the amino acid sequence having the bonding ability to the pigment and the pigment.

The amino acid sequence having the bonding ability to the pigment can be determined by, for example, screening of a random peptide library. In particular, a phage display peptide library prepared by linking a random synthetic gene to, for example, an N-terminal side gene of a surface protein (for example, gene III protein) of an M13 phage may be preferably used. In this case, however, the determination of the amino acid sequence having the bonding ability to the pigment is conducted by the following procedures. Namely, the phage display peptide library is added to and contacted with the pigment, and a bonded phage and unbonded phage are then separated from each other. The pigment-bonded phage is dissolved out with an acid or the like, neutralized with a buffer and then infected with *Escherichia coli* to amplify the phage. This sorting is repeated several times, thereby concentrating a plurality of clones having the bonding ability to the intended pigment. In order to obtain a monoclone, colonies are prepared on a medium plate in a state infected with *Escherichia coli* again. After the respective monocolonies are cultured in a liquid medium, a phage present in a supernatant of the medium is purified by precipitation, and a base sequence thereof is analyzed, whereby the structure of the peptide can be known.

The amino acid sequence of the peptide having the bonding ability to the pigment obtained by the above-described process is utilized by fusing it with the polyhydroxyalkanoate synthase using ordinary gene engineering techniques. The peptide having the bonding ability to the pigment can be manifested by linking it to the N-terminal or C-terminal of the polyhydroxyalkanoate synthase. It can also be manifested by inserting a proper spacer sequence. As the spacer sequence, are preferred about 3 to about 400 amino acids, and the spacer sequence may also include any amino acids. Most preferably, the spacer sequence does not interfere with the functioning of the PHA synthase and with the bonding of the PHA synthase to the pigment.

The pigment prepared by the above-described process, on which the enzyme has been immobilized, may be used as it is, and may also be used after subjecting to lyophilization or the like.

When an amount of the PHA synthase that the amount of the CoA released in the reaction, by which the PHA is synthesized by the polymerization of the 3-hydroxyacyl CoA, is 1 µmol per minute is regarded as 1 unit (U), the amount of the enzyme immobilized on the pigment is preferably set within a range of from 10 units (U) to 1,000 units (U), desirably from 50 units (U) to 500 units (U) per gram of the pigment.

The time required for the immobilizing treatment of the enzyme is desirably 1 minute to 24 hours, more desirably 10 minutes to 1 hour. Excess leaving at rest or standing is not preferred because aggregation of the pigment and lowering of the enzyme are incurred.

The enzyme may be immobilized on the pigment by omitting last step of dispersing the pigment and directly adding the pigment before dispersing in the aqueous medium to the enzyme solution to conduct dispersion in the enzyme solution. In this case, the dispersion of the pigment in the aqueous medium is facilitated by virtue of electric repulsion and steric hindrance by the ionic functional group owned by the enzyme immobilized on the pigment, thereby making the addition of a surfactant to the aqueous medium unnecessary or reducing the amount thereof.

The step of adding the 3-hydroxyacyl CoA as a substrate is achieved by adding a stock solution of the 3-hydroxyacyl CoA separately provided to the aqueous dispersion of the enzyme-immobilized pigment obtained in last step so as to achieve the intended concentration. The 3-hydroxyacyl CoA as a substrate is added at the final concentration of generally 0.1 mM to 1.0 M, desirably 0.2 mM to 0.2 M, more desirably 0.2 mM to 1.0 mM.

In the above step, the compositions such as the kind and concentration of the 3-hydroxyacyl CoA as a substrate in the aqueous reaction mixture are changed with time, whereby the monomer unit composition of the PHA covering the pigment can be changed in a direction from the inside of the pigment toward the outside.

As a form of the pigment changed in the monomer unit composition of the PHA, may be mentioned, for example, a form that the pigment is covered with a layer of the PHA, in which a compositional change in the PHA film is continuous and a compositional gradient is formed in a direction from the inside of the microencapsulated pigment toward the outside. It may be prepared in accordance with, for example, a process in which a 3-hydroxyacyl CoA having a different composition is added into a reaction mixture while synthesizing the PHA.

As another form, may be mentioned a form that the pigment is covered in the form of a multilayer with PHAs different in composition, in which a compositional change in the PHA film is stepwise. It may be prepared in accordance with, for example, a process in which a PHA is synthesized in a certain 3-hydroxyacyl CoA composition, a pigment during preparation is then recovered once from the reaction mixture by centrifugation or the like, a reaction mixture different in 3-hydroxyacyl CoA composition from the first reaction mixture is added to this pigment again.

The step of performing the PHA synthesis reaction is performed by adjusting the composition of a reaction solution so as to give a composition capable of causing the activity of the PHA synthase when the composition is not adjusted up to last step in order to provide a microencapsulated pigment of a desired form according to a PHA to be synthesized, and controlling the reaction temperature and time.

The concentration of a buffer in the reaction solution capable of causing the activity of the PHA synthase may be an ordinary concentration, i.e., a concentration ranging from 5 mM to 1.0 M, preferably from 10 to 200 mM. The pH is adjusted so as to be 5.5 to 9.0, preferably 7.0 to 8.5. However, the conditions may be set outside the above range according to the optimum pH and pH stability of the PHA synthase used.

The reaction temperature is suitably set according to the properties of the PHA synthase used, but it is generally set to 4 to 50°C, preferably 20 to 40°C. However, the conditions may be set outside the above range according to the optimum temperature and heat resistance of the PHA synthase used.

The reaction time is suitably selected and set from a range of generally from 1 minute to 24 hours, preferably from 30 minutes to 3 hours though it varies according to the stability and the like of the PHA synthase used.

Although the microencapsulated pigment is obtained by this step, the monomer unit structure of the PHA forming the microcapsule thereof can be determined by using a compositional analysis by gas chromatography or the like, or a time of flight secondary ion mass spectrometer (TOF-SIMS) and ion sputtering technique after extracting the PHA from the microencapsulated pigment with chloroform.

No particular limitation is imposed on the molecular weight of the PHA. However, the number average molecular weight thereof is desirably within a range of from 1,000 to 10,000,000, more preferably from 10,000 to 10,000,000 in order to retain the strength of the microencapsulated pigment and the resulting colored layer and to develop the glass transition temperature which will be described subsequently. The molecular weight of the PHA may be determined by GPC (gel permeation chromatography) after extracting the PHA from the microencapsulated pigment with chloroform.

Since the PHA can be directly applied to cover the pigment in the preparation process of the microencapsulated pigment according to the present invention, the density of the pigment in the microencapsulated pigment can be raised. In order to improve the dispersibility and mechanical strength of the microencapsulated pigment on the other hand, however, it is required to increase the covering amount of the PHA. As a result, the covering amount of the PHA is determined to be within a range of from 1 to 30% by mass, preferably from 1 to 20% by mass, more preferably from 1 to 15% by mass in terms of a compositional ratio by mass to the pigment.

The particle diameter of the microencapsulated pigment obtained through the above-described steps is generally 1 µm or smaller, preferably 0.7 µm or smaller, more preferably 0.01 to 0.4 µm. The particle diameter of the microencapsulated pigment can be measured by the already known method such as absorptometery, static light scattering method, dynamic light scattering method or centrifugal sedimentation method. For example, a particle diameter measuring device such as Coulter Counter Multisizer may be used.

The microencapsulated pigment obtained by this step may be subjected to various secondary processing or treatments such as chemical modification before use.

For example, chemical modification is applied to the PHA in the skin layer of the pigment, whereby a microencapsulated pigment having more useful functions and properties can be provided. For example, a graft chain is introduced, whereby a microencapsulated pigment having various properties attributable to the graft chain can be provided. For example, polysiloxane, which will be described subsequently, is introduced as the graft chain, whereby a microencapsulated pigment improved in mechanical strength, dispersibility, weather resistance, water repellency (resistance), heat resistance, etc. can be provided. The PHA in the skin layer of the microencapsulated pigment is crosslinked, whereby the mechanical strength, chemical resistance, heat resistance, etc. of such a microencapsulated pigment can be improved.

No particular limitation is imposed on the method of the chemical modification so far as it is a method that satisfies the object of achieving the desired functions and structure. As a proper method, may be used, for example, a method in which a PHA having a reactive functional group at its side chain is synthesized, and a chemical reaction of the functional group is utilized to conduct chemical modification.

No particular limitation is imposed on the kind of the reactive functional group so far as it satisfies the object of achieving the desired functions and structure. For example, an epoxy group may be mentioned. A PHA having an epoxy group at its side chain can be subjected to chemical conversion like ordinary polymers having an epoxy group. More specifically, for example, it can be converted to a hydroxyl group, or a sulfone group can be introduced. In addition, a compound having a thiol or amine may also be added. For example, a compound having a reactive functional group at its terminal, specifically a compound having an amino group high in reactivity to the epoxy group at the terminal is added and reacted, whereby a graft chain of the polymer is formed.

As examples of the compound having an amino group at the terminal, may be mentioned polyvinylamine, polyethylene-imine and amino-modified polymers such as amino-modified polysiloxane (amino-modified silicone oil). Of these, as the amino-modified polysiloxane, may be used commercially available silicone oil. Further, it may be synthesized for use in accordance with the process described in J. Amer. Chem. Soc., 78, 2278 (1956). The addition of the graft chain of the polymer is expected to bring about effects such as improvements in mechanical strength, dispersibility, weather resistance, water repellency (resistance), heat resistance, etc.

As another example of the chemical conversion of the polymer having the epoxy group, may be mentioned a crosslinking reaction by using a diamine compound such as hexamethylene diamine, succinic anhydride, 2-ethyl-4-methylimidazole, or the like, and as an example of physicochemical conversion, may be mentioned a crosslinking reaction by electron beam irradiation. Of these, a reaction of a PHA having an epoxy group at its side chain with hexamethylene diamine is caused to progress in such a form as shown in the following scheme to form a crosslinked polymer.

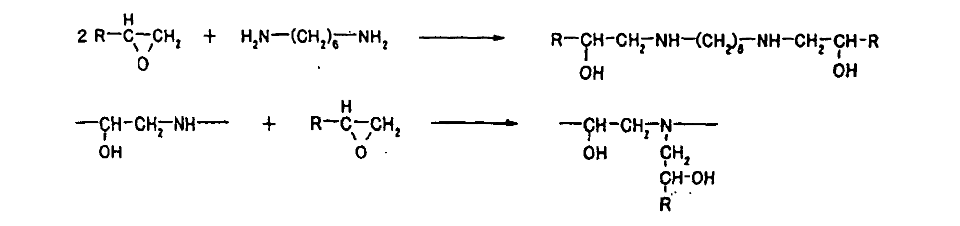

Since the microencapsulated pigment according to the present invention has a feature that the pigment density is high, and it is fine as described above, the use of a coloring composition containing the microencapsulated pigment permits forming images good in transparency and coloring property and excellent in contrast.

The step of processing the microencapsulated pigment into a coloring composition is performed by adding the microencapsulated pigment obtained in last step to an aqueous medium or oily medium, further adding a photosensitive resin, photopolymerizable monomer, photo-induced polymerization initiator, thermosetting resin, thermoplastic resin, polymeric compound, etc. according to various production processes of a color filter and mixing such components.

This step can be distinguished by a case where the coloring composition is hydrophilic and a case where it is lipophilic.

In the case of the hydrophilic coloring composition, the microencapsulated pigment may be used as it is dispersed in the reaction mixture in last step. Alternatively, as described below, it may be used by recovering it from the reaction mixture, washing it in some cases, and then dispersing it in an aqueous medium of the intended coloring composition. For example, the microencapsulated pigment is recovered from the reaction mixture by the publicly known method such as suction filtration, pressure filtration or centrifugation, and dispersed in water or an aqueous solution, and this process is properly repeated.

In the present invention, the microencapsulated pigment can be self-dispersed in an aqueous medium by selecting a hydrophilic PHA as the PHA making up the microcapsules, and the addition of a surfactant to the aqueous medium is unnecessary, or the amount of the surfactant added can be reduced. In order to aid the dispersion of the microencapsulated pigment in the aqueous medium, however, surfactants, protective colloid, water-soluble organic solvents, etc. may be added so far as they are the kinds and concentrations not inhibiting the objects of the resulting coloring composition when a not-hydrophilic PHA is used as the PHA making up the microcapsules or even when a hydrophilic PHA is used as the PHA making up the microcapsules. Preservatives, viscosity modifiers, pH adjustors, chelating agents, etc. may also be added.

As the aqueous medium, may be used water or a mixture of water and a water-soluble organic solvent. A content of water in the coloring composition can be controlled to, for example, 20 to 95% by mass.

Surfactants which may be added to the hydrophilic coloring composition may be any of anionic, cationic, amphoteric and nonionic.

Examples of anionic surfactant include fatty acid salts such as sodium stearate, potassium oleate and semi-hardened sodium beef tallow fatty acid; alkylsulfate salts such as sodium dodecylsulfate, tri(2-hydroxyethyl)ammonium dodecylsulfate and sodium octadecylsulfate; benzenesulfonates such as sodium nonylbenzenesulfonate, sodium dodecylbenzenesulfonate, sodium octadecylbenzene-sulfonate and sodium dodecyl diphenyl ether disulfonate; naphthalenesulfonates such as sodium dodecylnaphthalene-sulfonate and naphthalenesulfonic acid-formalin condensates; sulfosuccinate salts such as sodium didodecyl sulfosuccinate and sodium dioctadecyl sulfosuccinate; polyoxyethylene sulfate salts such as sodium polyoxyethylene dodecyl ether sulfate, tri(2-hydroxyethyl)ammonium polyoxyethylene dodecyl ether sulfate, sodium polyoxyethylene octadecyl ether sulfate, sodium polyoxyethylene dodecyl phenyl ether sulfate; and phosphate salts such as potassium dodecylphosphate and sodium octadecylphosphate.

Examples of cationic surfactants include alkylamine salts such as ammonium octadecylacetate and coconut amine acetate; and quaternary ammonium salts such as dodecyltrimethylammonium chloride, octadecyl-trimethylammonium chloride, dioctadecyldimethylammonium chloride and dodecylbenzyldimethylammonium chloride. Examples of amphoteric surfactants include alkylbetaines such as dodecylbetaine and octadecylbetaine; and amine oxides such as dodecyldimethylamine oxide.

Examples of nonionic surfactants include polyoxyethylene alkyl ethers such as polyoxyethylene dodecyl ether, polyoxyethylene hexadecyl ether, polyoxyethylene octadecyl ether and polyoxyethylene (9-octadecenyl) ether; polyoxyethylene phenyl ethers such as polyoxyethylene octyl phenyl ether and polyoxyethylene nonyl phenyl ether; oxirane polymers such as polyethylene oxide and copoly(ethylene oxide-propylene oxide); sorbitan fatty acid esters such as sorbitan dodecanoate, sorbitan hexadecanoate, sorbitan octadecanoate, sorbitan 9-octadecenate, sorbitan tri-9-octadecenate, polyoxyethylene sorbitan dodecanoate, polyoxyethylene sorbitan hexadecanoate, polyoxyethylene sorbitan octadecanoate, polyoxyethylene sorbitan trioctadecanoate, polyoxyethylene sorbitan 9-octadecenate and polyoxyethylene sorbitan tri-9-octadecenate; sorbitol fatty acid esters such as polyoxyethylene sorbitol tetra-9-octadecenate; and glycerol fatty acid esters such as glyceryl octadecanoate and glyceryl 9-octadecenate. Among these nonionic surfactants, those having an HLB of 14 or higher are particularly preferred. These surfactants may be used either singly or in any combination thereof. No particular limitation is imposed on the amount used. However, it is desirably as little as possible, for example, at most 10% by mass based on the microencapsulated pigment.

Specific examples of protective colloid which may be added to the hydrophilic coloring composition include natural proteins such as glue, gelatin, casein, albumin, gum arabic and fish glue; and synthetic polymers such as alginic acid, methyl cellulose, carboxymethyl cellulose, polyethylene oxide, hydroxyethyl cellulose, polyvinyl alcohol, polyacrylamide, aromatic amides, polyacrylic acid, polyvinyl ether, polyvinyl pyrrolidone, acrylics and polyester. The protective colloids are used either singly or in combination of two or more thereof as needed for the purpose of adjusting fixing ability and viscosity and enhancing quick drying property. Its content in the hydrophilic coloring composition is preferably 30% by mass or lower, particularly preferably 20% by mass or lower.

Specific examples of water-soluble organic solvents which may be added to the hydrophilic coloring composition include alcohols such as methyl alcohol, ethyl alcohol, n-butyl alcohol, isobutyl alcohol, tert-butyl alcohol, n-propyl alcohol and isopropyl alcohol; amides such as dimethylformamide and dimethylacetamide; ketones such as acetone and methyl ethyl ketone; ethers such as tetrahydrofuran, dioxane, ethylene glycol methyl ether, ethylene glycol ethyl ether, diethylene glycol methyl ether, diethylene glycol ethyl ether, triethylene glycol monomethyl ether and triethylene glycol monoethyl ether; polyhydric alcohols such as ethylene glycol, propylene glycol, butylene glycol, triethylene glycol, 1,2,6-hexanetriol, thiodiglycol, diethylene glycol, polyethylene glycol, polypropylene glycol and glycerol; N-methyl-pyrrolidone; and 1,3-dimethyl-2-imidazolidinone. These solvents may be used either singly or in any combination thereof. The content of the water-soluble organic solvents is preferably 95% by mass or lower, particularly preferably 80% by mass or lower.

In the case where the microencapsulated pigment is used as a lipophilic coloring composition, the microencapsulated pigment is recovered from the reaction mixture in last step by the publicly known method such as suction filtration, pressure filtration or centrifugation and washed as needed, and solvent replacement by a lipophilic solvent used is conducted repeatedly after drying this microencapsulated pigment or without drying it, thereby dispersing the microencapsulated pigment in the lipophilic solvent.

As the lipophilic solvent in which the pigment is dispersed, any solvent may be used so far as it has low dissolving power to PHA and can stably disperse the pigment therein. For example, one or more selected from linear aliphatic hydrocarbons such as hexane, monohydric alcohols such as methanol and ethanol, polyhydric alcohols such as glycerol, and derivatives such as fatty acid ethers and carboxylic esters may be used.

As the photosensitive resin, any of the conventionally known photosensitive resins may be used, and examples thereof include resins obtained by introducing a photo-crosslinkable group derived from a compound having a reactive unsaturated bond, such as a (meth)acrylic compound, cinnamic compound or vinyl ester compound in a linear polymer having a reactive substituent group such as a hydroxyl group, carboxyl group or amino group through an isocyanate group, aldehyde group, epoxy group or the like as needed. Further, linear polymers containing an acid anhydride in their structure units, such as styrene/maleic anhydride copolymers and α-olefin/maleic anhydride copolymers, and those half-esterified by a (meth)acrylic compound having a hydroxyl group, such as a hydroxyalkyl (meth)acrylate may also be used as the photosensitive resins. These resins may be used either singly or in combination of two or more thereof as needed. The photosensitive resins are used within a range of generally from 5 to 90% by mass, preferably from 20 to 70% by mass based on the total solids in the coloring composition.

Examples of the photopolymerizable monomer include monofunctional monomers such as nonylphenylcarbitol acrylate, 2-hydroxy-3-phenoxypropyl acrylate, 2-ethylhexylcarbitol acrylate, 2-hydroxyethyl acrylate and N-vinylpyrrolidone; difunctional monomers such as tripropylene glycol diacrylate, triethylene glycol diacrylate, tetraethylene glycol diacrylate, polyethylene glycol diacrylate and bisphenol A diacrylate; trifunctional monomers such as trimethylolpropane triacrylate and pentaerythritol triacrylate, and other polyfunctional monomers such as dipentaerythritol pentaacrylate and dipentaerythritol hexaacrylate. These photopolymerizable monomers may be used in combination of two or more as needed. The photopolymerizable monomers are used within a range of generally from 5 to 90% by mass, preferably from 20 to 70% by mass based on the total solids in the coloring composition.

Examples of the photo-induced polymerization initiator include benzoin and alkyl ethers thereof, acetophenones, thioxanthones, ketals, benzophenones, anthraquinones, xanthones, triazines, and hexaarylbisimidazole compounds. These photo-induced polymerization initiators may be used in combination of two or more. The photo-induced polymerization initiators are used within a range of generally from 0.2 to 30% by mass, preferably from 2 to 20% by mass based on the total mass of the binder resin and the photopolymerizable monomer.

As the thermosetting resin, any conventionally known resin may be used. Examples thereof include urethane, acrylic, polyimide, alkyd, epoxy, unsaturated polyester, melamine and phenol resins.

Examples of the thermoplastic resin include acrylic, vinyl chloride, vinyl chloride-vinyl acetate copolymer, urethane, polyamide and polycarbonate resins.

No particular limitation is imposed on the mass proportion of the microencapsulated pigment and the thermosetting and thermoplastic resins in the coloring composition. In order to retain good adhesion between a colored layer and a transparent substrate, however, the thermosetting and thermoplastic resins are preferably contained in a proportion of generally 5 to 300 parts by mass, particularly 80 to 120 parts by mass per 100 parts by mass of the microencapsulated pigment.

The polymeric compound is used for improving the strength and shelf stability of the colored layer, and no particular limitation is imposed on the polymeric compound. However, it preferably has a number average molecular weight of at least 1,000, more preferably ranging from 3,000 to 100,000. No particular limitation is imposed on the kind of such a polymeric compound. However, examples thereof include anionic group-containing materials, such as polyvinyl resins such as polyvinyl chloride, polyvinyl acetate, polyvinyl alcohol and polyvinyl butyral, polyester resins such as alkyd resins and phthalic resins, amino resins such as melamine resins, melamine-formaldehyde resins, aminoalkyd resins and urea resins, and thermoplastic, thermosetting or modified acrylic epoxy, polyurethane, polyether, polyamide, unsaturated polyester, phenol, silicone and fluorine-containing polymeric compounds, and copolymers or mixtures thereof. These polymeric compounds may be used either singly or in combination of two or more thereof. The concentration of the polymeric compound in the coloring composition may be set according to the object of the coloring composition. For example, it is used in a range of from 1 to 50% by mass, preferably from 5 to 20% by mass based on the total mass of the coloring composition.

The mixing of the above-described various mixtures into the aqueous or oily medium may be performed by means of a simple stirrer such as Disper, or a kneader at an intensity lighter than that in the case where a pigment is dispersed.

The content of the microencapsulated pigment in the hydrophilic or lipophilic coloring composition according to the present invention is preferably 1 to 70% by mass, more preferably 5 to 50% by mass.

### <Production process of color filter>

A color filter can be produced by forming a transparent colored layer on a transparent substrate in accordance with any of the conventionally known production processes of a color filter which will be described subsequently by way of examples, and laminating a protective layer in some cases.

A pigment dispersing process is, for example, a process for producing a color filter, in which a process comprising coating a substrate with a coloring composition containing a photosensitive resin, subjecting the coating layer to patterning exposure to light to photo-cure the layer, and lastly removing an unexposed portion of the coating film with a developer to conduct a development operation, thereby forming a colored pattern is repeatedly performed three times for three primary colors.

As the above coloring composition, both hydrophilic and lipophilic coloring compositions may be used.

As a method of the exposure to light, any method may be used. For example, a mask of a prescribed form such as a dot pattern or stripe pattern is brought into close contact with the coating film, and exposure is performed through this mask by means of a light source such as a xenon lamp, metal halide lamp or ultrahigh pressure mercury lamp.

An electrodeposition process is, for example, a process for producing a color filter, in which coloring compositions for electrodeposition containing an ionic polymer are separately ionized in water to dissociate, a transparent electrode formed by indium tin oxide or the like is electrochemically patterned for R, G and B with the coloring compositions, the transparent electrode is shortcircuited by a conductive paste to electrically deposit a color, heating and curing are conducted to deposit a coating film, the film is dried for a short period of time, and this process is repeatedly performed three times to successively form a color filter layer composed of three colored patterns of red, green and blue.

As the above coloring composition, a hydrophilic coloring composition is used, and a hydrophilic curing agent, a hydrophilic resin for forming a film, a photosensitive resin and other additives may be added either singly or in combination as needed.

In the microencapsulated pigment used in the electrodeposition process, an anionic PHA may be preferably used. At this time, it is desirable that an acid or base is added to the coloring composition to neutralize the anionic functional group on the surface of the PHA, thereby enhancing the dispersibility of the microencapsulated pigment in the coloring composition.

A hydrophilic curing agent may be contained in the coloring composition as needed. Examples of the hydrophilic curing agent include hydrophilic melamine resins, urethane resins, hydrophilic polyamine and hydrophilic epoxy resins. However, the hydrophilic curing agents are not limited thereto. A proportion of the hydrophilic curing agent in the coloring composition may be an amount sufficient to achieve crosslinking density in the coating film, and a particularly preferred amount is at most 20% by mass.

A printing process is, for example, a process for producing a color filter, in which coloring compositions of R, G and B colors, each comprising a thermosetting resin and a pigment dispersed therein, are separately applied by repeated printing, and the resin to become each colored layer is then thermoset.

As the above coloring compositions, both hydrophilic and lipophilic coloring compositions may be used.

As the method of thermosetting the coating film, any method conventionally used may be used so far as the microencapsulated pigment can be heated to a temperature fusion-bonded by heat. For example, a laser may be used. In this case, a semiconductor laser, carbon dioxide laser, YAG laser, excimer laser, argon laser or the like may be used as a source for laser beam.

An ink-jet process is a process for producing a color filter, in which coloring compositions respectively containing three pigments of R (red), G (green) and B (blue) colors are ejected by an ink-jet system on a transparent substrate to dry the respective coloring compositions. In such an ink-jet system, individual pixels of R, G and B can be formed at once to simplify the production process to a great extent and reduce the cost to a great extent. As the coloring compositions, may be used hydrophilic coloring compositions.

Besides, the coloring compositions according to the present invention may be suitably used in production processes of a color filter, such as spin coating process, roll coating process, dipping process, spraying process and electrophotographic process.

In each of the above-described production processes of a color filter, when development by which non-fusion-bonded pigments are removed is required, water may be used as a developer, and an alkalifying agent, water-soluble organic solvent, surfactant and/or the like may be added to such a developer as needed.

The thickness of the colored layer formed is within a range of from 0.1 to 10 µm, preferably from 0.1 to 1 µm. If the colored layer is thinner than the lower limit of the above range, sufficient spectral properties cannot be achieved. If the layer is thicker, a difference in level between a portion where the colored layer has been formed and a portion not formed becomes great, resulting in deterioration of image quality.

As the transparent substrate on which the colored layer is formed, is used a substrate which is insoluble in the coloring compositions and flat, for example, transparent glass, a transparent resin film, a metal plate, a ceramic plate or a solid image pickup device which is a photoelectric converter. A black matrix may be provided on the substrate.

The black matrix can be formed by plating of a metal composition such as metal chromium on a substrate, or a photoetching of a deposited layer. The black matrix can also be formed with a negative photosensitive resin composition containing a black pigment such as carbon black or triiron tetroxide. Further, it can also be formed by an offset printing process or silk screen printing process with a synthetic resin composition containing a black pigment. Water-repellent portions or walls for preventing color mixing may also be provided at a part of light-screening portions of the black matrix.

The colored layer may be provided directly on the substrate. However, a primer may also be provided between the colored layer and the substrate. The primer is provided for the purpose of effectively receiving inks and enhancing crusting property between a pigment particle layer and the substrate and is formed by a single layer or plural layers of a transparent organic thin film material. As transparent organic thin film materials having ink-receiving ability, are preferred acrylic resins, epoxy resins and imide resins, and particularly cellulose derivatives such as hydroxypropyl cellulose, hydroxyethyl cellulose, methyl cellulose and carboxymethyl cellulose. In order to control the ink-receiving ability, some of the above-mentioned resins may be used as a blend. As a primer composed of an organic thin film material for enhancing the crusting property to the substrate, may be used a silane coupling agent or the like. The thickness of these primers is properly about 0.1 to 5 µm though it varies depending on the kind of the organic thin film material and a layer structure. As a forming method thereof, may be used a method such as spin coating, roll coating, bar coating, spray coating or dip coating.

Some transparent protective layer may also be provided on the colored layer formed. By this protective layer, the resistance to processing of the color filter, particularly, solvent resistance can be greatly improved. No particular limitation is imposed on the material for forming the protective layer so far as it is a material for protective film commonly used in color filters. Among others, a material of the acrylic or epoxy thermosetting type, or the photo-setting type is suitably used. Further, the substrate, on which the protective layer has been coated and formed, is baked by an oven, hot plate or the like to form a coating film. The thickness of the protective layer is properly about 0.1 to 10 µm though it varies according to the performance required.

Figure illustrates a cross-sectional view of the basic construction of a color liquid crystal display device in which the color filter according to the present invention has been incorporated. In Figure, reference numeral 14 designates a color filter, 1 a polarizing plate, 2 a transparent substrate such as glass, 3 a black matrix, 4 a primer, 5 a protective layer, 6 a common electrode, 7 an alignment film, 8 a liquid crystal compound, 9 an alignment film, 10 pixel electrodes, 11 a transparent substrate, 12 a polarizing plate, and 13 a back light.

A liquid crystal display panel is generally formed by enclosing a liquid crystal compound in a space between a color filter and a substrate opposite thereto, which have been united to each other. As illustrated in Figure, on the inside of the opposite substrate 11, transparent pixel electrodes 10 are formed in the form of a matrix. The color filter is provided in such a manner that colored portions of R, G and B colors are arranged at positions opposite to the pixel electrodes 10. The alignment films 7 and 9 are formed on the respective insides of both substrates. Liquid crystal molecules can be aligned or oriented in a fixed direction by subjecting these films to a rubbing treatment. Polarizing plates are bonded to the outer surfaces of the respective substrates. The liquid crystal compound is filled in a space between these substrates. As a back light, a combination of a fluorescent lamp and a scattering plate (both, not illustrated) is generally used, and the liquid crystal compound is caused to function as an optical shutter for changing the transmittance of light 13 from the back light, thereby making a display.

Incidentally, the coloring compositions according to the present invention and the preparation process thereof are not limited to those described above.

The present invention will hereinafter be described more specifically by the following Examples. However, the following examples are examples of the best embodiments of the present invention, and the technical scope of the present invention is not limited to these examples. Incidentally, all designations of "%" as will be used in the following examples mean % by mass unless expressly noted.

### REFERENTIAL EXAMPLE 1:

### Preparation of transformant having PHA synthase-producing ability:

After an YN2 strain was cultured overnight at 30°C in 100 ml of an LB medium (1% polypeptone (product of Nippon Seiyaku K.K.), 0.5% yeast extract (product of Difco Co.), 0.5% sodium chloride, pH: 7.4), chromosome DNA was isolated and recovered by the method of Marmur et al. The resultant chromosome DNA was completely decomposed by a restriction enzyme Hind III. pUC18 was used as a vector and cut by the restriction enzyme Hind III. After the terminal was subjected to dephsphorylation (Molecular Cloning, 1, 572 (1989); Cold Spring Harbor Laboratory Publisher), a DNA ligation kit Ver. II (product of Takara Shuzo Co., Ltd.) was used to link the cut site of the vector (cloning site) to the completely decomposed fragment of the chromosome DNA by Hind III.

The chromosome DNA fragment-integrated plasmid vector was used to transform an *Escherichia coli* HB101 strain, thereby prepare a DNA library of the YN2 strain. In order to select a DNA fragment containing a PHA synthase gene of the YN2 strain, a probe for colony hybridization was then prepared. Oligonucleotide composed of base sequences set forth in SEQ ID NO:1 and NO:2 of SEQUENCE LISTING was synthesized (Amersham Pharmacia Biotech K.K.), and this oligonucleotide was used as a primer to perform PCR using the chromosome DNA as a template. The DNA fragment PCR-amplified was used as a probe. The labeling of the probe was conducted by utilizing a commercially available label enzyme system Alk Phos Direct (product of Amersham Pharmacia Biotech K.K.). The resultant labeled probe was used to select an *Escherichia coli* strain having a recombinant plasmid containing a PHA synthase gene from the chromosome DNA library of the YN2 strain by the colony hybridization method. From the selected strain, the plasmide was collected by the alkaline method, whereby a DNA fragment containing the PHA synthase gene was able to be obtained. Thus-obtained gene DNA fragment was recombined to a vector pBBR122 (Mo Bi Tec) containing a wide host range replicating region belonging to none of IncP, IncQ and IncW, which are incompatible groups. This recombinant plasmid was transformed to a *Pseudomonas cichorii* YN2ml strain (strain lacking in PHA synthesizing ability) by the electroporation method. As a result, the PHA synthesizing ability of the YN2ml strain was recovered to exhibit complementarity. Accordingly, it was confirmed that the selected gene DNA fragment contains a PHA synthase gene region capable of translating to a PHA synthase in the *Pseudomonas cichorii* YN2ml strain.

With respect to this DNA fragment, the base sequence was determined by the Sanger's method. As a result, it was confirmed that base sequences set forth in SEQ ID NO:3 and NO:4, which encode peptide chains, respectively, are present in the determined base sequence. With respect to these PHA synthase genes, PCR was performed by using the chromosome DNA as a template to prepare a PHA synthase gene of a complete length. More specifically, an upstream-side primer (SEQ ID NO:5) and a downstream-side primer (SEQ ID NO:6) to the PHA synthase gene of the base sequence set forth in SEQ ID NO:3, and an upstream-side primer (SEQ ID NO:7) and a downstream-side primer (SEQ ID NO:8) to the PHA synthase gene of the base sequence set forth in SEQ ID NO:4 were respectively synthesized (Amersham Pharmacia Biotech K.K.). These primers were used to conduct PCR as to each of the base sequences set forth in SEQ ID NO:3 and NO:4, thereby amplifying the complete length of the PHA synthase gene (LA-PCR kit; product of Takara Shuzo Co., Ltd.). After the resultant PCR amplified fragment and a manifestation vector pTrc99A were cut with the restriction enzyme Hind III, and subjected to dephsphorylation (Molecular Cloning, Vol. 1, p. 572 (1989); Cold Spring Harbor Laboratory Publisher), the DNA ligation kit Ver. II (product of Takara Shuzo Co., Ltd.) was used to link the DNA fragment containing the complete length of the PHA synthase gene, from which unnecessary base sequences at both terminals were removed, to this cut site of the manifestation vector pTrc99A.

*Escherichia coli* (HB101, product of Takara Shuzo Co., Ltd.) was transformed with the resultant recombinant plasmids by the calcium chloride method. The resultant recombinants were cultured to amplify the recombinant plasmids, thereby recovering the respective recombinant plasmides. The recombinant plasmid retaining the gene DNA of SEQ ID NO:3 and the recombinant plasmid retaining the gene DNA of SEQ ID NO:4 were regarded as pYN2-C1 and pYN2-C2, respectively. *Escherichia coli* (HB101fB, strain lacking in fadB) was transformed with pYN2-C1 and pYN2-C2 by the calcium chloride method to obtain recombinant *Escherichia coli* strains, pYN2-C1 recombinant strain and pYN2-C2 recombinant strain retaining the respective recombinant plasmids.

### REFERENTIAL EXAMPLE 2: Production 1 of PHA synthase

An oligonucleotide (SEQ ID NO:9) which become an upstream-side primer to pYN2-C1 and an oligonucleotide (SEQ ID NO:10) which become a downstream-side primer were respectively designed and synthesized (Amersham Pharmacia Biotech K.K.). These oligonucleotides were used as primers, and pYN-2-C1 was used as a template to conduct PCR, thereby amplifying a complete length of a PHA synthase gene having a BamH I restriction site at the upstream and an Xho I restriction site at the downstream (LA-PCR kit; product of Takara Shuzo Co., Ltd.).

Similarly, an oligonucleotide (SEQ ID NO:11) which become an upstream-side primer to pYN2-C2 and an oligonucleotide (SEQ ID NO:12) which become a downstream-side primer were respectively designed and synthesized (Amersham Pharmacia Biotech K.K.). These oligonucleotides were used as primers, and pYN-2-C2 was used as a template to conduct PCR, thereby amplifying a complete length of a PHA synthase gene having a BamH I restriction site at the upstream and an Xho I restriction site at the downstream (LA-PCR kit; product of Takara Shuzo Co., Ltd.).

Purified respective PCR amplified products were digested with BamH I and Xho I to insert them into their corresponding sites of a plasmid pGEX-6P-1 (product of Amersham Pharmacia Biotech K.K.). These vectors were used to transform *Escherichia coli* (JM109) to obtain a strain for manifestation. The identification of the strain was conducted by a DNA fragment obtained by treating a plasmid DNA prepared in plenty using Miniprep (Wizard Minipreps DNA Purification System, product of PROMEGA Co.) with BamH I and Xho I. After the resultant strain was precultured overnight in 10 ml of an LB-Amp medium, a portion (0.1 ml) of the culture was added to 10 ml of an LB-Amp medium to conduct shaking culture at 37°C and 170 rpm for 3 hours. Thereafter, IPTG was added (final concentration: 1 mM) to continue the culture at 37°C for 4 to 12 hours.

The IPTG-induced *Escherichia coli* was collected (8,000 × g, 2 minutes, 4°C) and resuspended at 4°C in a phosphate-buffered saline (PBS; 8 g of NaCl, 1.44 g of Na₂HPO₄, 0.24 g of KH₂PO₄, 0.2 g of KCl, 1,000 ml of purified water) 1/10 as much as the *Escherichia coli* solution. The bacteria were broken by freeze-thaw and sonication, and solid impurities were removed by centrifugation (8,000 × g, 10 minutes, 4° C). After confirming the presence of the intended manifestation protein in a supernatant by SDS-PAGE, the induced and manifested GST-fused proteins were purified by glutathione Sepharose 4B (product of Amersham Pharmacia Biotech K.K.). The glutathione Sepharose used was subjected to a treatment for preventing non-specific adsorption in advance. More specifically, glutathione Sepharose was washed (8,000 × g, 1 minute, 4°C) three times with an equiamount of PBS, and an equiamount of 4% bovine serum albumin-containing PBS was added to conduct a treatment at 4° C for 1 hour. After the treatment, the glutathione Sepharose was washed twice with an equiamount of PBS and resuspended in PBS 1/2 as much as the glutathione Sepharose. The pretreated glutathione Sepharose (40 µl) was added to a cell-free extract (1 ml), and the mixture was gently stirred at 4°C, thereby adsorbing the fused proteins GST-YN2-C1 and GST-YN2-C2 on the glutathione Sepharose. After the adsorption, the glutathione Sepharose was recovered by centrifugation (8,000 × g, 1 minute, 4°C) and washed three times with PBS (400 µl). Thereafter, 10 µM glutathione (40 µl) was added, and stirring was conducted at 4°C for 1 hour to dissolve out the adsorbed fused proteins. After a supernatant was recovered by centrifugation (8,000 × g, 2 minutes, 4°C), it was dialyzed against PBS to purify the fused proteins. Single bonds were identified by SDS-PAGE.

After each GST-fused protein (500 µg) was digested with PreScission protease (product of Amersham Pharmacia Biotech K.K.; 5 U), it was passed through glutathione Sepharose to remove the protease and GST. A flowthrough fraction was further subjected to a Sephadex G200 column equilibrated with PBS to obtain final purified products of the manifested proteins YN2-C1 and YN2-C2. Single bonds of 60.8 kDa and 61.5 kDa were respectively identified by SDS-PAGE.

The enzymes were concentrated with a bio-solution sample concentrating agent (MIZUBUTORIKUN AB-1100, trade name, product of Ato K.K.) to obtain purified protein solutions (10 U/ml).

The enzymatic activity of each of the purified proteins was determined in accordance with the method described above. The concentration of the protein in a sample was measured by a Micro BCA protein determination reagent kit (product of Pierce Chemical Co.). The measured results of the activities of the purified enzymes are shown in Table 1.

**Table 1**

| | Activity | Specific activity |
|---|---|---|
| pYN2-C1 | 2.1 U/ml | 4.1 U/mg of protein |
| pYN2-C2 | 1.5 U/ml | 3.6 U/mg of protein |

### REFERENTIAL EXAMPLE 3:

A PHA synthase-producing 2P91 strain, H45 strain, YN2 strain or P161 strain was planted in an M9 medium (200 ml) containing 0.5% yeast extract (product of Difco Co.) and 0.1% octanoic acid to conduct shaking culture at 30°C and 125 strokes/min. After 24 hours, the strain was recovered by centrifugation (10,000 × g, 4°C, 10 minutes) and resuspended in 0.1 M Tris-hydrochloride buffer (200 ml, pH: 8.0), and the suspension was centrifuged again, thereby washing the strain. After the strain was resuspended in 0.1 M Tris-hydrochloride buffer (2.0 ml, pH: 8.0) and broken by means of an ultrasonic breaker, a supernatant was recovered by centrifugation (12,000 × g, 4°C, 10 minutes) to obtain a crude enzyme solution.

The activity of each crude enzyme was determined by the above-described method, and the results thereof are shown in Table 2.

**Table 2**

| | Activity |
|---|---|
| P91 strain | 0.1 U/ml |
| H45 strain | 0.2 U/ml |
| YN2 strain | 0.4 U/ml |
| P161 strain | 0.2 U/ml |

Each crude enzyme solution was concentrated with a bio-solution sample concentrating agent (MIZUBUTORIKUN AB-1100, trade name, product of Ato K.K.) to obtain a crude protein solution (10 U/ml).

### REFERENTIAL EXAMPLE 4: Synthesis of 3-hydroxyacyl CoA

An (R)-3-hydroxypimelyl CoA was synthesized in the following manner based on Rehm BHA, Kruger N, Steinbuchel A (1998), Journal of Biological Chemistry, 273, pp. 24044-24051 though some changes were given. Acyl-CoA synthase (product of Sigma Co.) was dissolved in Tris-hydrochloride buffer (50 mM, pH: 7.5) containing 2 mM ATP, 5 mM MgCl2, 2 mM coenzyme A, 2 mM (R)-3-hydroxypimelic acid so as to give a concentration of 0.1 mU/µl. The solution was incubated in a hot bath of 37°C, and sampling was properly conducted to analyze the progress of the reaction by HPLC. Sulfuric acid was added to the sampled reaction solution so as to give a concentration of 0.02N to stop the enzyme reaction. Thereafter, (R)-3-hydroxypimelic acid, which was a unreacted substrate, was extracted with n-heptane and removed. An RP19 column (nucleosil C18, 7 µm, Knauser) was used in the analysis by HPLC, and a 25 mM phosphate buffer (pH: 5.3) was used as a mobile phase to conduct elution by applying a linear concentration gradient with acetonitrile- A thioester compound formed by the enzyme reaction was detected by monitoring an absorption spectrum at from 200 to 500 nm.

Similarly, an (R)-3-hydroxyoctanoic acid ester obtained by the Reformatsky reaction was hydrolyzed to obtain (R)-3-hydroxyoctnoic acid, and this acid was used as a substrate to prepare (R)-3-hydroxyoctanoyl-CoA.

Similarly, (R,S)-3-hydroxy-7,8-epoxyoctanoyl-CoA was prepared. (R,S)-3-hydroxy-7,8-epoxyoctanoic acid used in the preparation of the (R,S)-3-hydroxy-7,8-epoxyoctanoyl-CoA was prepared by epoxidating an unsaturated portion of 3-hydroxy-7-octenoic acid synthesized by the process described in Int. J. Biol. Macromol., 12, 85-91 (1990) with 3-chlorobenzoic acid.

### EXAMPLE 1:

### Production of color filter by electrodeposition:

A red pigment (C.I. Pigment Red 168) was dispersed by a sand mill so as to give a particle diameter of 0.1 µm or smaller. To 1 part by mass of this dispersion were added 10 parts by mass of a solution (10 U/ml) of a PHA synthase derived from a pYN2-C1 recombinant strain and 39 parts by mass of PBS. The mixture was gently shaken at 30°C for 30 minutes to cause the PHA synthase to be adsorbed on the surface of the pigment. This dispersion was centrifuged (10,000 × g, 4C°, 10 minutes), the resultant precipitate was suspended in PBS, and the suspension was centrifuged (10,000 × g, 4C°, 10 minutes) again to obtain an immobilized enzyme.

The immobilized enzyme was suspended in 48 parts by mass of 0.1 M phosphate buffer (pH: 7.0), to which 1 part by mass of (R)-3-hydroxypimelyl CoA (prepared in accordance with the process described in Eur. J. Biochem., 250, 432-439 (1997)) and 0.1 parts by mass of bovine serum albumin (product of Sigma Co.) were added, and the mixture was gently shaken at 30°C for 2 hours. A microencapsulated pigment formed was recovered by centrifugation (10,000 × g, 4°C, 10 minutes), and 99 parts by mass of ion-exchanged water were added to 1 part by mass of the microencapsulated pigment to disperse the pigment by stirring (80 rpm) by a stirring blade. This dispersion was provided as a red coloring composition.

After a part of the microencapsulated pigment recovered previously was vacuum-dried, it was suspended in chloroform, the suspension was stirred at 60°C for 20 hours to extract PHA forming a shell. The extract was filtered through a membrane filter having a pore size of 0.45 µm, concentrated under reduced pressure by a rotary evaporator, then subjected to methanolysis in accordance with a method known per se in the art and analyzed by a gas chromatography-mass spectrometer (GC-MS, Shimadz QP-5050, EI method) to identify a methyl-esterified product of a PHA monomer unit. As a result, it was identified that the PHA is a PHA derived from 3-hydroxypimelic acid.

Further, the molecular weight of the PHA was evaluated by gel permeation chromatography (GPC; Tosoh HLC-8020, column: Polymer Laboratory PLgel MIXED-C (5 µm), solvent: chloroform, column temperature: 40°C, in terms of polystyrene). As a result, Mn was found to be 60,000.

The volume average particle diameter of the pigment before and after the microcapsulation was measured by means of a laser Doppler system particle size distribution measuring machine (UPA-150, manufactured by Nikkiso Co., Ltd.). As a result, it was found that the particle diameter before the microcapsulation was 0.104 µm, while the particle diameter after the microcapsulation was 0.112 µm, which is considered to be attributable to the fact that the pigment was covered with PHA.

With respect to a green pigment (C.I. Pigment Green 36) and a blue pigment (C.I. Pigment Blue 60) in place of the red pigment in the above-described process, microencapsulated pigments were prepared similarly, and the microencapsulated pigments were respectively dispersed in ion-exchanged water to provide green and blue coloring compositions.

A transparent electrode substrate obtained by patterning with ITO on a glass substrate, and a stainless steel substrate were immersed in the red coloring composition, a portion of the transparent electrode substrate, which was to be colored red, was connected to a positive pole, and the stainless steel substrate was provided as a negative pole to energize, thereby deposit a coating film on the transparent electrode. The electrodeposition conditions were as follows:
Voltage applied: 30 V,
Coating temperature: 20°C, and
Deposition time: 20 seconds.

After completion of the electrodeposition, the glass substrate was washed with water, dried and then baked at 150°C to obtain a red color filter. Similarly, this process was repeated respectively using the green and blue coloring compositions to obtain a color filter in the form of a stripe of R, G and B.

### COMPARATIVE EXAMPLE 1:

A mixture having the following composition was dispersed and mixed for 2 hours by means of a bead mill.

| | |
|---|---|
| Acrylic resin | 1.6 parts |
| Melamine resin | 0.4 parts |
| Red pigment, C.I. Pigment Red 168 | 1 part |
| Ion-exchanged water | 7 parts. |

In this liquid mixture was mixed 90 parts of ion-exchanged water to prepare a red coloring composition.

Similarly, a green coloring composition and a blue coloring composition were respectively prepared in the same manner as in the red coloring composition except that a green pigment (C.I. Pigment Green 36) and a blue pigment (C.I. Pigment Blue 60) were used respectively in place of the red pigment.

A color filter in the form of a stripe of R, G and B was then obtained in the same manner as in EXAMPLE 1 except that the respective coloring compositions according to Comparative Example 1 were used.

### <Evaluation 1>

The volume average particle diameters and the volume average particle diameters after stored at room temperature for 30 days of the microencapsulated pigments in the respective red, green and blue coloring compositions of EXAMPLE 1 and COMPARATIVE EXAMPLE 1 are shown in Table 3. The volume average particle diameter was measured by means of a laser Doppler system particle size distribution measuring machine (UPA-150, manufactured by Nikkiso Co., Ltd.).

**Table 3**

| | Ex.1 (R/G/B) | Comp. Ex.1 (R/G/B) |
|---|---|---|
| Vol. avg. particle dia. (before storage) | 0.112/0.127/0.119 | 0.128/0.148/0.125 |
| Vol. avg. particle dia. (after storage) | 0.116/0.125/0.121 | 0.285/0.343/0.179 |

As a result, it was revealed that the volume average particle diameter of the microencapsulated pigment in each coloring composition of EXAMPLE 1 exhibits almost the same value before and after the storage, and the microencapsulated pigment is excellent in shelf stability. On the other hand, the volume average particle diameter after the storage of the microencapsulated pigment in each coloring composition of COMPARATIVE EXAMPLE 1 was great compared with the volume average particle diameter of the pigment before the storage, and so the shelf stability was not satisfactory to the microencapsulated pigment.

With respect to the color filters of EXAMPLE 1 and COMPARATIVE EXAMPLE 1, such evaluation as described below was made, and the results thereof are shown in Table 4.

### (1) Unevenness due to aggregation:

An image of each of the color filters produced in EXAMPLE 1 and COMPARATIVE EXAMPLE 1 was observed by transmitted light through a phase contrast microscope.

### (2) Adhesion of colored layer to substrate:

Each of the color filters produced in EXAMPLE 1 and COMPARATIVE EXAMPLE 1 was evaluated by a pressure cooker test under conditions of 125°C, 85% RH and 6 hours.

### (3) Transparency:

The transparency of each of the color filters produced in EXAMPLE 1 and COMPARATIVE EXAMPLE 1 was evaluated by measuring its transmittance. The transmittances of the colored portions of R, G and B were respectively measured at a wavelength at which the maximum transmittance was achieved within a range of from 400 nm to 700 nm. The measurement was conducted as to 10 pixels of each of R, G and B, and an average thereof was found.

Organoleptic evaluation was also conducted by visual observation.

### (4) Coloring property:

The coloring properties of the color filters produced in EXAMPLE 1 and COMPARATIVE EXAMPLE 1 were organoleptically evaluated by visual observation.

### (5) Contrast:

Two polarizing plates were arranged in opposed relation to each other in such a manner optical axes can be changed, and a color filter was arranged between these polarizing plates in contact with the polarizing plates. In this state, the color filter was irradiated with a back light beam using a back light for liquid crystal display panel (SLC3LC1EX4UA, trade name, manufactured by Toshiba Lighting & Technology Corporation). The optical axes of the two polarizing plates were changed to measure luminances (lightness) by natural light when the optical axes had intersected at right angles and when the optical axes had become parallel by means of a color luminance meter ("Topcon" BM-5A), thereby calculating out a ratio between them as depolarization property.

Organoleptic evaluation was also conducted by visual observation.

**Table 4**

| | Ex.1 (R/G/B) | Comp. Ex.1 (R/G/B) |
|---|---|---|
| Unevenness due to aggregation | Not occurred | Somewhat occurred |
| Adhesion | Good | Wrinkling |
| Transparency | 92/78/78, good | 80/68/66, somewhat poor |
| Coloring property | Good | Somewhat poor |
| Contrast | 1032, good | 875, somewhat poor |

As a result, it was revealed that the color filter according to EXAMPLE 1 is free of unevenness due to aggregation and exhibits good results in all the adhesion, transparency, coloring property and contrast and hence has excellent properties. On the other hand, these properties were not satisfactory to the color filter of COMPARATIVE EXAMPLE 1.

### EXAMPLE 2:

### Production of color filter by ink-jet system:

A red pigment (C.I. Pigment Red 168) was dispersed by a sand mill so as to give a particle diameter of 0.1 µm or smaller. To 1 part by mass of this dispersion were added 10 parts by mass of a crude PHA synthase (10 U/ml) derived from an H45 strain and 39 parts by mass of PBS. The mixture was gently shaken at 30°C for 30 minutes to cause the PHA synthase to be adsorbed on the surface of the red pigment. This dispersion was centrifuged (10,000 × g, 4°C, 10 minutes), the resultant precipitate was suspended in PBS, and the suspension was centrifuged (10,000 × g, 4°C, 10 minutes) again to obtain an immobilized enzyme.

The immobilized enzyme was suspended in 48 parts by mass of 0.1 M phosphate buffer (pH: 7.0), to which 1 part by mass of (R)-3-hydroxypimelyl CoA (prepared in accordance with the process described in Eur. J. Biochem., 250, 432-439 (1997)) and 0.1 parts by mass of bovine serum albumin (product of Sigma Co.) were added, and the mixture was gently shaken at 30°C for 2 hours. A red microencapsulated pigment formed was recovered by centrifugation (10,000 × g, 4C°, 10 minutes), and 10 parts by mass of ethylene glycol, 15 parts by mass of diethylene glycol, 0.6 parts by mass of a monoethanolamine salt of a styrene-maleic acid copolymer (average molecular weight: 30,000, acid value: 300) and 70.4 parts by mass of ion-exchanged water were added to 4 parts by mass of the microencapsulated pigment to disperse the pigment by stirring (80 rpm) by a stirring blade. This dispersion was provided as a red coloring composition.

The identification of a PHA monomer unit of the microencapsulated pigment recovered previously was performed in the same manner as in EXAMPLE 1. As a result, it was identified that the PHA is a PHA derived from 3-hydroxypimelic acid.

Further, the molecular weight of the PHA was evaluated by gel permeation chromatography in the same manner as in EXAMPLE 1. As a result, Mn was found to be 47,000.

The volume average particle diameter of the pigment before and after the microcapsulation was measured in the same manner as in EXAMPLE 1. As a result, it was found that the particle diameter before the microcapsulation was 0.105 µm, while the particle diameter after the microcapsulation was 0.117 µm, which is considered to be attributable to the fact that the pigment was covered with PHA.

With respect to a green pigment (C.I. Pigment Green 36) and a blue pigment (C.I. Pigment Blue 60) in place of the red pigment in the above-described process, microencapsulated pigments were prepared similarly, and the microencapsulated pigments were respectively dispersed in ion-exchanged water to provide green and blue coloring compositions.

Ink dots composed of three colors of R, G and B were formed with the respective coloring compositions on a glass substrate by means of an ink-jet recording apparatus. The ink dots were dried for 20 minutes at 80°C and further for 1 hour at 180°C to form a colored layer. The thickness of the resultant colored layer was 0.4 µm. A thermosetting resin ("Hicoat LC-2001", product of Sanyo Chemical Industries, Ltd.) was applied as a transparent protective film by a spin coater onto the fine pigment particle layer of three colors of R, G and B so as to give a dry coating thickness of 0.5 µm. The thus-formed film was prebaked at 120°C for 30 minutes and then fully baked at 200°C for 30 minutes to form a protective layer, thereby obtaining a color filter according to the present invention.

### COMPARATIVE EXAMPLE 2:

To 4 parts by mass of a red pigment (C.I. Pigment Red 168), were added 10 parts by mass of ethylene glycol, 15 parts by mass of diethylene glycol, 0.6 parts by mass of a monoethanolamine salt of a styrene-maleic acid copolymer (average molecular weight: 30,000, acid value: 300) and 70.4 parts by mass of ion-exchanged water. The pigment was dispersed for 2 hours by means of a bead mill. This dispersion was provided as a red coloring composition.

Similarly, a green coloring composition and a blue coloring composition were respectively prepared in the same manner as in the red coloring composition except that a green pigment (C.I. Pigment Green 36) and a blue pigment (C.I. Pigment Blue 60) were used respectively in place of the red pigment.

A color filter in the form of a stripe of R, G and B was then obtained in the same manner as in EXAMPLE 2 except that the respective coloring compositions according to Comparative Example 2 were used.

### <Evaluation 2>

The volume average particle diameters and the volume average particle diameters after stored at room temperature for 30 days of the microencapsulated pigments in the respective red, green and blue coloring compositions of EXAMPLE 2 and COMPARATIVE EXAMPLE 2 were measured in the same manner as in EXAMPLE 1 and COMPARATIVE EXAMPLE 1 and shown in Table 5.

**Table 5**

| | Ex.2 (R/G/B) | Comp. Ex.2 (R/G/B) |
|---|---|---|
| Vol. avg. particle dia. (before storage) | 0.117/0.124/0.126 | 0.133/0.145/0.132 |
| Vol. avg. particle dia. (after storage) | 0.123/0.127/0.134 | 0.294/0.315/0.283 |

As a result, it was revealed that the volume average particle diameter of the microencapsulated pigment in each coloring composition of EXAMPLE 2 exhibits almost the same value before and after the storage, and the microencapsulated pigment is excellent in shelf stability. On the other hand, the volume average particle diameter after the storage of the microencapsulated pigment in each coloring composition of COMPARATIVE EXAMPLE 2 was great compared with the volume average particle diameter of the pigment before the storage, and so the shelf stability was not satisfactory to the microencapsulated pigment.

With respect to the color filters of EXAMPLE 2 and COMPARATIVE EXAMPLE 2, the same evaluation as in EXAMPLE 1 was made, and the results thereof are collected in Table 6.

**Table 6**

| | Ex.2 (R/G/B) | Comp. Ex.2 (R/G/B) |
|---|---|---|
| Unevenness due to aggregation | Not occurred | Somewhat occurred |
| Adhesion | Good | Good |
| Transparency | 87/75/82, good | 76/73/71, somewhat poor |
| Coloring property | Good | Somewhat poor |
| Contrast | 1021, good | 902, somewhat poor |

As a result, it was revealed that the color filter according to EXAMPLE 2 is free of unevenness due to aggregation and exhibits good results in all the adhesion, transparency, coloring property and contrast and hence has excellent properties. On the other hand, these properties were not satisfactory to the color filter of COMPARATIVE EXAMPLE 2.

### EXAMPLE 3:

### Production of color filter by pigment dispersing process:

A red pigment (C.I. Pigment Red 168) was dispersed by a sand mill so as to give a particle diameter of 0.1 µm or smaller. To 1 part by mass of this dispersion were added 10 parts by mass of a crude PHA synthase (10 U/ml) derived from a P91 strain and 39 parts by mass of PBS. The mixture was gently shaken at 30°C for 30 minutes to cause the PHA synthase to be adsorbed on the surface of the red pigment. This dispersion was centrifuged (10,000 × g, 4°C, 10 minutes), the resultant precipitate was suspended in PBS, and the suspension was centrifuged (10,000 × g, 4°C, 10 minutes) again to obtain an immobilized enzyme.

The immobilized enzyme was suspended in 48 parts by mass of 0.1 M phosphate buffer (pH: 7.0), to which 1 part by mass of (R)-3-hydroxyoctanoyl CoA (prepared in accordance with the process described in Eur. J. Biochem., 250, 432-439 (1997)) and 0.1 parts by mass of bovine serum albumin (product of Sigma Co.) were added, and the mixture was gently shaken at 30°C for 2 hours.

A red microencapsulated pigment formed was recovered by centrifugation (10,000 × g, 4°C, 10 minutes) and vacuum-dried, and 9 parts by mass of a photosensitive polyamide resin (PA-1000C, product of Ube Industries, Ltd.) were added to 1 part by mass of the microencapsulated pigment to disperse the pigment by a kneader. This dispersion was provided as a red coloring composition.

The identification of a PHA monomer unit of the microencapsulated pigment recovered previously was performed in the same manner as in EXAMPLE 1. As a result, it was identified that the PHA is a PHA derived from 3-hydroxyoctanoic acid.

Further, the molecular weight of the PHA was evaluated by gel permeation chromatography in the same manner as in EXAMPLE 1. As a result, Mn was found to be 42,000.

The volume average particle diameter of the pigment before and after the microcapsulation was measured in the same manner as in EXAMPLE 1. As a result, it was found that the particle diameter before the microcapsulation was 0.127 µm, while the particle diameter after the microcapsulation was 0.143 µm, which is considered to be attributable to the fact that the pigment was covered with PHA.

With respect to a green pigment (C.I. Pigment Green 36) and a blue pigment (C.I. Pigment Blue 60) in place of the red pigment in the above-described process, microencapsulated pigments were prepared similarly, and the microencapsulated pigments were respectively dispersed in the photosensitive polyamide resin to provide green and blue coloring compositions.

The red coloring composition was then applied on to a glass substrate by spin coating so as to give a layer thickness of 1.5 µm, and baked at 80°C for 10 minutes by a hot plate to provide a red colored layer. Desired portions of the colored layer were then UV-cured in a proper quantity of light through a photomask to dissolve and remove an unexposed portion of the colored resin layer. The colored resin layer was post-baked at 200°C for 10 minutes by a hot plate. Similarly, this process was repeated respectively using the green and blue coloring compositions to obtain a color filter in the form of a stripe of R, G and B.

### COMPARATIVE EXAMPLE 3:

To 1 part by mass of a red pigment (C.I. Pigment Red 168), were added 9 parts by mass of a photosensitive polyamide resin (PA-1000C, product of Ube Industries, Ltd.). The pigment was dispersed for 2 hours by means of a kneader. This dispersion was provided as a red coloring composition.

Similarly, a green coloring composition and a blue coloring composition were respectively prepared in the same manner as in the red coloring composition except that a green pigment (C.I. Pigment Green 36) and a blue pigment (C.I. Pigment Blue 60) were used respectively in place of the red pigment.

A color filter in the form of a stripe of R, G and B was then obtained in the same manner as in EXAMPLE 3 except that the respective coloring compositions according to Comparative Example 3 were used.

### <Evaluation 3>

The volume average particle diameters and the volume average particle diameters after stored at room temperature for 30 days of the microencapsulated pigments in the respective red, green and blue coloring compositions of EXAMPLE 3 and COMPARATIVE EXAMPLE 3 were measured in the same manner as in EXAMPLE 1 and COMPARATIVE EXAMPLE 1 and shown in Table 7.

**Table 7**

| | Ex.3 (R/G/B) | Comp. Ex.3 (R/G/B) |
|---|---|---|
| Vol. avg. particle dia. (before storage) | 0.143/0.175/0.149 | 0.164/0.102/0.185 |
| Vol. avg. particle dia. (after storage) | 0.162/0.161/0.174 | 0.295/0.239/0.352 |

As a result, it was revealed that the volume average particle diameter of the microencapsulated pigment in each coloring composition of EXAMPLE 3 exhibits almost the same value before and after the storage, and the microencapsulated pigment is excellent in shelf stability. On the other hand, the volume average particle diameter after the storage of the microencapsulated pigment in each coloring composition of COMPARATIVE EXAMPLE 3 was great compared with the volume average particle diameter of the pigment before the storage, and so the shelf stability was not satisfactory to the microencapsulated pigment.

With respect to the color filters of EXAMPLE 3 and COMPARATIVE EXAMPLE 3, the same evaluation as in EXAMPLE 1 was made, and the results thereof are collected in Table 8.

**Table 8**

| | Ex.3 (R/G/B) | Comp. Ex.3 (R/G/B) |
|---|---|---|
| Unevenness due to aggregation | Not occurred | Occurred |
| Adhesion | Good | Wrinkling |
| Transparency | 79/73/78, good | 69/62/64, somewhat poor |
| Coloring property | Good | Somewhat poor |
| Contrast | 1009, good | 821, somewhat poor |

As a result, it was revealed that the color filter according to EXAMPLE 3 is free of unevenness due to aggregation and exhibits good results in all the adhesion, transparency, coloring property and contrast and hence has excellent properties. On the other hand, these properties were not satisfactory to the color filter of COMPARATIVE EXAMPLE 3.

### EXAMPLE 4:

### Production of color filter by printing process:

A red pigment (C.I. Pigment Red 168) was dispersed by a sand mill so as to give a particle diameter of 0.1 µm or smaller. To 1 part by mass of this dispersion were added 10 parts by mass of a crude PHA synthase (10 U/ml) derived from a P161 strain and 39 parts by mass of PBS. The mixture was gently shaken at 30°C for 30 minutes to cause the PHA synthase to be adsorbed on the surface of the red pigment. This dispersion was centrifuged (10,000 × g, 4°C, 10 minutes), the resultant precipitate was suspended in PBS, and the suspension was centrifuged (10,000 × g, 4°C, 10 minutes) again to obtain an immobilized enzyme.

The immobilized enzyme was suspended in 48 parts by mass of 0.1 M phosphate buffer (pH: 7.0), to which 1 part by mass of (R)-3-hydroxyoctanoyl CoA (prepared in accordance with the process described in Eur. J. Biochem., 250, 432-439 (1997)) and 0.1 parts by mass of bovine serum albumin (product of Sigma Co.) were added, and the mixture was gently shaken at 30C° for 2 hours.

A red microencapsulated pigment formed was recovered by centrifugation (10,000 × g, 4°C, 10 minutes) and vacuum-dried, and 10 parts by mass of a polyester-melamine resin (80:20 (mass ratio)) and 3 parts by mass of methyl cellosolve were added to 2 parts by mass of the microencapsulated pigment to knead and disperse the pigment by a three-roll mill. This dispersion was provided as a red coloring composition.

The identification of a PHA monomer unit of the microencapsulated pigment recovered previously was performed in the same manner as in EXAMPLE 1. As a result, it was identified that the PHA is a PHA derived from 3-hydroxyoctanoic acid.

Further, the molecular weight of the PHA was evaluated by gel permeation chromatography in the same manner as in EXAMPLE 1. As a result, Mn was found to be 36,000.

The volume average particle diameter of the pigment before and after the microcapsulation was measured in the same manner as in EXAMPLE 1. As a result, it was found that the particle diameter before the microcapsulation was 0.176 µm, while the particle diameter after the microcapsulation was 0.191 µm, which is considered to be attributable to the fact that the pigment was covered with PHA.

With respect to a green pigment (C.I. Pigment Green 36) and a blue pigment (C.I. Pigment Blue 60) in place of the red pigment in the above-described process, microencapsulated pigments were prepared similarly, and the microencapsulated pigments were respectively dispersed in the photosensitive polyamide resin to provide green and blue coloring compositions.

The red, green and blue coloring compositions were used to obtain a color filter in the form of a stripe of R, G and B by an intaglio offset printing method.

### COMPARATIVE EXAMPLE 4:

To 2 parts by mass of a red pigment (C.I. Pigment Red 168), were added 10 parts by mass of a polyester-melamine resin (80:20 (mass ratio)) and 3 parts by mass of butyl cellosolve. The pigment was kneaded and dispersed by means of a three-roll mill. This dispersion was provided as a red coloring composition. Similarly, a green coloring composition and a blue coloring composition were respectively prepared in the same manner as in the red coloring composition except that a green pigment (C.I. Pigment Green 36) and a blue pigment (C.I. Pigment Blue 60) were used respectively in place of the red pigment.

A color filter in the form of a stripe of R, G and B was then obtained in the same manner as in EXAMPLE 4 except that the respective coloring compositions according to Comparative Example 4 were used.

### <Evaluation 4>

The volume average particle diameters and the volume average particle diameters after stored at room temperature for 30 days of the microencapsulated pigments in the respective red, green and blue coloring compositions of EXAMPLE 4 and COMPARATIVE EXAMPLE 4 were measured in the same manner as in EXAMPLE 1 and COMPARATIVE EXAMPLE 1 and shown in Table 9.

**Table 9**

| | Ex.4 (R/G/B) | Comp. Ex.4 (R/G/B) |
|---|---|---|
| Vol. avg. particle dia. (before storage) | 0.191/0.127/0.158 | 0.181/0.153/0.119 |
| Vol. avg. particle dia. (after storage) | 0.201/0.151/0.147 | 0.343/0.286/0.327 |

As a result, it was revealed that the volume average particle diameter of the microencapsulated pigment in each coloring composition of EXAMPLE 4 exhibits almost the same value before and after the storage, and the microencapsulated pigment is excellent in shelf stability. On the other hand, the volume average particle diameter after the storage of the microencapsulated pigment in each coloring composition of COMPARATIVE EXAMPLE 4 was great compared with the volume average particle diameter of the pigment before the storage, and so the shelf stability was not satisfactory to the microencapsulated pigment.

With respect to the color filters of EXAMPLE 4 and COMPARATIVE EXAMPLE 4, the same evaluation as in EXAMPLE 1 was made, and the results thereof are collected in Table 10.

**Table 10**

| | Ex.4 (R/G/B) | Come. Ex.4 (R/G/B) |
|---|---|---|
| Unevenness due to aggregation | Not occurred Not occurred | Occurred Occurred |
| Adhesion | Good | Good |
| Transparency | 75/76/73, good | 65/63/65, Somewhat poor |
| Coloring property | Good | somewhat poor |
| Contrast | 1021, good | 813, somewhat poor |

As a result, it was revealed that the color filter according to EXAMPLE 4 is free of unevenness due to aggregation and exhibits good results in all the adhesion, transparency, coloring property and contrast and hence has excellent properties. On the other hand, these properties were not satisfactory to the color filter of COMPARATIVE EXAMPLE 4.

### EXAMPLE 5:

### Production 2 of color filter by ink-jet system:

A red pigment (C.I. Pigment Red 168) was dispersed by a sand mill in the same manner as in EXAMPLE 2 so as to give a particle diameter of 0.1 µm or smaller. To 1 part by mass of this dispersion were added 10 parts by mass of a crude PHA synthase (10 U/ml) derived from an H45 strain and 39 parts by mass of PBS. The mixture was gently shaken at 30°C for 30 minutes to cause the PHA synthase to be adsorbed on the surface of the red pigment. This dispersion was centrifuged (10,000 × g, 4°C, 10 minutes), the resultant precipitate was suspended in PBS, and the suspension was centrifuged (10,000 × g, 4°C, 10 minutes) again to obtain an immobilized enzyme.

The immobilized enzyme was suspended in 48 parts by mass of 0.1 M phosphate buffer (pH: 7.0), to which 1 part by mass of (R)-3-hydroxyoctanoyl CoA (prepared in accordance with the process described in Eur. J. Biochem., 250, 432-439 (1997)) and 0.1 parts by mass of bovine serum albumin (product of Sigma Co.) were added, and the mixture was gently shaken at 30°C for 1.5 hours. To this reaction mixture, were added 1 part by mass of (R)-3-hydroxypimelyl CoA (prepared in accordance with the process described in J. Bacteriol., 182, 2753-2760 (2000)) and 0.1 parts by mass of bovine serum albumin (product of Sigma Co.), and the mixture was gently shaken at 30°C for 30 minutes.

After a red microencapsulated pigment formed was recovered by centrifugation (10,000 × g, 4°C, 10 minutes) and dried, the mass of the polymer formed on the surface of the microencapsulated pigment was measured by a time of flight secondary ion mass spectrometer (TOF-SIMS IV, manufactured by CAMECA). From the resultant mass spectrum, it was found that the surface of the microencapsulated pigment is formed by a copolymer (molar ratio 9:1) of polyhydroxypimelate and polyhydroxy-octanoate. After the surface of the microencapsulated pigment was slightly scraped by ion sputtering, a mass spectrum was measured likewise by the TOF-SIMS. As a result, it was identified that the surface was changed to a homopolymer of polyhydroxyoctanoate. It was thereby found that the microencapsulated pigment according to this example is a microencapsulated pigment that the pigment is covered with polyhydroxyoctanoate, and polyhydroxypimelate is further covered thereon, a microcapsule is formed with the hydrophilic PHA only at a skin layer.

Further, the average molecular weight of the PHA making up the microencapsulated pigment was evaluated by gel permeation chromatography in the same manner as in EXAMPLE 1. As a result, Mn was found to be 49,000.

The volume average particle diameter of the pigment before and after the microcapsulation was measured in the same manner as in EXAMPLE 1. As a result, it was found that the particle diameter before the microcapsulation was 0.103 µm, while the particle diameter after the microcapsulation was 0.122 µm, which is considered to be attributable to the fact that the pigment was covered with PHA.

To 4 parts by mass of the microencapsulated pigment, were added 10 parts by mass of ethylene glycol, 15 parts by mass of diethylene glycol, 0.6 parts by mass of a monoethanolamine salt of a styrene-maleic acid copolymer (average molecular weight: 30,000, acid value: 300) and 70.4 parts by mass of ion-exchanged water, and the pigment was dispersed by stirring (80 rpm) by a stirring blade. This dispersion was provided as a red coloring composition.

With respect to a green pigment (C.I. Pigment Green 36) and a blue pigment (C.I. Pigment Blue 60) in place of the red pigment in the above-described process, microencapsulated pigments were prepared similarly, and the microencapsulated pigments were respectively dispersed in ion-exchanged water to provide green and blue coloring compositions.

Ink dots composed of three colors of R, G and B were formed with the respective coloring compositions on a glass substrate by means of an ink-jet recording apparatus. The ink dots were dried for 20 minutes at 80°C and further for 1 hour at 180°C to form a colored layer. The thickness of the resultant colored layer was 0.4 µm. A thermosetting resin ("Hicoat LC-2001", product of Sanyo Chemical Industries, Ltd.) was applied as a transparent protective film by a spin coater onto the fine pigment particle layer of three colors of R, G and B so as to give a dry coating thickness of 0.5 µm. The thus-formed film was prebaked at 120°C for 30 minutes and then fully baked at 200°C for 30 minutes to form a protective layer, thereby obtaining a color filter according to the present invention.

### <Evaluation 5>

The volume average particle diameters and the volume average particle diameters after stored at room temperature for 30 days of the microencapsulated pigments in the respective red, green and blue coloring compositions of EXAMPLE 5 were measured in the same manner as in EXAMPLE 1 and COMPARATIVE EXAMPLE 1 and shown in Table 11.

**Table 11**

| | Ex. 5 (R/G/B) |
|---|---|
| Vol. avg. particle dia. (before storage) | 0.122/0.126/0.129 |
| Vol. avg. particle dia. (after storage) | 0.125/0.131/0.132 |

As a result, it was revealed that the microencapsulated pigment exhibits almost the same change in volume average particle diameter as in EXAMPLE 2, and is excellent in shelf stability.

With respect to the color filters of EXAMPLE 5, the same evaluation as in EXAMPLE 1 was made, and the results thereof are collected in Table 12.

**Table 12**

| | Ex. 5 (R/G/B) |
|---|---|
| Unevenness due to aggregation | Not occurred |
| Adhesion | Good |
| Transparency | 89/78/81, good |
| Coloring property | Good |
| Contrast | 1017, good |

As a result, it was revealed that the color filter is free of unevenness due to aggregation and exhibits good results in all the adhesion, transparency, coloring property and contrast and hence has excellent properties like EXAMPLE 2.

Further, with respect to the drying treatment strength required for the fixing of the microencapsulated pigment to the glass substrate by an ink-jet recording apparatus, evaluation by weight change was made. For the sake of comparison, the drying time strength in the case where the coloring composition of EXAMPLE 2 was used was also evaluated likewise. As a result, in the case where the coloring composition of EXAMPLE 2, in which all the shell of the microcapsule was formed by the hydrophilic PHA, sufficient drying was not achieved by a treatment at 80°C for 20 minutes. On the other hand, in the case of this example where only the skin layer of the shell is formed by the hydrophilic PHA, sufficient drying was achieved by the treatment at 80°C for 20 minutes, and the colored layer was fixed. From this fact, it was found that the production process is saved according to the structure of the PHA of the microencapsulated pigment.

### EXAMPLE 6:

### Preparation 1 of microencapsulated pigment using inorganic pigment:

Red iron oxide as an inorganic pigment was dispersed by a sand mill so as to give a particle diameter of 0.3 µm or smaller. To 1 part by mass of this dispersion were added 10 parts by mass of a crude PHA synthase (10 U/ml) derived from a P161 strain and 39 parts by mass of PBS. The mixture was gently shaken at 30°C for 30 minutes to cause the PHA synthase to be adsorbed on the surface of the pigment. This dispersion was centrifuged (10,000 × g, 4°C, 10 minutes), the resultant precipitate was suspended in PBS, and the suspension was centrifuged (10,000 × g, 4°C, 10 minutes) again to obtain an immobilized enzyme.

The immobilized enzyme was suspended in 48 parts by mass of 0.1 M phosphate buffer (pH: 7.0), to which 1 part by mass of (R)-3-hydroxyoctanoyl CoA (prepared in accordance with the process described in Eur. J. Biochem., 250, 432-439 (1997)) and 0.1 parts by mass of bovine serum albumin (product of Sigma Co.) were added, and the mixture was gently shaken at 30°C for 2 hours.

After a red microencapsulated pigment formed was recovered by centrifugation (10,000 × g, 4°C, 10 minutes) and vacuum-dried, the mass of the polymer formed on the surface of the microencapsulated pigment was measured by a time of flight secondary ion mass spectrometer (TOF-SIMS IV, manufactured by CAMECA). From the resultant mass spectrum, it was found that the surface of the microencapsulated pigment is formed by a homopolymer of polyhydroxyoctanoate. Although a mass spectrum was measured likewise by the TOF-SIMS while scraping the surface of the microencapsulated pigment little by little by ion sputtering, any portion was formed by the homopolymer of polyhydroxyoctanoate. It was thereby found that the microencapsulated pigment of this example is a microencapsulated pigment that the hydrophilic pigment is covered directly with hydrophobic polyhydroxyoctanoate.

Further, the molecular weight of the PHA was evaluated by gel permeation chromatography in the same manner as in EXAMPLE 1. As a result, Mn was found to be 38,000.

The volume average particle diameter of the pigment before and after the microcapsulation was measured in the same manner as in EXAMPLE 1. As a result, it was found that the particle diameter before the microcapsulation was 0.242 µm, while the particle diameter after the microcapsulation was 0.265 µm, which is considered to be attributable to the fact that the pigment was covered with PHA.

### EXAMPLE 7:

### Preparation 2 of microencapsulated pigment using inorganic pigment:

Red iron oxide as an inorganic pigment was dispersed by a sand mill so as to give a particle diameter of 0.3 µm or smaller. To 1 part by mass of this dispersion were added 10 parts by mass of a crude PHA synthase (10 U/ml) derived from a P161 strain and 39 parts by mass of PBS. The mixture was gently shaken at 30°C for 30 minutes to cause the PHA synthase to be adsorbed on the surface of the pigment. This dispersion was centrifuged (10,000 × g, 4°C, 10 minutes), the resultant precipitate was suspended in PBS, and the suspension was centrifuged (10,000 × g, 4°C, 10 minutes) again to obtain an immobilized enzyme.

The immobilized enzyme was suspended in 48 parts by mass of 0.1 M phosphate buffer (pH: 7.0), to which 1 part by mass of (R)-3-hydroxypimelyl CoA (prepared in accordance with the process described in J. Bacteriol., 182, 2753-2760 (2000)) and 0.1 parts by mass of bovine serum albumin (product of Sigma Co.) were added, and the mixture was gently shaken at 30°C for 10 minutes.

While gently shaking at 30°C, 0.1 M phosphate buffer (pH 7.0) containing 1 part by mass of (R)-3-hydroxyoctanoyl CoA (prepared in accordance with the process described in Eur. J. Biochem., 250, 432-439 (1997)) and 0.1 parts by mass of bovine serum albumin (product of Sigma Co.) was added with a feeding rate of 1 part by mass per minute by means of a microtube pump (MP-3N, manufactured by Tokyo Rika Kikai K.K.).

After reacting for 1 hour and 50 minutes, a red microencapsulated pigment formed was recovered by centrifugation (10,000 × g, 4°C, 10 minutes) and dried. Thereafter, the mass of the polymer formed on the surface of the microencapsulated pigment was measured by a time of flight secondary ion mass spectrometer (TOF-SIMS IV, manufactured by CAMECA). From the resultant mass spectrum, it was found that the surface of the microencapsulated pigment is formed by a copolymer (molar ratio 15:1) of polyhydroxyoctanoate and polyhydroxypimelate. When a mass spectrum was measured likewise by the TOF-SIMS while scraping the surface of the microencapsulated pigment little by little by ion sputtering, it was identified that the proportion of polyhydroxyoctanoate in the copolymer is gradually reduced, and finally it is changed to a homopolymer of polyhydroxypimelate. It was thereby found that the microencapsulated pigment of this example is a microencapsulated pigment that the hydrophilic pigment is covered with polyhydroxypimelate having a hydrophilic functional group, and a copolymer of polyhydroxyoctanoate and polyhydroxypimelate is covered thereon in such a manner that the compositional ratio of the hydrophobic polyhydroxyoctanoate increases as coming nearer to the skin layer.

Further, the molecular weight of the PHA was evaluated by gel permeation chromatography in the same manner as in EXAMPLE 1. As a result, Mn was found to be 39,000.

The volume average particle diameter of the pigment before and after the microcapsulation was measured in the same manner as in EXAMPLE 1. As a result, it was found that the particle diameter before the microcapsulation was 0.236 µm, while the particle diameter after the microcapsulation was 0.258 µm, which is considered to be attributable to the fact that the pigment was covered with PHA.

### EXAMPLE 8:

### Evaluation of microencapsulated pigments of EXAMPLE 6 and EXAMPLE 7:

Four parts by mass of the microencapsulated pigment produced in EXAMPLES 6 and 7 and 4 parts by mass of red iron oxide as COMPARATIVE EXAMPLE 5, which had been dispersed in a sand mill so as to give a particle diameter of 0.3 µm or smaller, were each added 10 parts by mass of ethylene glycol, 15 parts by mass of diethylene glycol, 0.6 parts by mass of a monoethanolamine salt of a styrene-maleic acid copolymer (average molecular weight: 30,000, acid value: 300) and 70.4 parts by mass of ion-exchanged water, and the pigment was dispersed by stirring (80 rpm) by a stirring blade. This dispersion was provided as a red coloring composition. A color filter composed of R alone was obtained in a similar manner to Example 2.

With respect to the color filters of EXAMPLE 6, EXAMPLE 7 and COMPARATIVE EXAMPLE 5, the same evaluation as in EXAMPLE 1 was made, and the results thereof are collected in Table 13.

**Table 13**

| | EXAMPLE 6 | EXAMPLE 7 | COMPARATIVE EXAMPLE 5 |
|---|---|---|---|
| Unevenness due to aggregation | Not occurred | Not occurred | Somewhat occurred occurred |
| Adhesion | Good | Good | Good |
| Transparency | 79, good | 77, good | 62, poor |
| Coloring property | Good | Good | Somewhat poor |
| Contrast | 1017, good | 1002, good | 899, somewhat poor |

As a result, it was revealed that the color filters according to EXAMPLES 6 and 7 are free of unevenness due to aggregation and exhibit good results in all the adhesion, transparency, coloring property and contrast and hence have excellent properties. On the other hand, these properties were not satisfactory to the color filter of COMPARATIVE EXAMPLE 5.

With respect to the case where the red coloring compositions of EXAMPLES 6 and 7 and COMPARATIVE EXAMPLE 5 were used as they are and the case where they are vigorously stirred by a vortex mixer, the volume average particle diameters and the volume average particle diameters after stored at room temperature for 30 days of the microencapsulated pigments in the red coloring compositions were measured in the same manner as in EXAMPLE 1 and shown in Table 14 in the case where stirring was not conducted and in Table 15 in the case where stirring was conducted.

**Table 14**

| | Ex. 6 | Ex. 7 | Comp. Ex. 5 |
|---|---|---|---|
| Vol. avg. particle dia. (before storage) | 0.265 | 0.258 | 0.237 |
| Vol. avg. particle dia. (after storage) | 0.267 | 0.262 | 0.621 |
| (µm) | | | |

**Table 15**

| | Ex. 6 | Ex. 7 | Comp. Ex. 5 |
|---|---|---|---|
| Vol. avg. particle dia. (before storage) | 0.249 | 0.256 | 0.236 |
| Vol. avg. particle dia. (after storage) | 0.334 | 0.259 | 0.658 |
| (µm) | | | |

As a result, it was found that in the case where stirring was not conducted, the volume average particle diameters of the microencapsulated pigments of EXAMPLES 6 and 7 exhibit almost the same values before and after the storage, and the microencapsulated pigments are excellent in shelf stability. On the other hand, the volume average particle diameter after the storage of the pigment of COMPARATIVE EXAMPLE 5 greatly increases compared with the volume average particle diameter of the pigment before the storage, and so the shelf stability was not satisfactory to the microencapsulated pigment

In the case where stirring was conducted, the volume average particle diameter of the microencapsulated pigments of EXAMPLE 7 exhibited almost the same value before and after the storage, but the volume average particle diameter after the storage of the microencapsulated pigments of EXAMPLE 6 somewhat increased compared with the volume average particle diameter of the pigment before the storage. The pigment of the Comparative Example exhibited similar results to the case where stirring was not conducted.

The microencapsulated pigments after the storage of EXAMPLES 6 and 7 in the case where stirring was conducted were observed through an optical microscope. As a result, individual particles were observed being well dispersed in EXAMPLE 7. However, in EXAMPLE 6, aggregation of the particles was observed, and the covering PHA was observed being separated in a part.

From the above fact, it was found that an inorganic pigment is covered with a PHA having a hydrophilic functional group high in affinity for the inorganic pigment, and a copolymer of a hydrophilic PHA monomer unit and a hydrophobic PHA monomer unit is covered thereon in such a manner that the compositional ratio of the hydrophobic PHA monomer unit increases as coming nearer to the skin layer, whereby a hydrophobic PHA capsule capable of more stably encapsulating the inorganic pigment can be formed.

### EXAMPLE 9:

### Production of color filter by electrodeposition:

A red pigment (C.I. Pigment Red 168) was dispersed by a sand mill so as to give a particle diameter of 0.1 µm or smaller. To 1 part by mass of this dispersion were added 10 parts by mass of a solution (10 U/ml) of a PHA synthase derived from a pYN2-C1 recombinant strain and 39 parts by mass of PBS. The mixture was gently shaken at 30°C for 30 minutes to cause the PHA synthase to be adsorbed on the surface of the pigment. This dispersion was centrifuged (10,000 × g, 4°C, 10 minutes), the resultant precipitate was suspended in PBS, and the suspension was centrifuged (10,000 × g, 4°C, 10 minutes) again to obtain an immobilized enzyme.

The immobilized enzyme was suspended in 48 parts by mass of 0.1 M phosphate buffer (pH: 7.0), to which 0.8 parts by mass of (R)-3-hydroxypimelyl CoA, 0.2 parts by mass of (R,S)-3-hydroxy-7,8-epoxyoctanoyl CoA and 0.1 parts by mass of bovine serum albumin (product of Sigma Co.) were added, and the mixture was gently shaken at 30°C for 2 hours.

After a part of the microencapsulated pigment formed was recovered by centrifugation (10,000 × g, 4°C, 10 minutes) and vacuum-dried, it was suspended in chloroform, and the suspension was stirred at 60°C for 20 hours to extract PHA forming a shell.

This extract was subjected to ¹H-NMR analysis (instrument used: FT-NMR; Bruker DPX400, measurement nuclide: ¹H, solvent used: deuterochloroform (containing TMS)). The unit % of each side chain unit calculated therefrom was 77% for 3-hydroxypimelic acid unit and 23% for 3-hydroxy-7,8-epoxyoctanoic acid unit.

The volume average particle diameter of the pigment before and after microcapsulation was measured by means of a laser Doppler system particle size distribution measuring machine (UPA-150, manufactured by Nikkiso Co., Ltd.). As a result, it was found that the particle diameter before the microcapsulation was 0.103 µm, while the particle diameter after the microcapsulation was 0.113 µm, which is considered to be attributable to the fact that the pigment was covered with PHA.

A microencapsulated pigment formed was recovered by centrifugation (10,000 × g, 4°C, 10 minutes), and 99 parts by mass of ion-exchanged water were added to 1 part by mass of the microencapsulated pigment to disperse the pigment by stirring (80 rpm) by a stirring blade. In this dispersion, was dissolved 0.5 parts by mass of hexamethylenediamine as a crosslinking agent. After confirming the dissolution, water was removed by lyophilization (this is referred to as Particle 1). Further, Particle 1 was reacted at 70°C for 12 hours (this is referred to as Particle 2).

The above Particles 1 and 2 were suspended in chloroform, and the suspension was stirred at 60°C for 20 hours to extract PHA forming a shell. Chloroform was removed by vacuum drying, and measurement was performed by a differential scanning calorimeter (DSC; manufactured by Perkin Elmer Co., Pyris 1, heating rate: 10°C/min). As a result, a clear exothermic peak was observed at about 90°C in Particle 1. This indicates that a reaction of an epoxy group in the polymer with hexamethylenediamine takes place, and crosslinking between polymers proceeds. On the other hand, a clear heat flow was not observed in Particle 2. This indicates that the crosslinking reaction was almost completed.

With respect to the same samples, infrared absorption was determined (FT-IR; manufactured by Perkin Elmer Co., 1720X). As a result, peaks attributable to amine (about 3340 cm-1) and epoxy (about 822 cm-1), which were observed in Particle 1, disappear in Particle 2.

From the above results, it was revealed that a crosslinked polymer is obtained by reacting a PHA having an epoxy unit at a side chain with hexamethylenediamine.

On the other hand, samples were prepared in the same manner as described above except that (R,S)-3-hydroxyoctanoyl CoA was used in place of the (R,S)-3-hydroxy-7,8-epoxyoctanoyl CoA, and evaluated. However, any evaluation results that the crosslinking between the polymers is clearly indicated as described above were not yielded.

To 1 parts by mass of the above Particle 2, were added 99 parts by mass of ion-exchanged water, and the particles were dispersed by stirring (80 rpm) by a stirring blade. This dispersion was centrifuged (10,000 × g, 4°C, 10 minutes) to recover a microencapsulated pigment of Particle 2. To 1 parts by mass of the microencapsulated pigment, were added 99 parts by mass of ion-exchanged water, and the pigment was dispersed by stirring (80 rpm) by a stirring blade. This dispersion was provided as a red coloring composition.

With respect to a green pigment (C.I. Pigment Green 36) and a blue pigment (C.I. Pigment Blue 60) in place of the red pigment in the above-described process, microencapsulated pigments were prepared similarly, and the microencapsulated pigments were respectively dispersed in ion-exchanged water to provide green and blue coloring compositions.

A transparent electrode substrate obtained by patterning with ITO on a glass substrate, and a stainless steel substrate were immersed in the red coloring composition, a portion of the transparent electrode substrate, which was to be colored red, was connected to a positive pole, and the stainless steel substrate was provided as a negative pole to energize, thereby deposit a coating film on the transparent electrode. The electrodeposition conditions were as follows:
Voltage applied: 30 V,
Coating temperature: 20°C, and
Deposition time: 20 seconds.

After completion of the electrodeposition, the glass substrate was washed with water, dried and then baked at 150°C to obtain a red color filter. Similarly, this process was repeated respectively using the green and blue coloring compositions to obtain a color filter in the form of a stripe of R, G and B.

### EXAMPLE 10:

### Evaluation of microencapsulated pigment of EXAMPLE 9:

The volume average particle diameters and the volume average particle diameters after stored at room temperature for 30 days of the microencapsulated pigments in the respective red, green and blue coloring compositions of EXAMPLE 9 were measured in the same manner as in EXAMPLE 1 and COMPARATIVE EXAMPLE 1. As a result, it was found that the volume average particle diameter of the microencapsulated pigment in the coloring composition exhibits almost the same values before and after the storage, and the microencapsulated pigments are excellent in shelf stability compared with the results of COMPARATIVE EXAMPLE 1.

Hexane, methanol or ethyl ether was used as a dispersion medium used in the dispersion in EXAMPLE 9 in place of ion-exchanged water to prepare a coloring composition, and it was stored for 30 days at room temperature. As a result, no problem was caused on the shelf stability of the microencapsulated pigment, and it was found that the pigments can be used even in an oily medium without problems.

The above-described microencapsulated pigments were good in mechanical strength and heat resistance.

With respect to the color filters of EXAMPLE 9, the same evaluation as in EXAMPLE 1 and COMPARATIVE EXAMPLE 1 was made. As a result, it was revealed that the color filter is free of unevenness due to aggregation and exhibits good results in all the adhesion, transparency, coloring property and contrast and hence has excellent properties compared with COMPARATIVE EXAMPLE 1.

### EXAMPLE 11:

### Production of color filter by electrodeposition:

A PHA synthase derived from a pYN2-C1 recombinant strain was immobilized on surfaces of pigments in the same manner as in EXAMPLE 9 to obtain immobilized enzymes. One part by mass of each of the immobilized enzymes was suspended in 48 parts by mass of 0.1 M phosphate buffer (pH: 7.0), to which 0.8 parts by mass of (R)-3-hydroxypimelyl CoA, 0.2 parts by mass of (R,S)-3-hydroxy-7,8-epoxyoctanoyl CoA and 0.1 parts by mass of bovine serum albumin (product of Sigma Co.) were added, and the mixture was gently shaken at 30°C for 2 hours.

A microencapsulated pigment formed was recovered by centrifugation (10,000 × g, 4°C, 10 minutes), and 1 part by mass of the microencapsulated pigment was suspended in 100 parts by mass of purified water. After the suspension was centrifuged (10,000 × g, 4°C, 10 minutes) again to recover the microencapsulated pigment, water was removed by lyophilization. To 1 part by mass of the microencapsulated pigment were added 10 parts by mass of terminal amino-modified polysiloxane (modified silicone oil TSF4700, product of Toshiba Silicone Co., Ltd.) to conduct a reaction at 70°C for 2 hours. The reaction mixture was suspended in methanol, and the suspension was centrifuged (10,000 × g, 4°C, 20 minutes). This process was performed repeatedly, whereby the pigment was washed and dried to obtain red, green and blue coloring compositions having a graft chain of polysiloxane.

The microencapsulated pigments described above were used to prepare coloring compositions in the same manner as in EXAMPLE 9. These coloring compositions were used to obtain a color filter in the form of a stripe of R, G and B in the same manner as in EXAMPLE 9.

### EXAMPLE 12:

### Evaluation of microencapsulated pigment of EXAMPLE 11:

The volume average particle diameters and the volume average particle diameters after stored at room temperature for 30 days of the microencapsulated pigments in the respective red, green and blue coloring compositions of EXAMPLE 11 were measured in the same manner as in EXAMPLE 1 and COMPARATIVE EXAMPLE 1. As a result, it was found that the volume average particle diameter of the microencapsulated pigment in the coloring composition exhibits almost the same values before and after the storage, and the microencapsulated pigments are excellent in shelf stability compared with the results of COMPARATIVE EXAMPLE 1.

The microencapsulated pigments were good in mechanical strength, water repellency, weather resistance and heat resistance.

With respect to the color filters of EXAMPLE 11, the same evaluation as in EXAMPLE 1 was made. As a result, it was revealed that the color filter is free of unevenness due to aggregation and exhibits good results in all the adhesion, transparency, coloring property and contrast and hence has excellent properties compared with COMPARATIVE EXAMPLE 1.

The coloring compositions for color filters containing the microencapsulated pigment according to the present invention can be used in both hydrophilic and lipophilic coloring compositions. In particular, the hydrophilic coloring composition has features that the dispersed state of a pigment is stable without using any surfactant, and so aggregation is hard to occur, images good in transparency and coloring property and excellent in contrast can be formed since the microencapsulated pigment is fine, and the pigment density is high, and images formed are excellent in water fastness and adhesion to a substrate because the use of surfactants is reduced, and also has a merit that the production process thereof is simple and convenient.

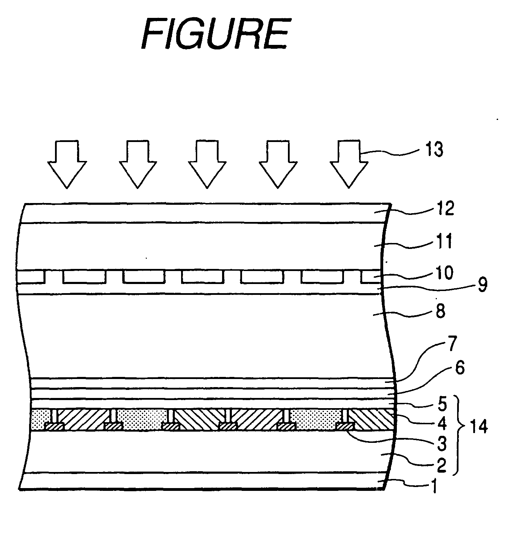

## Claims

1. A coloring composition for color filters, comprising a coloring material obtained by coating at least part of surfaces of pigment particles with polyhydroxyalkanoate, and a dispersion medium for the coloring material,
wherein the polyhydroxyalkanoate is a polyhydroxyalkanoate having at least one monomer unit selected from the group consisting of the monomer units represented by the formulae [1] to [10]: 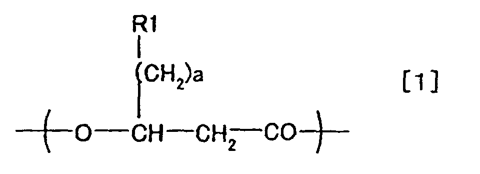 wherein the monomer unit is at least one selected from the group consisting of the monomer units in which the combination of R1 and "a" is any of the following combinations:
a monomer unit in which R1 is a hydrogen (H) atom, and "a" is any one integer selected from 0 to 10;
a monomer unit in which R1 is a halogen atom, and "a" is any one integer selected from 1 to 10;
a monomer unit in which R1 is a carboxyl group or a salt thereof, and "a" is any one integer selected from 1 to 10;
a monomer unit in which R1 is a chromophoric group, and "a" is any one integer selected from 1 to 10; and
a monomer unit in which R1 is 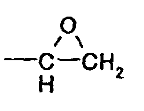
and "a" is any one integer selected from 1 to 7; 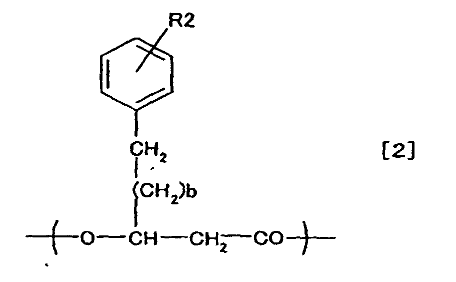
wherein "b" is any one integer selected from 0 to 7, and R2 is any one selected from the group consisting of a hydrogen (H) atom, a halogen atom, -CN, -NO₂, -CF₃, -C₂F₅ and -C₃F₇; 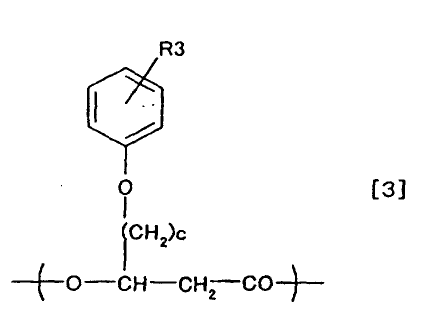 wherein "c" is any one integer selected from 1 to 8, and R3 is any one selected from the group consisting of a hydrogen (H) atom, a halogen atom, -CN, -NO₂, -CF₃, -C₂F₅ and -C₃F₇; 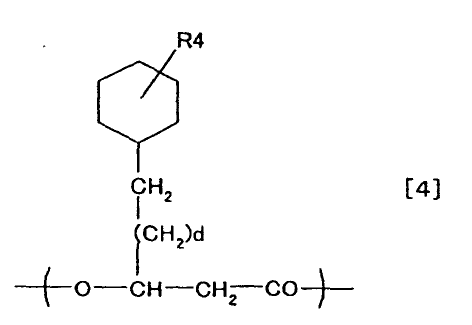 wherein "d" is any one integer selected from 0 to 7, and R4 is any one selected from the group consisting of a hydrogen (H) atom, a halogen atom, -CN, -NO₂, -CF₃, -C₂F₅ and -C₃F₇; 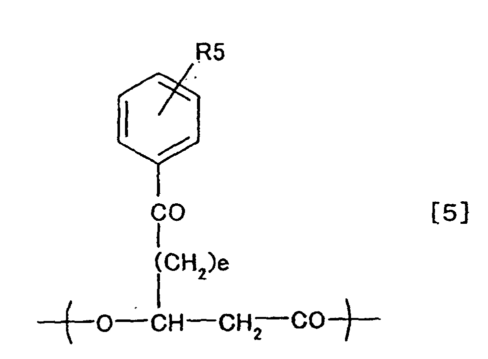 wherein "e" is any one integer selected from 1 to 8, and R5 is any one selected from the group consisting of a hydrogen (H) atom, a halogen atom, -CN, -NO₂, -CF₃, -C₂F₅, -C₃F₇ -CH₃, -C₂H₅ and -C₃H₇; 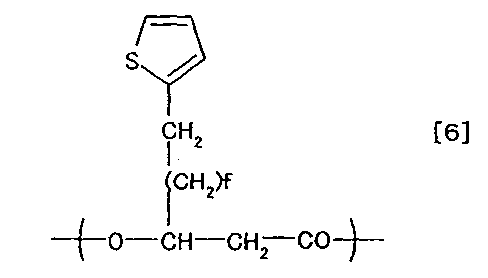 wherein "f" is any one integer selected from 0 to 7; 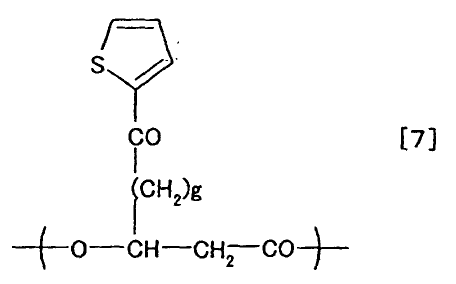 wherein "g" is any one integer selected from 1 to 8; 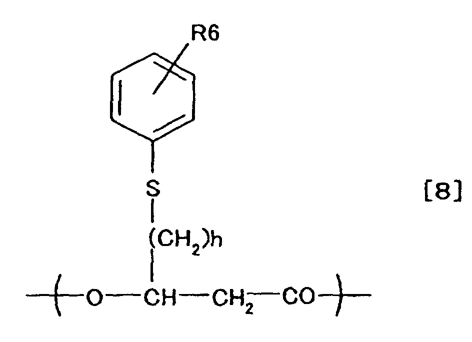 wherein "h" is any one integer selected from 1 to 7, and R6 is any one selected from the group consisting of a hydrogen (H) atom, a halogen atom, -CN, -NO₂, -COOR', -SO₂R", -CH₃, -C₂H₅, -C₃H₇, -CH(CH₃)₂ and -C(CH₃)₃, in which R' is any of a hydrogen (H) atom, Na, K, -CH₃ and -C₂H₅, and R" is any of -OH, -ONa, -OK, a halogen atom, -OCH₃ and -OC₂H₅; 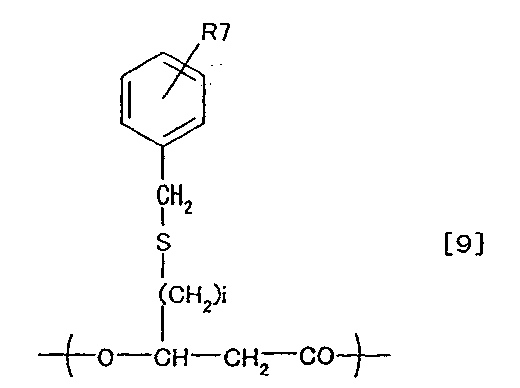 wherein "i" is any one integer selected from 1 to 7, and R7 is any one selected from the group consisting of a hydrogen (H) atom, a halogen atom, -CN, -NO₂, -COOR' and -SO₂R", in which R' is any of a hydrogen (H) atom, Na, K, -CH₃ and -C₂H₅, and R" is any of -OH, -ONa, -OK, a halogen atom, -OCH₃ and -OC₂H₅; and 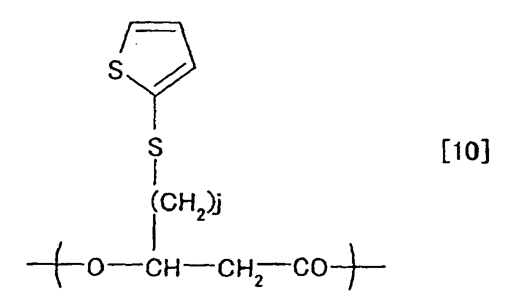 wherein "j" is any one integer selected from 1 to 9.

2. The coloring composition according to Claim 1, wherein the polyhydroxyalkanoate has a hydrophilic functional group.

3. The coloring composition according to Claim 2, wherein the polyhydroxyalkanoate has an anionic functional group.

4. The coloring composition according to Claim 3, wherein the polyhydroxyalkanoate has a carboxyl group.

5. The coloring composition according to Claim 4, wherein the carboxyl group is introduced by at least one monomer unit selected from the group consisting of the monomer units represented by the formula 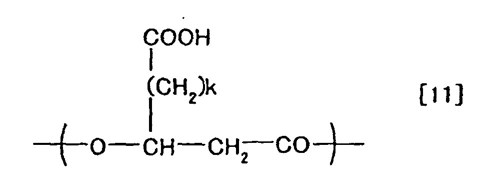 wherein "k" is any one integer selected from 1 to 10.

6. The coloring composition according to Claim 1, wherein the monomer unit composition of the polyhydroxyalkanoate is changed in a direction from the inside of the coloring material toward the outside.

7. The coloring composition according to Claim 1, wherein at least a part of the polyhydroxyalkanoate is a chemically modified polyhydroxyalkanoate.

8. The coloring composition according to Claim 7, wherein the chemically modified polyhydroxyalkanoate is a polyhydroxyalkanoate having at least a graft chain.

9. The coloring composition according to Claim 8, wherein the graft chain is a graft chain by chemical modification of a polyhydroxyalkanoate containing at least a monomer unit having an epoxy group.

10. The coloring composition according to Claim 8, wherein the graft chain is a graft chain of a compound having an amino group.

11. The coloring composition according to Claim 10, wherein the compound having an amino group is a terminal amino-modified compound.

12. The coloring composition according to Claim 11, wherein the terminal amino-modified compound is at least one compound selected from the group consisting of polyvinylamine, polyethyleneimine and terminal amino-modified polysiloxane.

13. The coloring composition according to Claim 7, wherein at least a part of the polyhydroxyalkanoate is a crosslinked polyhydroxyalkanoate.

14. The coloring composition according to Claim 13, wherein the crosslinked polyhydroxyalkanoate is a polyhydroxyalkanoate obtained by crosslinking a polyhydroxyalkanoate containing at least a monomer unit having an epoxy group.

15. The coloring composition according to Claim 13, wherein the crosslinked polyhydroxyalkanoate is a polyhydroxyalkanoate crosslinked by at least one selected from the group consisting of a diamine compound, succinic anhydride, 2-ethyl-4-methylimidazole and electron beam irradiation.

16. The coloring composition according to Claim 15, wherein the diamine compound is hexamethylenediamine.

17. The coloring composition according to any one of Claims 1 to 16, wherein the molecular weight of the polyhydroxyalkanoate is from 1,000 to 10,000,000.

18. The coloring composition according to Claim 17, wherein the molecular weight of the polyhydroxyalkanoate is from 3,000 to 1,000,000.

19. A process for producing a coloring composition for color filters containing a coloring material and a dispersion medium for the coloring material, which comprises the steps of:
performing a synthetic reaction of a polyhydroxyalkanoate using a 3-hydroxyacyl CoA as a substrate in the presence of a polyhydroxyalkanoate-synthesizing enzyme immobilized on the surfaces of pigment particles dispersed in an aqueous medium, thereby coating at least a part of the surfaces of the pigment particles with the polyhydroxyalkanoate to obtain a coloring material, and
dispersing the coloring material in a dispersion medium,
wherein the polyhydroxyalkanoate is a polyhydroxyalkanoate having at least one monomer unit selected from the group consisting of the monomer units represented by the formulae [1] to [10], and its corresponding 3-hydroxyacyl coenzyme A is any one of 3-hydroxyacyl coenzymes A represented by the formulae [12] to [21] 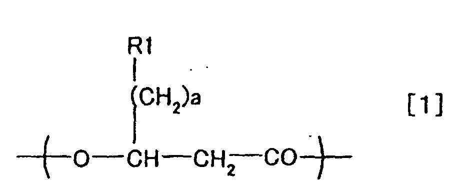 wherein the monomer unit is at least one selected from the group consisting of the monomer units in which the combination of R1 and a is any of the following combinations:
a monomer unit in which R1 is a hydrogen (H) atom, and "a" is any one integer selected from 0 to 10;
a monomer unit in which R1 is a halogen atom, and "a" is any one integer selected from 1 to 10;
a monomer unit in which R1 is a carboxyl group or a salt thereof, and "a" is any one integer selected from 1 to 10;
a monomer unit in which R1 is a chromophoric group, and "a" is any one integer selected from 1 to 10; and
a monomer unit in which R1 is 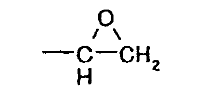
and "a" is any one integer selected from 1 to 7; 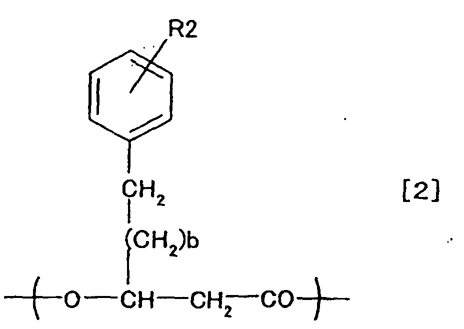
wherein "b" is any one integer selected from 0 to 7, and R2 is any one selected from the group consisting of a hydrogen (H) atom, a halogen atom, -CN, -NO₂, -CF₃, -C₂F₅ and -C₃F₇; 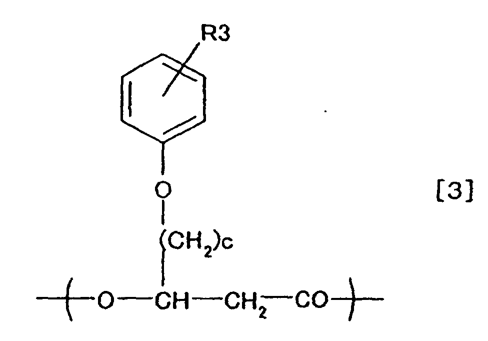 wherein "c" is any one integer selected from 1 to 8, and R3 is any one selected from the group consisting of a hydrogen (H) atom, a halogen atom, -CN, -NO₂, -CF₃, -C₂F₅ and -C₃F₇; 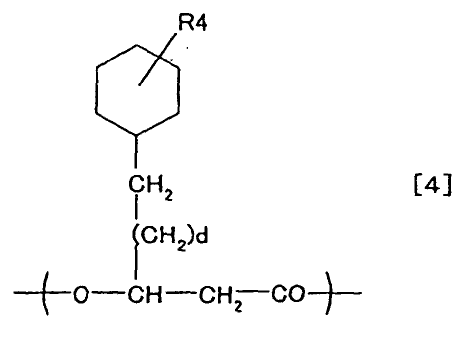 wherein "d" is any one integer selected from 0 to 7, and R4 is any one selected from the group consisting of a hydrogen (H) atom, a halogen atom, -CN, -NO₂, -CF₃, -C₂F₅ and -C₃F₇; 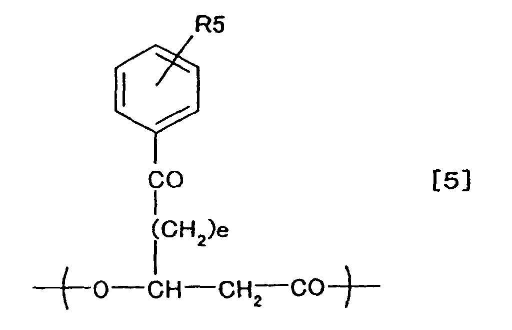 wherein "e" is any one integer selected from 1 to 8, and R5 is any one selected from the group consisting of a hydrogen (H) atom, a halogen atom, -CN, -NO₂, -CF₃, -C₂F₅, -C₃F₇ -CH₃, -C₂H₅ and -C₃H₇; 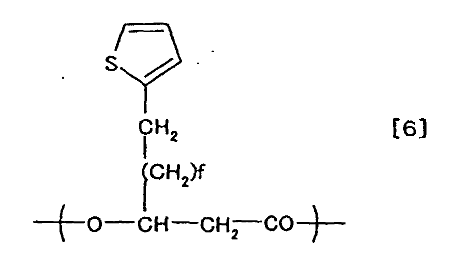 wherein "f" is any one integer selected from 0 to 7; 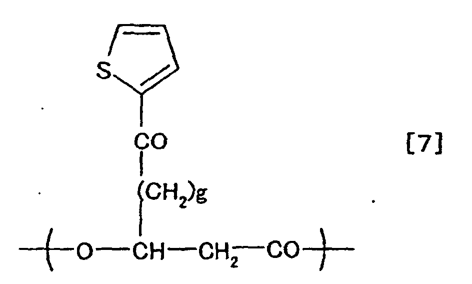 wherein "g" is any one integer selected from 1 to 8; 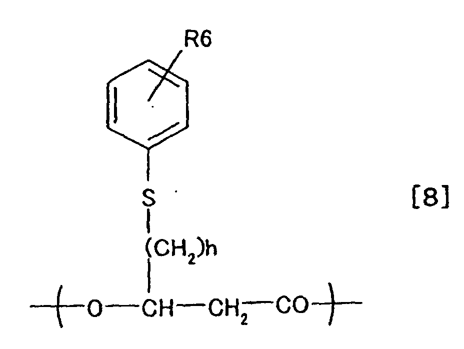 wherein "h" is any one integer selected from 1 to 7, and R6 is any one selected from the group consisting of a hydrogen (H) atom, a halogen atom, -CN, -NO₂, -COOR', -SO₂R", -CH₃, -C₂H₅, -C₃H₇, -CH(CH₃)₂ and -C(CH₃)₃, in which R' is any of a hydrogen (H) atom, Na, K, -CH₃ and -C₂H₅, and R" is any of OH, -ONa, -OK, a halogen atom, -OCH₃ and -OC₂H₅; 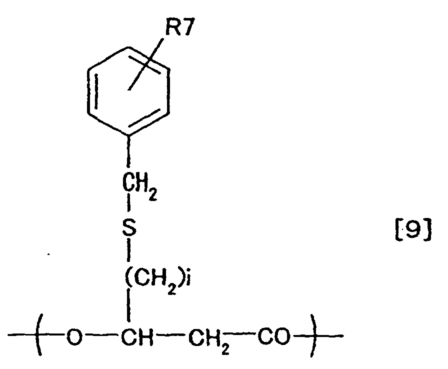 wherein "i" is any one integer selected from 1 to 7, and R7 is any one selected from the group consisting of a hydrogen (H) atom, a halogen atom, -CN, -NO₂, -COOR' and -SO₂R", in which R' is any of a hydrogen (H) atom, Na, K, -CH₃ and -C₂H₅, and R" is any of -OH, -ONa, -OK, a halogen atom, -OCH₃ and -OC₂H₅; and 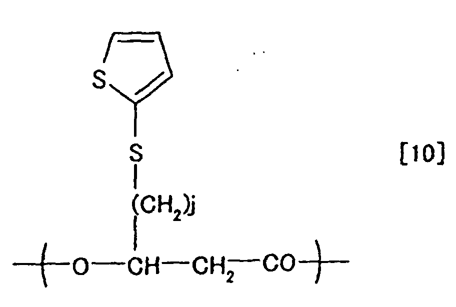 wherein "j" is any one integer selected from 1 to 9; 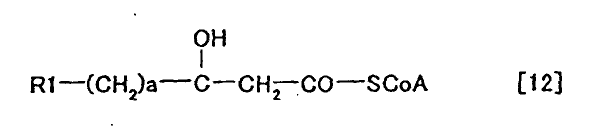 wherein -SCoA is a coenzyme A bonded to an alkanoic acid, and the combination of R1 and "a" is at least one selected from the group consisting of the following combinations and corresponds to the combination of R1 and "a" in the monomer unit represented by the formula [1]:
a monomer unit in which R1 is a hydrogen (H) atom, and "a" is any one integer selected from 0 to 10;
a monomer unit in which R1 is a halogen atom, and "a" is any one integer selected from 1 to 10;
a monomer unit in which R1 is a carboxyl group or a salt thereof, and "a" is any one integer selected from 1 to 10;
a monomer unit in which R1 is a chromophoric group, and "a" is any one integer selected from 1 to 10; and
a monomer unit in which R1 is 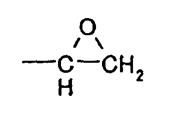
and "a" is any one integer selected from 1 to 7; 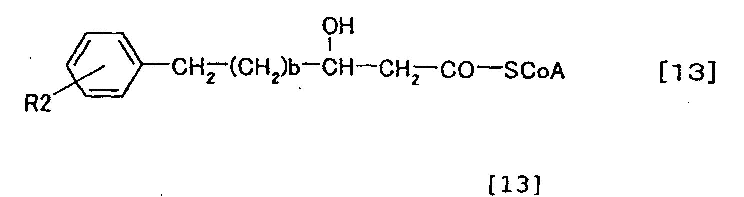
wherein -SCoA is a coenzyme A bonded to an alkanoic acid, "b" corresponds to "b" in the monomer unit represented by the formula [2] and is any one integer selected from 0 to 7, and R2 corresponds to R2 in the monomer unit represented by the formula [2] and is any one selected from the group consisting of a hydrogen (H) atom, a halogen atom, -CN, -NO₂, -CF₃, -C₂F₅ and -C₃F₇; 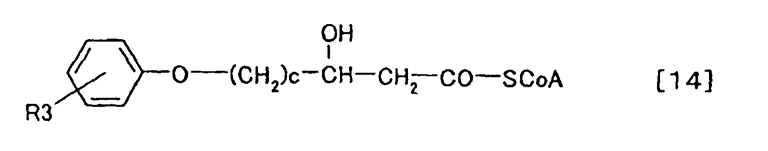 wherein -SCoA is a coenzyme A bonded to an alkanoic acid, "c" corresponds to "c" in the monomer unit represented by the formula [3] and is any one integer selected from 1 to 8, and R3 corresponds to R3 in the monomer unit represented by the formula [3] and is any one selected from the group consisting of a hydrogen (H) atom, a halogen atom, -CN, -NO₂, -CF₃, -C₂F₅ and -C₃F₇; 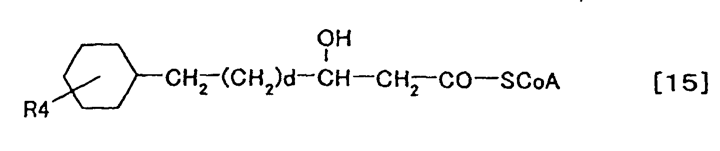 wherein -SCoA is a coenzyme A bonded to an alkanoic acid, "d" corresponds to "d" in the monomer unit represented by the formula [4] and is any one integer selected from 0 to 7, and R4 corresponds to R4 in the monomer unit represented by the formula [4] and is any one selected from the group consisting of a hydrogen (H) atom, a halogen atom, -CN, -NO₂, -CF₃, -C₂F₅ and -C₃F₇; 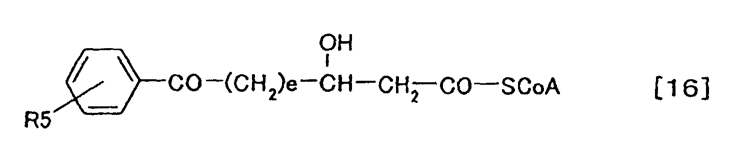 wherein -SCoA is a coenzyme A bonded to an alkanoic acid, "e" corresponds to "e" in the monomer unit represented by the formula [5] and is any one integer selected from 1 to 8, and R5 corresponds to R5 in the monomer unit represented by the formula [5] and is any one selected from the group consisting of a hydrogen (H) atom, a halogen atom, -CN, -NO₂, -CF₃, -C₂F₅, -C₃F₇ -CH₃, -C₂H₅ and -C₃H₇; 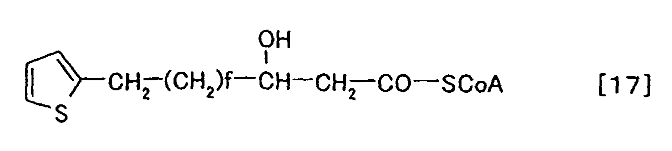 wherein -SCoA is a coenzyme A bonded to an alkanoic acid, and "f" corresponds to "f" in the monomer unit represented by the formula [6] and is any one integer selected from 0 to 7; 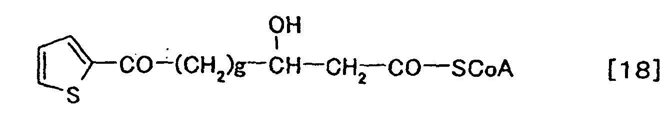 wherein -SCoA is a coenzyme A bonded to an alkanoic acid, and "g" corresponds to "g" in the monomer unit represented by the formula [7] and is any one integer selected from 1 to 8; 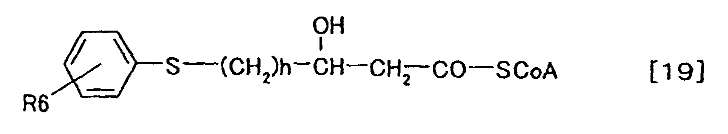 wherein -SCoA is a coenzyme A bonded to an alkanoic acid, "h" corresponds to "h" in the monomer unit represented by the formula [8] and is any one integer selected from 1 to 7, and R6 corresponds to R6 in the monomer unit represented by the formula [8] and is any one selected from the group consisting of a hydrogen (H) atom, a halogen atom, -CN, -NO₂, -COOR', -SO₂R", -CH₃, -C₂H₅, -C₃H₇, -CH(CH₃)₂ and -C(CH₃)₃, in which R' is any of a hydrogen (H) atom, Na, K, -CH₃ and -C₂H₅, and R" is any of -OH, -ONa, -OK, a halogen atom, -OCH₃ and -OC₂H₅; 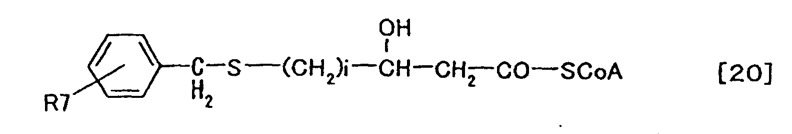 wherein -SCoA is a coenzyme A bonded to an alkanoic acid, "i" corresponds to "i" in the monomer unit represented by the formula [9] and is any one integer selected from 1 to 7, and R7 corresponds to R7 in the monomer unit represented by the formula [9] and is any one selected from the group consisting of a hydrogen (H) atom, a halogen atom, -CN, -NO₂, -COOR' and -SO₂R", in which R' is any of a hydrogen (H) atom, Na, K, -CH₃ and -C₂H₅, and R" is any of -OH, -ONa, -OK, a halogen atom, -OCH₃ and -OC₂H₅; and 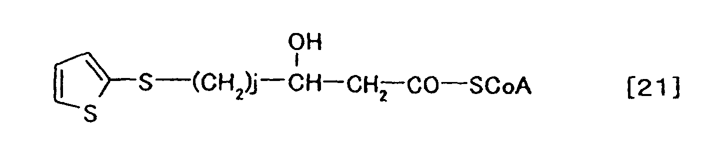 wherein -SCoA is a coenzyme A bonded to an alkanoic acid, and "j" corresponds to "j" in the monomer unit represented by the formula [10] and is any one integer selected from 1 to 9.

20. The production process according to Claim 19, wherein the polyhydroxyalkanoate has a hydrophilic functional group.

21. The production process according to Claim 20, wherein the polyhydroxyalkanoate has an anionic functional group.

22. The production process according to Claim 21, wherein the polyhydroxyalkanoate has a carboxyl group.

23. The production process according to Claim 22, wherein the carboxyl group is introduced by at least one monomer unit selected from the group consisting of the monomer units represented by the formula [11], and its corresponding 3-hydroxyacyl coenzyme A is any one of 3-hydroxyacyl coenzymes A represented by the formula [22] 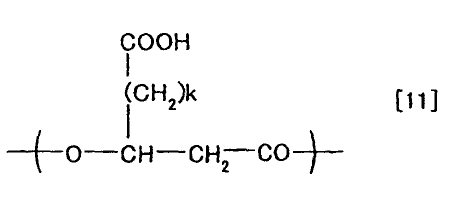 wherein "k" is any one integer selected from 1 to 10; 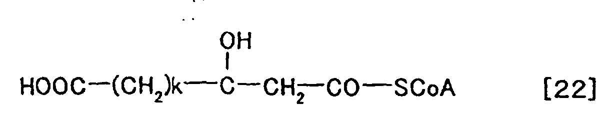 wherein -SCoA is a coenzyme A bonded to an alkanoic acid, and "k" corresponds to "k" in the monomer unit represented by the formula [11] and is any one integer selected from 1 to 10.

24. The production process according to Claim 19, wherein the 3-hydroxyalkanoic acid unit composition of the polyhydroxyalkanoate is changed in a direction from the inside of the coloring material toward the outside by changing the composition of the 3-hydroxyacyl coenzyme A with time.

25. The production process according to Claim 19, which further comprises a step of chemically modifying at least a part of the polyhydroxyalkanoate covering the pigment particles.

26. The production process according to Claim 25, wherein the step of chemically modifying is a step of adding a graft chain to at least a part of the polyhydroxyalkanoate.

27. The production process according to Claim 26, wherein the step of adding the graft chain is a step of reacting at least a part of the polyhydroxyalkanoate with a compound having a reactive functional group at its terminal.

28. The production process according to Claim 27, wherein the polyhydroxyalkanoate is a polyhydroxyalkanoate containing at least a monomer unit having an epoxy group.

29. The production process according to Claim 27 or 28, wherein the compound having a reactive functional group at its terminal is a compound having an amino group.

30. The production process according to Claim 29, wherein the compound having an amino group is a terminal amino-modified compound.

31. The production process according to Claim 30, wherein the terminal amino-modified compound is at least one compound selected from the group consisting of polyvinylamine, polyethylene-imine and terminal amino-modified polysiloxane.

32. The production process according to Claim 25, wherein the step of chemically modifying is a step of crosslinking at least a part of the polyhydroxyalkanoate.

33. The production process according to Claim 32, wherein the crosslinking step is a step of reacting at least a part of the polyhydroxyalkanoate with a crosslinking agent.

34. The production process according to Claim 33, wherein the polyhydroxyalkanoate is a polyhydroxyalkanoate containing at least a monomer unit having an epoxy group.

35. The production process according to Claim 33 or 34, wherein the crosslinking agent is at least one compound selected from the group consisting of a diamine compound, succinic anhydride and 2-methyl-4-methylimidazole.

36. The production process according to Claim 35, wherein the diamine compound is hexamethylenediamine.

37. The production process according to Claim 32, wherein the crosslinking step is a step of irradiating the polyhydroxyalkanoate with electron beam.

38. The production process according to any one of Claims 19 to 23, wherein the polyhydroxyalkanoate-synthesizing enzyme is a polyhydroxyalkanoate-synthesizing enzyme produced by a microorganism having the ability to produce the enzyme or by a transformant obtained by introducing a gene that contributes to such producing ability into a host microorganism.

39. The production process according to Claim 38, wherein the microorganism having the ability to produce the polyhydroxyalkanoate synthesizing enzyme is a microorganism belonging to *Pseudomonas sp.*

40. The production process according to Claim 39, wherein the microorganism having the ability to produce the polyhydroxyalkanoate synthesizing enzyme is at least one microorganism selected from the group consisting of *Pseudomonas putida* P91 strain (FERM BP-7373), *Pseudomonas cichorii* H45 strain (FERM BP-7374), *Pseudomonas cichorii* YN2 strain (FERM BP-7375) and *Pseudomonas jessenii* P161 strain (FERM BP-7376).

41. The production process according to Claim 38, wherein the microorganism having the ability to produce the polyhydroxyalkanoate synthesizing enzyme is a microorganism belonging to *Burkholderia sp.*

42. The production process according to Claim 41, wherein the microorganism having the ability to produce the polyhydroxyalkanoate synthesizing enzyme is at least one microorganism selected from the group consisting of *Burkholderia cepacia* KK01 strain (FERM P-4235), *Burkholderis sp.* OK3 strain (FERM P-17370) and *Burkholderis sp.* OK4 strain (FERM P-17371).

43. The production process according to Claim 38, wherein the microorganism having the ability to produce the polyhydroxyalkanoate synthesizing enzyme is a microorganism belonging to *Alcaligenes sp.*

44. The production process according to Claim 43, wherein the microorganism having the ability to produce the polyhydroxyalkanoate synthesizing enzyme is *Alcaligenes sp.* TL2 strain (FERM BP-6913).

45. The production process according to Claim 38, wherein the microorganism having the ability to produce the polyhydroxyalkanoate synthesizing enzyme is a microorganism belonging to *Ralstonia sp.*

46. The production process according to Claim 45, wherein the microorganism having the ability to produce the polyhydroxyalkanoate synthesizing enzyme is *Ralstonia eutropha* TB64 strain (FERM BP-6933).

47. The production process according to Claim 38, wherein the host microorganism of the transformant having the ability to produce the polyhydroxyalkanoate-synthesizing enzyme is *Escherichia coli*.

## Patentansprüche

1. Färbende Zusammensetzung für Farbfilter, umfassend ein färbendes Material, das durch Beschichten von zumindest einem Teil der Oberfläche von Pigmentpartikeln mit Polyhydroxyalkanoat erhalten wurde, und ein Dispersionsmittel für das färbende Material, wobei das Polyhydroxyalkanoat ein Polyhydroxyalkanoat mit zumindest einer Monomereinheit ist, die aus der Gruppe ausgewählt ist, die aus den Monomereinheiten der Formeln [1] bis [10] besteht: 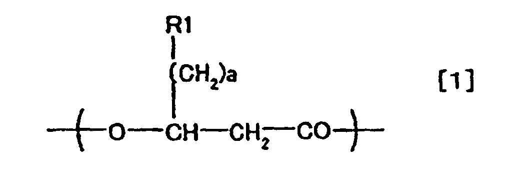 wobei die Monomereinheit zumindest eine ist, die aus der Gruppe ausgewählt ist, die aus Monomereinheiten besteht, bei denen die Kombination von R1 und "a" irgendeine der folgenden Kombinationen ist:
eine Monomereinheit, bei der R1 ein Wasserstoffatom (H) ist und "a" eine ganze Zahl von 0 bis 10 ist;
eine Monomereinheit, bei der R1 ein Halogenatom ist und "a" eine ganze Zahl von 1 bis 10 ist;
eine Monomereinheit, bei der R1 eine Carboxylgruppe oder ein Salz davon ist und "a" eine ganze Zahl von 1 bis 10 ist;
eine Monomereinheit, bei der R1 eine chromophore Gruppe ist und "a" eine ganze Zahl von 1 bis 10 ist; und
eine Monomereinheit, bei der R1 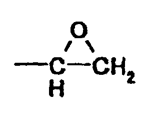
ist und "a" eine ganze Zahl von 1 bis 7 ist; 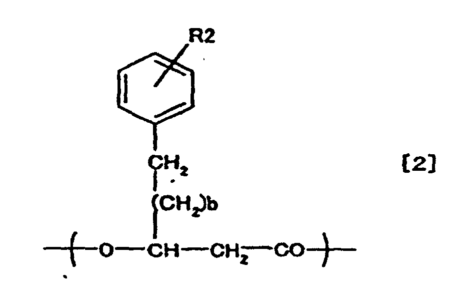
wobei "b" eine ganze Zahl von 0 bis 7 ist und R2 irgendein Rest ist, der aus der Gruppe ausgewählt ist, die aus einem Wasserstoffatom (H), einem Halogenatom, -CN, -NO₂, -CF₃, -C₂F₅ und -C₃F₇ besteht; 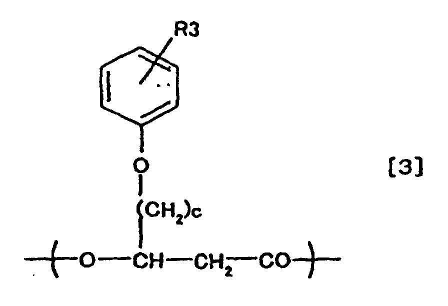 wobei "c" eine ganze Zahl von 1 bis 8 ist und R3 irgendein Rest ist, der aus der Gruppe ausgewählt ist, die aus einem Wasserstoffatom (H), einem Halogenatom, -CN, -NO₂, -CF₃, -C₂F₅ und -C₃F₇ besteht; 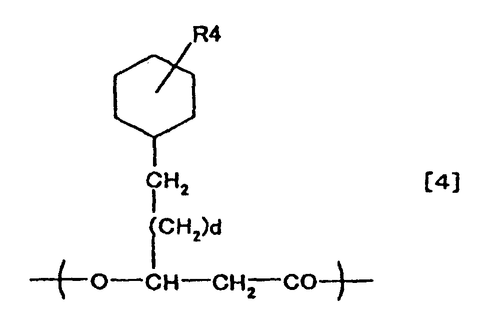 wobei "d" eine ganze Zahl von 0 bis 7 ist und R4 irgendein Rest ist, der aus der Gruppe ausgewählt ist, die aus einem Wasserstoffatom (H), einem Halogenatom, -CN, -NO₂, -CF₃, -C₂F₅ und -C₃F₇ besteht; 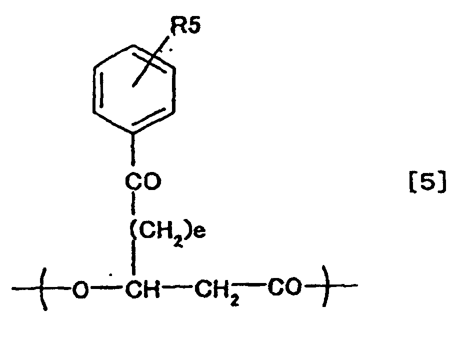 wobei "e" eine ganze Zahl von 1 bis 8 ist und R5 irgendein Rest ist, der aus der Gruppe ausgewählt ist, die aus einem Wasserstoffatom (H), einem Halogenatom, -CN, -NO₂, -CF₃, -C₂F₅, -C₃F₇, -CH₃, -C₂H₅ und -C₃H₇ besteht; 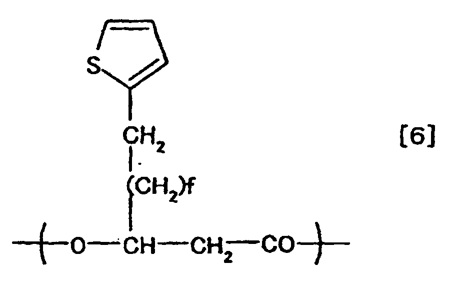 wobei "f" eine ganze Zahl von 0 bis 7 ist; 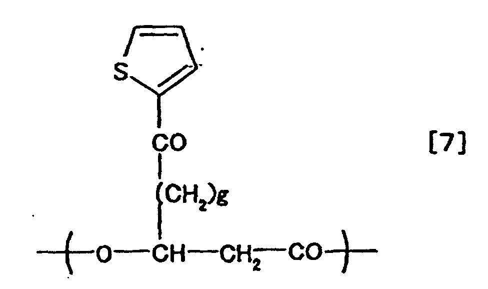 wobei "g" eine ganze Zahl von 1 bis 8 ist; 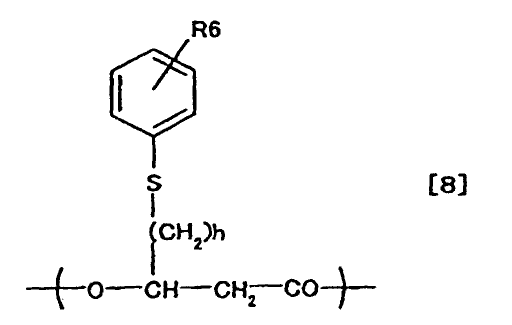 wobei "h" eine ganze Zahl von 1 bis 7 ist und R6 irgendein Rest ist, der aus der Gruppe ausgewählt ist, die aus einem Wasserstoffatom (H), einem Halogenatom, -CN, -NO₂, -COOR', -SO₂R", -CH₃, -C₂H₅, -C₃H₇ , -CH(CH₃)₂ und -C(CH₃)₃ besteht, wobei R' ein Wasserstoffatom (H), Na, K, - CH₃ oder -C₂H₅ ist und R" -OH, -ONa, -OK, ein Halogenatom, -OCH₃ oder - OC₂H₅ ist; 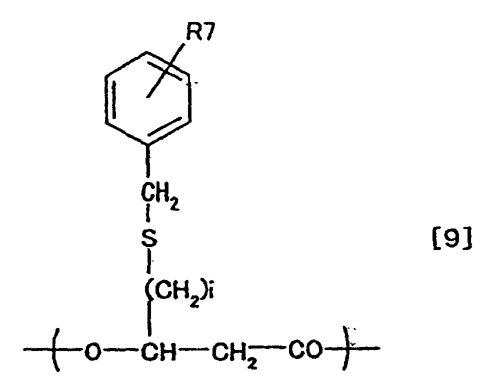 wobei "i" eine ganze Zahl von 1 bis 7 ist und R7 irgendein Rest ist, der aus der Gruppe ausgewählt ist, die aus einem Wasserstoffatom (H), einem Halogenatom, -CN, -NO₂, -COOR' und -SO₂R" besteht, wobei R' ein Wasserstoffatom (H), Na, K, -CH₃ oder -C₂H₅ ist und R" -OH, -ONa, -OK, ein Halogenatom, -OCH₃ oder -OC₂H₅ ist; und 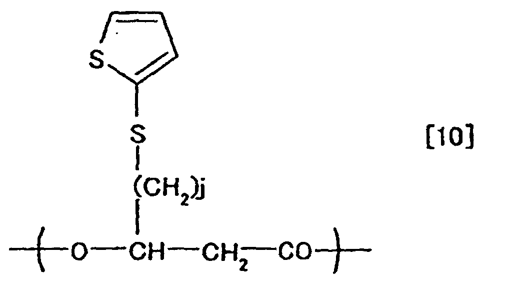 wobei "j" eine ganze Zahl von 1 bis 9 ist.

2. Färbende Zusammensetzung nach Anspruch 1,
wobei das Polyhydroxyalkanoat eine hydrophile funktionelle Gruppe aufweist.

3. Färbende Zusammensetzung nach Anspruch 2,
wobei das Polyhydroxyalkanoat eine anionische funktionelle Gruppe aufweist.

4. Färbende Zusammensetzung nach Anspruch 3,
wobei das Polyhydroxyalkanoat eine Carboxylgruppe aufweist.

5. Färbende Zusammensetzung nach Anspruch 4,
wobei die Carboxylgruppe durch zumindest eine Monomereinheit eingeführt wird, die aus der Gruppe ausgewählt ist, die aus den Monomereinheiten der Formel 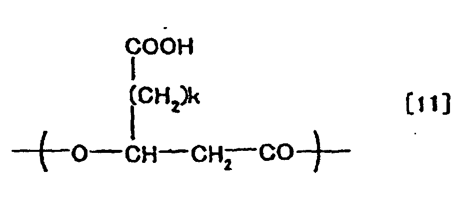 besteht, wobei "k" eine ganze Zahl von 1 bis 10 ist.

6. Färbende Zusammensetzung nach Anspruch 1,
wobei sich die Zusammensetzung der Monomereinheit des Polyhydroxyalkanoats in einer Richtung von der Innenseite des färbenden Materials zur Außenseite ändert.

7. Färbende Zusammensetzung nach Anspruch 1,
wobei zumindest ein Teil des Polyhydroxyalkanoats ein chemisch modifiziertes Polyhydroxyalkanoat ist.

8. Färbende Zusammensetzung nach Anspruch 7,
wobei das chemisch modifizierte Polyhydroxyalkanoat ein Polyhydroxyalkanoat mit zumindest einer Pfropfkette ist.

9. Färbende Zusammensetzung nach Anspruch 8,
wobei die Pfropfkette eine Pfropfkette durch chemische Modifizierung eines Polyhydroxyalkanoats ist, das zumindest eine Monomereinheit mit einer Epoxygruppe enthält.

10. Färbende Zusammensetzung nach Anspruch 8,
wobei die Pfropfkette eine Pfropfkette einer Verbindung mit einer Aminogruppe ist.

11. Färbende Zusammensetzung nach Anspruch 10,
wobei die Verbindung mit einer Aminogruppe eine endständig mit Amino modifizierte Verbindung ist.

12. Färbende Zusammensetzung nach Anspruch 11,
wobei die endständig mit Amino modifizierte Verbindung zumindest eine Verbindung ist, die aus der Gruppe ausgewählt ist, die aus Polyvinylamin, Polyethylenimin und endständig mit Amino modifiziertem Polysiloxan besteht.

13. Färbende Zusammensetzung nach Anspruch 7,
wobei zumindest ein Teil des Polyhydroxyalkanoats ein vernetztes Polyhydroxyalkanoat ist.

14. Färbende Zusammensetzung nach Anspruch 13,
wobei das vernetzte Polyhydroxyalkanoat ein Polyhydroxyalkanoat ist, das durch Vernetzen eines Polyhydroxyalkanoats erhalten wird, das zumindest eine Monomereinheit mit einer Epoxygruppe enthält.

15. Färbende Zusammensetzung nach Anspruch 13,
wobei das vernetzte Polyhydroxyalkanoat ein Polyhydroxyalkanoat ist, das durch zumindest ein Mittel bzw. eine Maßnahme vernetzt ist, ausgewählt aus der Gruppe, die aus einer Diaminverbindung, Succinsäureanhydrid, 2-Ethyl-4-methylimidazol und Bestrahlen mit Elektronenstrahlen besteht.

16. Färbende Zusammensetzung nach Anspruch 15,
wobei die Diaminverbindung Hexamethylendiamin ist.

17. Färbende Zusammensetzung nach einem der Ansprüche 1 bis 16,
wobei das Molekulargewicht des Polyhydroxyalkanoats 1.000 bis 10.000.000 beträgt.

18. Färbende Zusammensetzung nach Anspruch 17,
wobei das Molekulargewicht des Polyhydroxyalkanoats 3.000 bis 1.000.000 beträgt.

19. Verfahren zur Herstellung einer färbenden Zusammensetzung für Farbfilter, die ein färbendes Material und ein Dispersionsmittel für das färbende Material enthält, umfassend die Schritte:
Durchführen einer Synthesereaktion eines Polyhydroxyalkanoats unter Verwendung von 3-Hydroxyacyl-CoA als Substrat in Gegenwart eines Polyhydroxyalkanoat synthetisierenden Enzyms, das auf der Oberfläche von
Pigmentpartikeln immobilisiert ist, die in einem wäßrigen Medium dispergiert sind, wodurch zumindest ein Teil der Oberfläche der Pigmentpartikel mit dem Polyhydroxyalkanoat beschichtet wird, um ein färbendes Material zu erhalten, und
Dispergieren des färbenden Materials in einem Dispersionsmittel,
wobei das Polyhydroxyalkanoat ein Polyhydroxyalkanoat ist, das zumindest eine Monomereinheit aufweist, die aus der Gruppe ausgewählt ist, die aus den Monomereinheiten der Formeln [1] bis [10] besteht, und dessen entsprechendes 3-Hydroxyacyl-Coenzym A irgendeines der 3-Hydroxyacyl-Coenzyme A der Formeln [12] bis [21] ist: 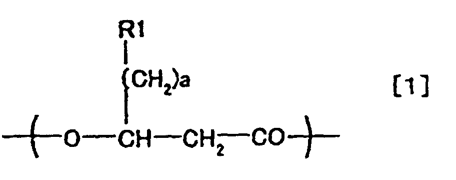 wobei die Monomereinheit zumindest eine ist, die aus der Gruppe ausgewählt ist, die aus Monomereinheiten besteht, bei denen die Kombination von R1 und "a" irgendeine der folgenden Kombinationen ist:
eine Monomereinheit, bei der R1 ein Wasserstoffatom (H) ist und "a" eine ganze Zahl von 0 bis 10 ist;
eine Monomereinheit, bei der R1 ein Halogenatom ist und "a" eine ganze Zahl von 1 bis 10 ist;
eine Monomereinheit, bei der R1 eine Carboxylgruppe oder ein Salz davon ist und "a" eine ganze Zahl von 1 bis 10 ist;
eine Monomereinheit, bei der R1 eine chromophore Gruppe ist und "a" eine ganze Zahl von 1 bis 10 ist; und
eine Monomereinheit, bei der R1 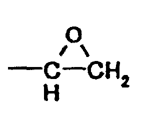
ist und "a" eine ganze Zahl von 1 bis 7 ist; 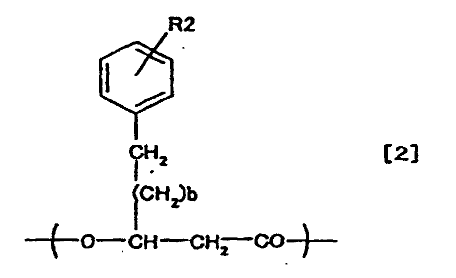
wobei "b" eine ganze Zahl von 0 bis 7 ist und R2 irgendein Rest ist, der aus der Gruppe ausgewählt ist, die aus einem Wasserstoffatom (H), einem Halogenatom, -CN, -NO₂, -CF₃, -C₂F₅ und -C₃F₇ besteht; 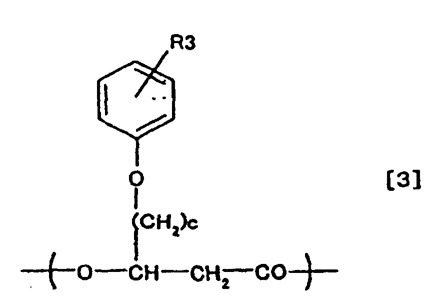 wobei "c" eine ganze Zahl von 1 bis 8 ist und R3 irgendein Rest ist, der aus der Gruppe ausgewählt ist, die aus einem Wasserstoffatom (H), einem Halogenatom, -CN, -NO₂, -CF₃, -C₂F₅ und -C₃F₇ besteht; 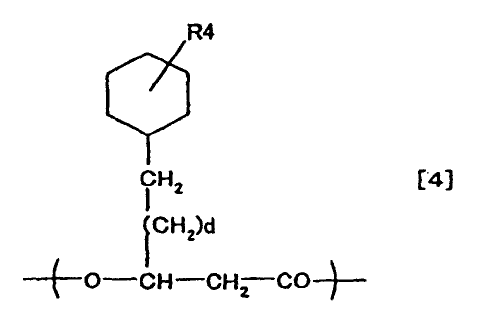 wobei "d" eine ganze Zahl von 0 bis 7 ist und R4 irgendein Rest ist, der aus der Gruppe ausgewählt ist, die aus einem Wasserstoffatom (H), einem Halogenatom, -CN, -NO₂, -CF₃, -C₂F₅ und -C₃F₇ besteht; 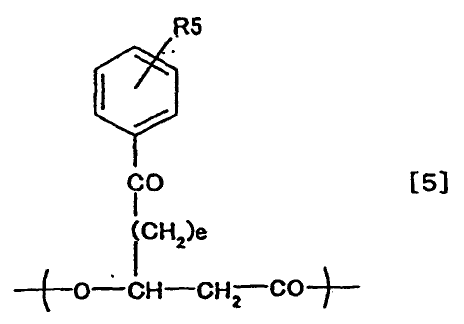 wobei "e" eine ganze Zahl von 1 bis 8 ist und R5 irgendein Rest ist, der aus der Gruppe ausgewählt ist, die aus einem Wasserstoffatom (H), einem Halogenatom, -CN, -NO₂, -CF₃, -C₂F₅, -C₃F₇, -CH₃, -C₂H₅ und -C₃H₇ besteht; 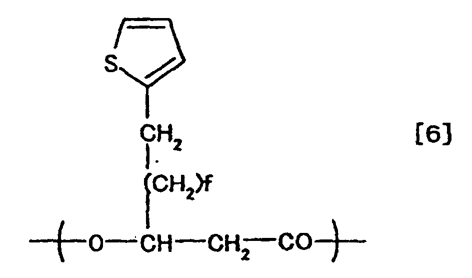 wobei "f" eine ganze Zahl von 0 bis 7 ist; 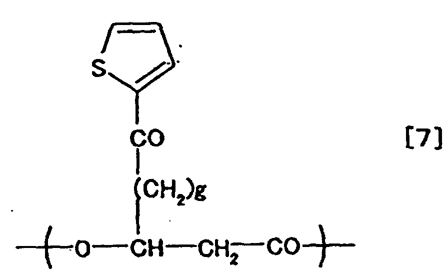 wobei "g" eine ganze Zahl von 1 bis 8 ist; 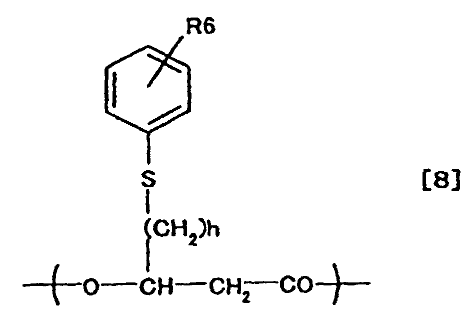 wobei "h" eine ganze Zahl von 1 bis 7 ist und R6 irgendein Rest ist, der aus der Gruppe ausgewählt ist, die aus einem Wasserstoffatom (H), einem Halogenatom, -CN, -NO₂, -COOR', -SO₂R", -CH₃, -C₂H₅, -C₃H₇ , -CH(CH₃)₂ und -C(CH₃)₃ besteht, wobei R' ein Wasserstoffatom (H), Na, K, - CH₃ oder -C₂H₅ ist und R" -OH, -ONa, -OK, ein Halogenatom, -OCH₃ oder - OC₂H₅ ist; 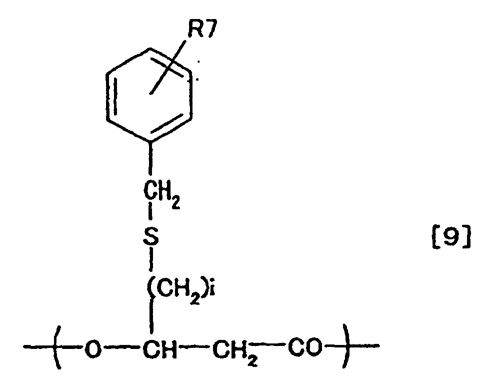 wobei "i" eine ganze Zahl von 1 bis 7 ist und R7 irgendein Rest ist, der aus der Gruppe ausgewählt ist, die aus einem Wasserstoffatom (H), einem Halogenatom, -CN, -NO₂, -COOR' und -SO₂R" besteht, wobei R' ein Wasserstoffatom (H), Na, K, -CH₃ oder -C₂H₅ ist und R" -OH, -ONa, -OK, ein Halogenatom, -OCH₃ oder -OC₂H₅ ist; und 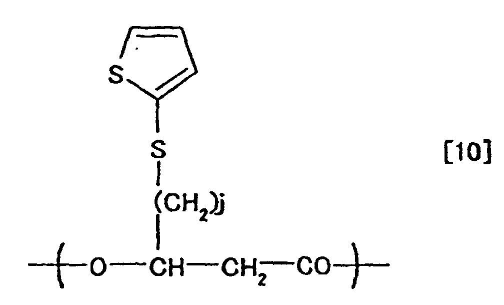 wobei "j" eine ganze Zahl von 1 bis 9 ist; 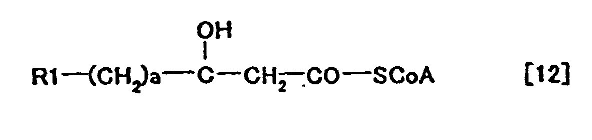 wobei -SCoA ein an Alkansäure gebundenes Coenzym A ist und die Kombination von R1 und "a" zumindest eine ist, die aus der Gruppe ausgewählt ist, die aus den folgenden Kombinationen besteht und der Kombination von R1 und "a" in der Monomereinheit der Formel [1] entspricht:
eine Monomereinheit, bei der R1 ein Wasserstoffatom (H) ist und "a" eine ganze Zahl von 0 bis 10 ist;
eine Monomereinheit, bei der R1 ein Halogenatom ist und "a" eine ganze Zahl von 1 bis 10 ist;
eine Monomereinheit, bei der R1 eine Carboxylgruppe oder ein Salz davon ist und "a" eine ganze Zahl von 1 bis 10 ist;
eine Monomereinheit, bei der R1 eine chromophore Gruppe ist und "a" eine ganze Zahl von 1 bis 10 ist; und
eine Monomereinheit, bei der R1 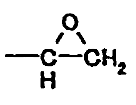
ist und "a" eine ganze Zahl von 1 bis 7 ist; 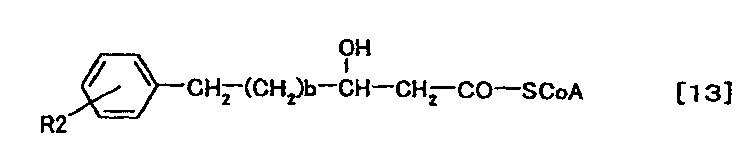
wobei -SCoA ein an Alkansäure gebundenes Coenzym A ist, "b" dem "b" in der Monomereinheit der Formel [2] entspricht und eine ganze Zahl von 0 bis 7 ist und R2 dem R2 in der Monomereinheit der Formel [2] entspricht und ein Wasserstoffatom (H), ein Halogenatom, -CN, -NO₂, -CF₃, -C₂F₅ oder -C₃F₇ ist; 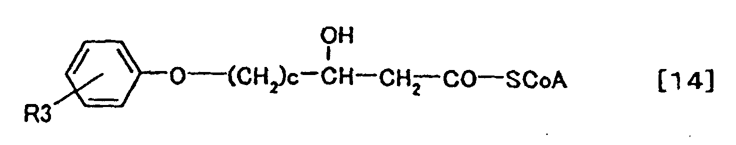 wobei -SCoA ein an Alkansäure gebundenes Coenzym A ist, "c" dem "c" in der Monomereinheit der Formel [3] entspricht und eine ganze Zahl von 1 bis 8 ist und R3 dem R3 in der Monomereinheit der Formel [3] entspricht und ein Wasserstoffatom (H), ein Halogenatom, -CN, -NO₂, -CF₃, -C₂F₅ oder -C₃F₇ ist; 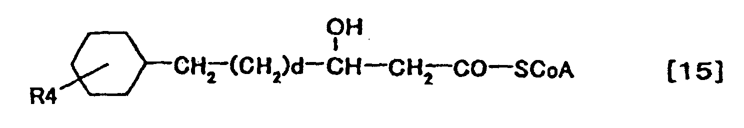 wobei -SCoA ein an Alkansäure gebundenes Coenzym A ist, "d" dem "d" in der Monomereinheit der Formel [4] entspricht und eine ganze Zahl von 0 bis 7 ist und R4 dem R4 in der Monomereinheit der Formel [4] entspricht und ein Wasserstoffatom (H), ein Halogenatom, -CN, -NO₂, -CF₃, -C₂F₅ oder -C₃F₇ ist; 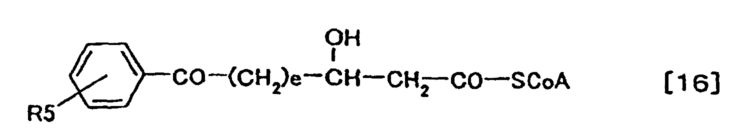 wobei -SCoA ein an Alkansäure gebundenes Coenzym A ist, "e" dem "e" in der Monomereinheit der Formel [5] entspricht und eine ganze Zahl von 1 bis 8 ist und R5 dem R5 in der Monomereinheit der Formel [5] entspricht und ein Wasserstoffatom (H), ein Halogenatom, -CN, -NO₂, -CF₃, -C₂F₅, -C₃F₇, -CH₃, -C₂H₅ oder -C₃F₇ ist; 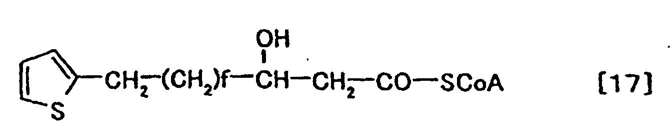 wobei -SCoA ein an Alkansäure gebundenes Coenzym A ist und "f" dem "f" in der Monomereinheit der Formel [6] entspricht und eine ganze Zahl von 0 bis 7 ist; 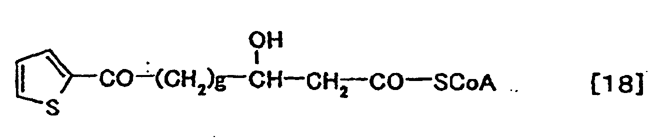 wobei -SCoA ein an Alkansäure gebundenes Coenzym A ist und "g" dem "g" in der Monomereinheit der Formel [7] entspricht und eine ganze Zahl von 1 bis 8 ist; 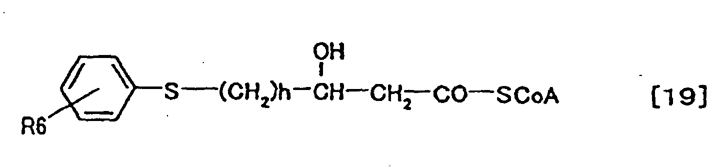 wobei -SCoA ein an Alkansäure gebundenes Coenzym A ist, "h" dem "h" in der Monomereinheit der Formel [8] entspricht und eine ganze Zahl von 1 bis 7 ist und R6 dem R6 in der Monomereinheit der Formel [8] entspricht und ein Wasserstoffatom (H), ein Halogenatom, -CN, -NO₂, -COOR', -SO₂R", -CH₃, -C₂H₅, -C₃H₇, -CH(CH₃)₂ oder -C(CH₃)₃ ist, wobei R' ein Wasserstoffatom (H), Na, K, -CH₃ oder -C₂H₅ ist und R" -OH, -ONa, -OK, ein Halogenatom, - OCH₃ oder -OC₂H₅ ist; 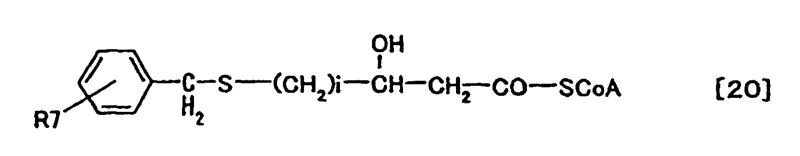 wobei -SCoA ein an Alkansäure gebundenes Coenzym A ist, "i" dem "i" in der Monomereinheit der Formel [9] entspricht und eine ganze Zahl von 1 bis 7 ist und R7 dem R7 in der Monomereinheit der Formel [9] entspricht und ein Wasserstoffatom (H), ein Halogenatom, -CN, -NO₂, -COOR' oder -SO₂R" ist, wobei R' ein Wasserstoffatom (H), Na, K, -CH₃ oder -C₂H₅ ist und R" -OH, -ONa, -OK, ein Halogenatom, -OCH₃ oder -OC₂H₅ ist; und 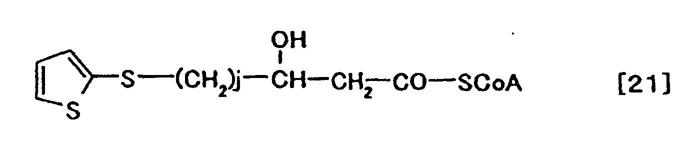 wobei -SCoA ein an Alkansäure gebundenes Coenzym A ist, "j" dem "j" in der Monomereinheit der Formel [10] entspricht und eine ganze Zahl von 1 bis 9 ist.

20. Herstellungsverfahren nach Anspruch 19,
wobei das Polyhydroxyalkanoat eine hydrophile funktionelle Gruppe aufweist.

21. Herstellungsverfahren nach Anspruch 20,
wobei das Polyhydroxyalkanoat eine anionische funktionelle Gruppe aufweist.

22. Herstellungsverfahren nach Anspruch 21,
wobei das Polyhydroxyalkanoat eine Carboxylgruppe aufweist.

23. Herstellungsverfahren nach Anspruch 22,
wobei die Carboxylgruppe durch zumindest eine Monomereinheit eingeführt wird, die aus der Gruppe ausgewählt ist, die aus den Monomereinheiten der Formel [11] besteht, und dessen entsprechendes 3-Hydroxyacyl-Coenzym A eines der 3-Hydroxyacyl-Coenzyme A der Formel [22] ist: 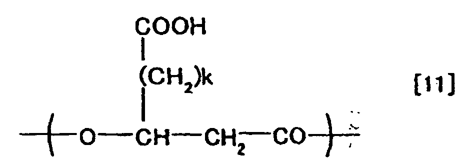 wobei "k" eine ganze Zahl von 1 bis 10 ist; 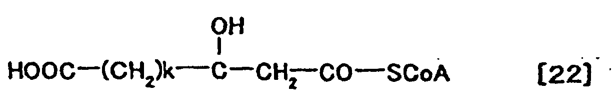 wobei -SCoA ein an Alkansäure gebundenes Coenzym A ist und "k" dem "k" in der Monomereinheit der Formel [11] entspricht und eine ganze Zahl von 1 bis 10 ist.

24. Herstellungsverfahren nach Anspruch 19,
wobei sich die Zusammensetzung der 3-Hydroxyalkansäure-Einheit des Polyhydroxyalkanoats in einer Richtung von der Innenseite des färbenden Materials zur Außenseite ändert, indem sich die Zusammensetzung des 3-Hydroxyacyl-Coenzyms A mit der Zeit ändert.

25. Herstellungsverfahren nach Anspruch 19,
das ferner einen Schritt des chemischen Modifizierens von zumindest einem Teil des die Pigmentpartikel bedeckenden Polyhydroxyalkanoats umfaßt.

26. Herstellungsverfahren nach Anspruch 25,
wobei der Schritt des chemischen Modifizierens ein Schritt des Anfügens einer Pfropfkette an zumindest einen Teil des Polyhydroxyalkanoats ist.

27. Herstellungsverfahren nach Anspruch 26,
wobei der Schritt des Hinzufügens der Pfropfkette ein Schritt ist, bei dem zumindest ein Teil des Polyhydroxyalkanoats mit einer Verbindung umgesetzt wird, die an ihrem Ende eine reaktive funktionelle Gruppe aufweist.

28. Herstellungsverfahren nach Anspruch 27,
wobei das Polyhydroxyalkanoat ein Polyhydroxyalkanoat ist, das zumindest eine Monomereinheit mit einer Epoxygruppe enthält.

29. Herstellungsverfahren nach Anspruch 27 oder 28,
wobei die Verbindung, die an ihrem Ende eine reaktive funktionelle Gruppe aufweist, eine Verbindung mit einer Aminogruppe ist.

30. Herstellungsverfahren nach Anspruch 29,
wobei die Verbindung mit einer Aminogruppe eine endständig mit Amino modifizierte Verbindung ist.

31. Herstellungsverfahren nach Anspruch 30,
wobei die endständig mit Amino modifizierte Verbindung zumindest eine Verbindung ist, die aus der Gruppe ausgewählt ist, die aus Polyvinylamin, Polyethylenimin und endständig mit Amin modifiziertem Polysiloxan besteht.

32. Herstellungsverfahren nach Anspruch 25,
wobei der Schritt des chemischen Modifizierens ein Schritt ist, bei dem zumindest ein Teil des Polyhydroxyalkanoats vernetzt wird.

33. Herstellungsverfahren nach Anspruch 32,
wobei der Vernetzungsschritt ein Schritt ist, bei dem zumindest ein Teil des Polyhydroxyalkanoats mit einem Vernetzungsmittel umgesetzt wird.

34. Herstellungsverfahren nach Anspruch 33,
wobei das Polyhydroxyalkanoat ein Polyhydroxyalkanoat ist, das zumindest eine Monomereinheit mit einer Epoxygruppe enthält.

35. Herstellungsverfahren nach Anspruch 33 oder 34,
wobei das Vernetzungsmittel zumindest eine Verbindung ist, die aus der Gruppe ausgewählt ist, die aus einer Diaminverbindung, Succinsäureanhydrid und 2-Methyl-4-methylimidazol besteht.

36. Herstellungsverfahren nach Anspruch 35,
wobei die Diaminverbindung Hexamethylendiamin ist.

37. Herstellungsverfahren nach Anspruch 32,
wobei der Vernetzungsschritt ein Schritt ist, bei dem das Polyhydroxyalkanoat mit Elektronenstrahlen bestrahlt wird.

38. Herstellungsverfahren nach einem der Ansprüche 19 bis 23,
wobei das Polyhydroxyalkanoat synthetisierende Enzym ein Polyhydroxyalkanoat synthetisierendes Enzym ist, das von einem Mikroorganismus mit der Fähigkeit zur Produktion des Enzyms oder von einer Transformante produziert worden ist, die durch Einführen eines Gens erhalten worden ist, das dazu beiträgt, ein solches Produktionsvermögen in einen Wirtsmikroorganismus einzuführen.

39. Herstellungsverfahren nach Anspruch 38,
wobei der Mikroorganismus mit der Fähigkeit zur Produktion eines Polyhydroxyalkanoat synthetisierenden Enzyms ein Mikroorganismus ist, der zu Pseudomonas sp. gehört.

40. Herstellungsverfahren nach Anspruch 39,
wobei der Mikroorganismus mit der Fähigkeit zur Produktion eines Polyhydroxyalkanoat synthetisierenden Enzyms zumindest ein Mikroorganismus ist, der aus der Gruppe ausgewählt ist, die aus dem Stamm Pseudomonas putida P91 (FERM BP-7373), dem Stamm Pseudomonas cichorii H45 (FERM BP-7374), dem Stamm Pseudomonas cichorii YN2 (FERM BP-7375) und dem Stamm Pseudomonas jessenii P161 (FERM BP-7376) besteht.

41. Herstellungsverfahren nach Anspruch 38,
wobei der Mikroorganismus mit der Fähigkeit zur Produktion eines Polyhydroxyalkanoat synthetisierenden Enzyms ein Mikroorganismus ist, der zu Burkholderia sp. gehört.

42. Herstellungsverfahren nach Anspruch 41,
wobei der Mikroorganismus mit der Fähigkeit zur Produktion eines Polyhydroxyalkanoat synthetisierenden Enzyms zumindest ein Mikroorganismus ist, der aus der Gruppe ausgewählt ist, die aus dem Stamm Burkholderia cepacia KK01 (FERM P-4235), dem Stamm Burkholderis sp. OK3 (FERM P-17370) und dem Stamm Burkholderis sp. OK4 (FERM P-17371) besteht.

43. Herstellungsverfahren nach Anspruch 38,
wobei der Mikroorganismus mit der Fähigkeit zur Produktion eines Polyhydroxyalkanoat synthetisierenden Enzyms ein Mikroorganismus ist, der zu Alkaligenes sp. gehört.

44. Herstellungsverfahren nach Anspruch 43,
wobei der Mikroorganismus mit der Fähigkeit zur Produktion eines Polyhydroxyalkanoat synthetisierenden Enzyms der Stamm Alkaligenes sp. TL2 (FERM BP-6913) ist.

45. Herstellungsverfahren nach Anspruch 38,
wobei der Mikroorganismus mit der Fähigkeit zur Produktion eines Polyhydroxyalkanoat synthetisierenden Enzyms ein Mikroorganismus ist, der zu Ralstonia sp. gehört.

46. Herstellungsverfahren nach Anspruch 45,
wobei der Mikroorganismus mit der Fähigkeit zur Produktion eines Polyhydroxyalkanoat synthetisierenden Enzyms der Stamm Ralstonia eutropha TB64 (FERM BP-6933) ist.

47. Herstellungsverfahren nach Anspruch 38,
wobei der Wirtsmikroorganismus der Transformante mit der Fähigkeit zur Produktion eines Polyhydroxyalkanoat synthetisierenden Enzyms Escherichia coli ist.

## Revendications

1. Composition colorante pour des filtres colorés, comprenant une matière colorante obtenue en revêtant au moins une partie des surfaces de particules d'un pigment avec un polyhydroxyalcanoate, et un milieu de dispersion pour la matière colorante,
dans laquelle le polyhydroxyalcanoate est un polyhydroxyalcanoate ayant au moins un motif monomère choisi dans le groupe consistant en les motifs monomères représentés par les formules [1] à [10] : 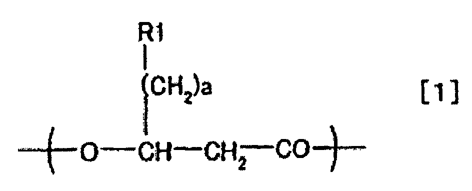 formule dans laquelle le motif monomère est au moins un motif monomère choisi dans le groupe consistant en les motifs monomères dans lesquels l'association de R1 et "a" est n'importe laquelle des associations suivantes :
un motif monomère dans lequel R1 représente un atome d'hydrogène (H) et "a" représente n'importe quel nombre entier de 0 à 10 ;
un motif monomère dans lequel R1 représente un atome d'halogène et "a" représente n'importe quel nombre entier de 1 à 10 ;
un motif monomère dans lequel R1 représente un groupe carboxyle ou un de ses sels et "a" représente n'importe quel nombre entier de 1 à 10 ;
un motif monomère dans lequel R1 représente un groupe chromophore et "a" représente n'importe quel nombre entier de 1 à 10 ; et
un motif monomère dans lequel R1 représente un groupe 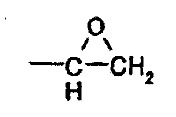 et "a" représente n'importe quel nombre entier de 1 à 7 ; 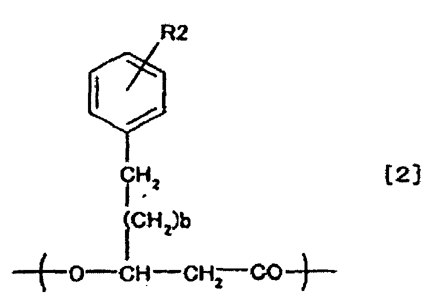 formule dans laquelle "b" représente n'importe quel nombre entier de 0 à 7 et R2 représente n'importe quel groupe choisi dans le groupe consistant en un atome d'hydrogène (H), un atome d'halogène, des groupes -CN, -NO₂, -CF₃, -C₂F₅ et -C₃F₇ ; 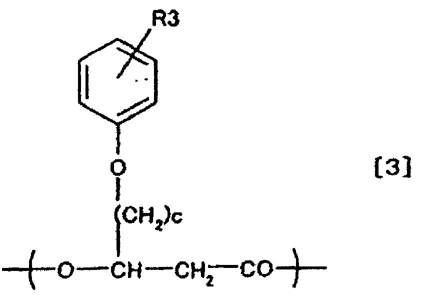 formule dans laquelle "c" représente n'importe quel nombre entier de 1 à 8 et R3 représente n'importe quel groupe choisi dans le groupe consistant en un atome d'hydrogène (H), un atome d'halogène, des groupes -CN, -NO₂, -CF₃, -C₂F₅ et -C₃F₇ ; 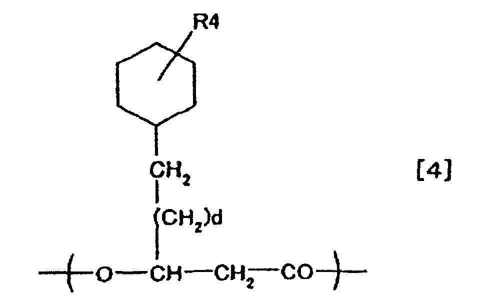 formule dans laquelle "d" représente n'importe quel nombre entier de 0 à 7 et R4 représente n'importe quel groupe choisi dans le groupe consistant en un atome d'hydrogène (H), un atome d'halogène, des groupes -CN, -NO₂, -CF₃, -C₂F₅ et -C₃R₇ ; 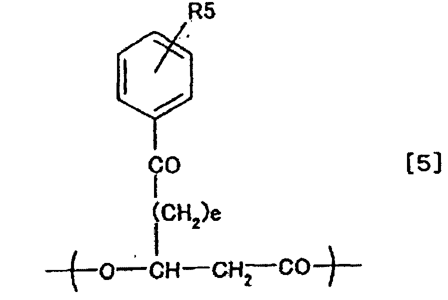 formule dans laquelle "e" représente n'importe quel nombre entier de 1 à 8 et R5 représente n'importe quel groupe choisi dans le groupe choisi dans le groupe consistant en un atome d'hydrogène (H), un atome d'halogène, des groupes -CN, -NO₂, -CF₃, -C₂F₅, -C₃F₇, -CH₃, -C₂H₅ et -C₃H₇ ; 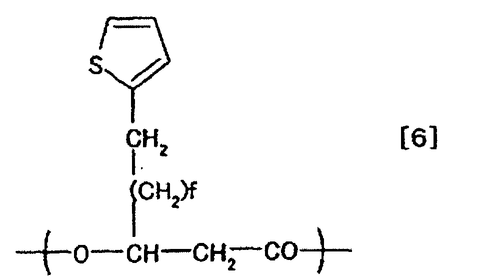 formule dans laquelle "f" représente n'importe quel nombre entier de 0 à 7 ; 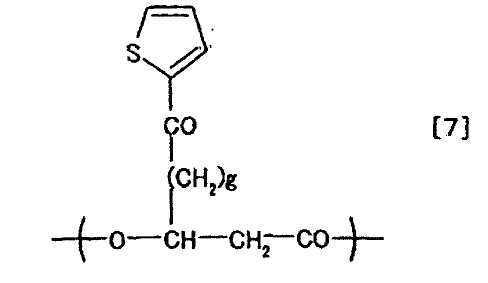 formule dans laquelle "g" représente n'importe quel nombre entier de 1 à 8 ; 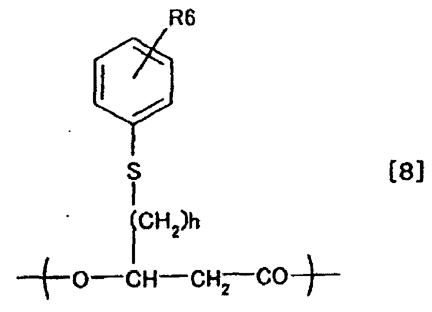 formule dans laquelle "h" représente n'importe quel nombre entier de 1 à 7 et R6 représente n'importe quel groupe choisi dans le groupe consistant en un atome d'hydrogène (H), un atome d'halogène, des groupes -CN, -NO₂, -COOR', -SO₂R", -CH₃, -C₂H₅, -C₃H₇, -CH(CH₃) et -C(CH₃)₃, dans lesquels R' représente n'importe quel groupe choisi entre un atome d'hydrogène (H), Na, K, -CH₃ et -C₂H₅ et R" représente n'importe quel groupe choisi entre des groupes -OH, -ONa, -OK, un atome d'halogène, des groupes -OCH₃ et -OC₂H₅ ; 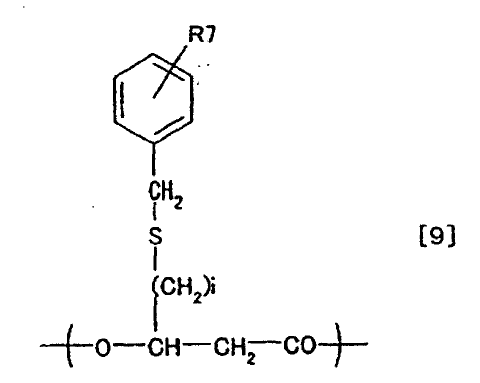 formule dans laquelle "i" représente n'importe quel nombre entier de 1 à 7 et R7 représente n'importe quel groupe choisi dans le groupe consistant en un atome d'hydrogène (H), un atome d'halogène, des groupes -CN, -NO₂, -COOR' et -SO₂R", dans lesquels R' représente n'importe quel groupe choisi entre un atome d'hydrogène (H), des groupes Na, K, -CH₃ et -C₂H₅ et R" représente n'importe quel groupe choisi entre des groupes -OH, -ONa, -OK, un atome d'halogène, des groupes -OCH₃ et -OC₂H₅ ; et 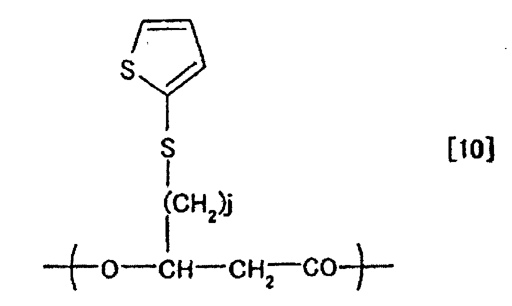 formule dans laquelle "j" représente n'importe quel nombre entier de 1 à 9.

2. Composition colorante suivant la revendication 1, dans laquelle le polyhydroxyalcanoate possède un groupe fonctionnel hydrophile.

3. Composition colorante suivant la revendication 2, dans laquelle le polyhydroxyalcanoate possède un groupe fonctionnel anionique.

4. Composition colorante suivant la revendication 3, dans laquelle le polyhydroxyalcanoate possède un groupe carboxyle.

5. Composition colorante suivant la revendication 4, dans laquelle le groupe carboxyle est introduit par au moins un motif monomère choisi dans le groupe consistant en les motifs monomères représentés par la formule 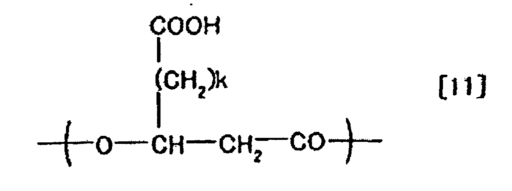 dans laquelle "k" représente n'importe quel nombre entier de 1 à 10.

6. Composition colorante suivant la revendication 1, dans laquelle la composition de motifs monomères du polyhydroxyalcanoate est modifiée dans le sens de l'intérieur de la matière colorante vers l'extérieur.

7. Composition colorante suivant la revendication 1, dans laquelle au moins une partie du polyhydroxyalcanoate est un polyhydroxyalcanoate modifié chimiquement.

8. Composition colorante suivant la revendication 7, dans laquelle le polyhydroxyalcanoate modifié chimiquement est un polyhydroxyalcanoate ayant au moins une chaîne greffée.

9. Composition colorante suivant la revendication 8, dans laquelle la chaîne greffée est une chaîne greffée par modification chimique d'un polyhydroxyalcanoate contenant au moins un motif monomère ayant un groupe époxy.

10. Composition colorante suivant la revendication 8, dans laquelle la chaîne greffée est une chaîne greffée d'un composé ayant un groupe amino.

11. Composition colorante suivant la revendication 10, dans laquelle le composé ayant un groupe amino est un composé à modification amino terminale.

12. Composition colorante suivant la revendication 11, dans laquelle le composé à modification amino terminale est au moins un composé choisi dans le groupe consistant en la polyvinylamine, la polyéthylèneimine et un polysiloxane à modification amino terminale.

13. Composition colorante suivant la revendication 7, dans laquelle au moins une partie du polyhydroxyalcanoate est un polyhydroxyalcanoate réticulé.

14. Composition colorante suivant la revendication 13, dans laquelle le polyhydroxyalcanoate réticulé est un polyhydroxyalcanoate obtenu par réticulation d'un polyhydroxyalcanoate contenant au moins un motif monomère ayant un groupe époxy.

15. Composition colorante suivant la revendication 13, dans laquelle le polyhydroxyalcanoate réticulé est un polyhydroxyalcanoate réticulé par au moins un moyen choisi dans le groupe consistant en une diamine, l'anhydride succinique, le 2-éthyl-4-méthylimidazole et l'irradiation par un faisceau d'électrons.

16. Composition colorante suivant la revendication 15, dans laquelle la diamine est l'hexaméthylènediamine.

17. Composition colorante suivant la revendication de l'une quelconque des revendications 1 à 16, dans laquelle le poids moléculaire du polyhydroxyalcanoate est compris dans l'intervalle de 1000 à 10 000 000.

18. Composition colorante suivant la revendication 17, dans laquelle le poids moléculaire du polyhydroxyalcanoate est compris dans l'intervalle de 3000 à 1 000 000.

19. Procédé pour la production d'une composition colorante pour filtres colorés, contenant une matière colorante et un milieu de dispersion pour la matière colorante, qui comprend les étapes consistant :
à conduire une réaction de synthèse d'un polyhydroxyalcanoate en utilisant un 3-hydroxyacyl-CoA comme substrat en présence d'une enzyme de synthèse de polyhydroxyalcanoate immobilisée sur les surfaces de particules d'un pigment dispersées dans un milieu aqueux, ce qui provoque le revêtement d'au moins une partie des surfaces des particules de pigment avec le polyhydroxyalcanoate pour obtenir une matière colorante, et
à disperser la matière colorante dans un milieu de dispersion,
dans lequel le polyhydroxyalcanoate est un polyhydroxyalcanoate ayant au moins un motif monomère choisi dans le groupe consistant en les motifs monomères représentés par les formules [1] à [10], et son 3-hydroxyacyl-coenzyme A correspondant est n'importe lequel des 3-hydroxyacyl-coenzymes A représentés par les formules [12] à [21] 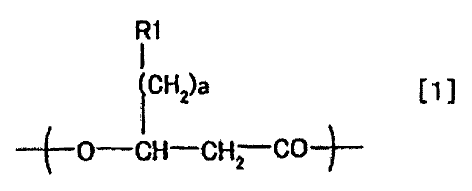 formule dans laquelle le motif monomère est au moins un motif monomère choisi dans le groupe consistant en les motifs monomères dans lesquels l'association de R1 et "a" est n'importe laquelle des associations suivantes :
un motif monomère dans lequel R1 représente un atome d'hydrogène (H) et "a" représente n'importe quel nombre entier de 0 à 10 ;
un motif monomère dans lequel R1 représente un atome d'halogène et "a" représente n'importe quel nombre entier de 1 à 10 ;
un motif monomère dans lequel R1 représente un groupe carboxyle ou un de ses sels et "a" représente n'importe quel nombre entier de 1 à 10 ;
un motif monomère dans lequel R1 représente un groupe chromophore et "a" représente n'importe quel nombre entier de 1 à 10 ; et
un motif monomère dans lequel R1 représente un groupe 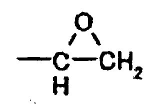 et "a" représente n'importe quel nombre entier de 1 à 7 ; 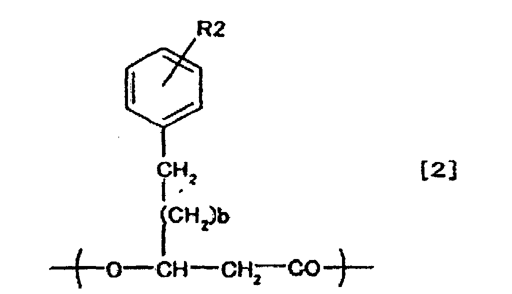 formule dans laquelle "b" représente n'importe quel nombre entier de 0 à 7 et R2 représente n'importe quel groupe choisi dans le groupe consistant en un atome d'hydrogène (H), un atome d'halogène, des groupes -CN, -NO₂, -CF₃, -C₂F₅ et -C₃F₇ ; 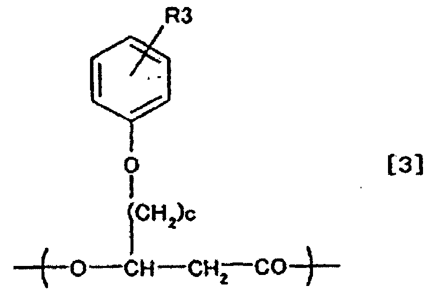 formule dans laquelle "c" représente n'importe quel nombre entier de 1 à 8 et R3 représente n'importe quel groupe choisi dans le groupe consistant en un atome d'hydrogène (H), un atome d'halogène, des groupes -CN, -NO₂, -CF₃, -C₂F₅ et -C₃F₇ ; 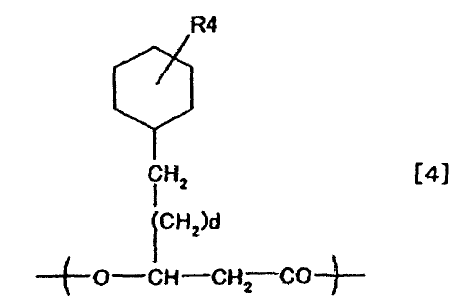 formule dans laquelle "d" représente n'importe quel nombre entier de 0 à 7 et R4 représente n'importe quel groupe choisi dans le groupe consistant en un atome d'hydrogène (H), un atome d'halogène, des groupes -CN, -NO₂, -CF₃, -C₂F₅ et -C₃R₇ ; 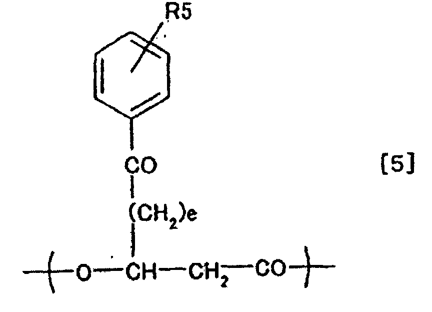 formule dans laquelle "e" représente n'importe quel nombre entier de 1 à 8 et R5 représente n'importe quel groupe choisi dans le groupe choisi dans le groupe consistant en un atome d'hydrogène (H), un atome d'halogène, des groupes -CN, -NO₂, -CF₃, -C₂F₅, -C₃F₇, -CH₃, -C₂H₅ et -C₃H₇ ; 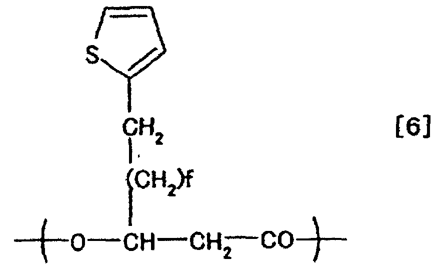 formule dans laquelle "f" représente n'importe quel nombre entier de 0 à 7 ; 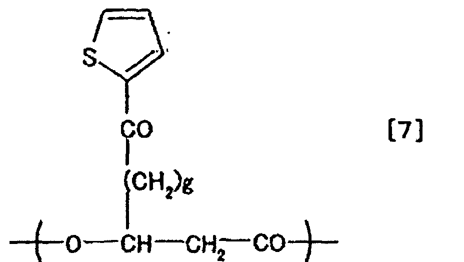 formule dans laquelle "g" représente n'importe quel nombre entier de 1 à 8 ; 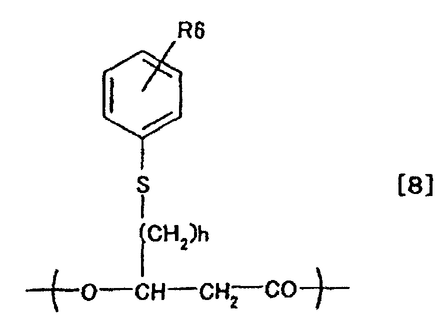 formule dans laquelle "h" représente n'importe quel nombre entier de 1 à 7 et R6 représente n'importe quel groupe choisi dans le groupe consistant en un atome d'hydrogène (H), un atome d'halogène, des groupes -CN, -NO₂, -COOR', -SO₂R", -CH₃, -C₂H₅, -C₃H₇, -CH(CH₃) et -C(CH₃)₃, dans lesquels R' représente n'importe quel groupe choisi entre un atome d'hydrogène (H), Na, K, -CH₃ et -C₂H₅ et R" représente n'importe quel groupe choisi entre des groupes -OH, -ONa, -OK, un atome d'halogène, des groupes -OCH₃ et -OC₂H₅ ; 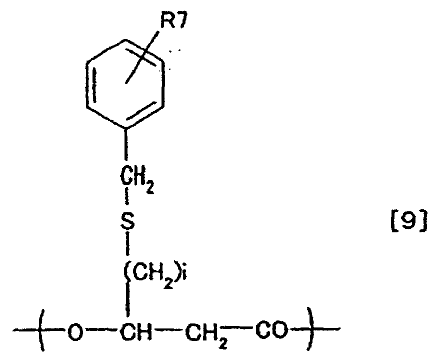 formule dans laquelle "i" représente n'importe quel nombre entier de 1 à 7 et R7 représente n'importe quel groupe choisi dans le groupe consistant en un atome d'hydrogène (H), un atome d'halogène, des groupes -CN, -NO₂, -COOR' et -SO₂R", dans lesquels R' représente n'importe quel groupe choisi entre un atome d'hydrogène (H), des groupes Na, K, -CH₃ et -C₂H₅ et R" représente n'importe quel groupe choisi entre des groupes -OH, -ONa, -OK, un atome d'halogène, des groupes -OCH₃ et -OC₂H₅ ; et 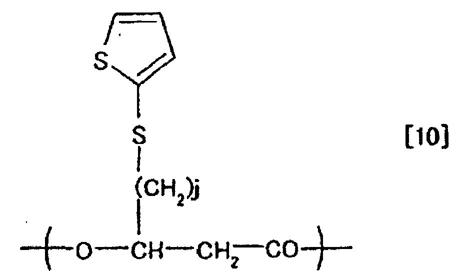 formule dans laquelle "j" représente n'importe quel nombre entier de 1 à 9. 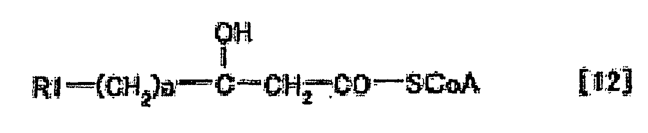 formule dans laquelle -SCoA représente un coenzyme A lié à un acide alcanoïque, et l'association de R1 et "a" est au moins une association choisie dans le groupe consistant en les associations suivantes et correspond à l'association de R1 et "a" dans le motif monomère représenté par la formule [1] :
un motif monomère dans lequel R1 représente un atome d'hydrogène (H) et "a" représente n'importe quel nombre entier de 0 à 10 ;
un motif monomère dans lequel R1 représente un atome d'halogène et "a" représente n'importe quel nombre entier de 1 à 10 ;
un motif monomère dans lequel R1 représente un groupe carboxyle ou un de ses sels et "a" représente n'importe quel nombre entier de 1 à 10 ;
un motif monomère dans lequel R1 représente un groupe chromophore et "a" représente n'importe quel nombre entier de 1 à 10 et
un motif monomère dans lequel R1 représente un groupe 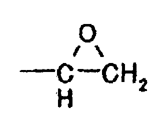 et "a" représente n'importe quel nombre entier de 1 à 7 ; 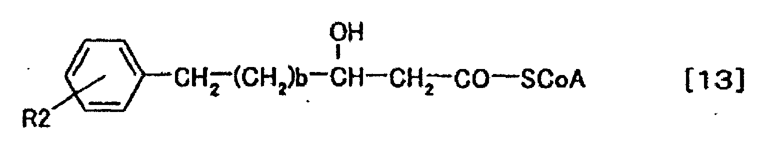 formule dans laquelle -SCoA représente un coenzyme A lié à un acide alcanoïque, "b" correspond à "b" dans le motif monomère représenté par la formule [2] et représente n'importe quel nombre entier de 0 à 7, et R2 correspond à R2 dans le motif monomère représenté par la formule [2] et représente n'importe quel groupe choisi dans le groupe consistant en un atome d'hydrogène (H), un atome d'halogène, des groupes -CN, -NO₂, -CF₃, -C₂F₅ et -C₃F₇ ; 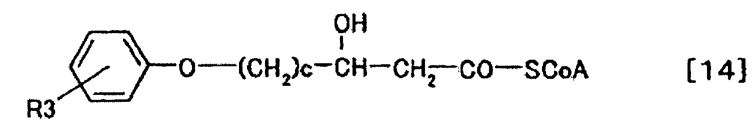 formule dans laquelle -SCoA représente un coenzyme A lié à un acide alcanoique, "c" correspond à "c" dans le motif monomère représenté par la formule [3] et représente n'importe quel nombre entier de 1 à 8, et R3 correspond à R3 dans le motif monomère représenté par la formule [3] et représente n'importe quel groupe choisi dans le groupe consistant en un atome d'hydrogène (H), un atome d'halogène, des groupes -CN, -NO₂, -CF₃, -C₂F₅ et -C₃F₇ ; 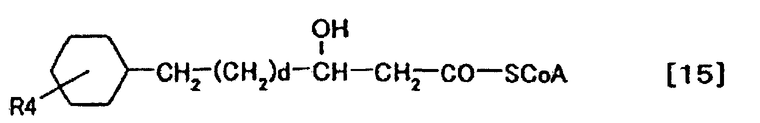 formule dans laquelle -SCoA représente un coenzyme A lié à un acide alcanoique, "d" correspond à "d" dans le motif monomère représenté par la formule [4] et représente n'importe quel nombre entier de 0 à 7, et R4 correspond à R4 dans le motif monomère représenté par la formule [4] et représente n'importe quel groupe choisi dans le groupe consistant en un atome d'hydrogène (H), un atome d'halogène, des groupes -CN, -NO₂, -CF₃, -C₂F₅ et -C₃F₇ ; 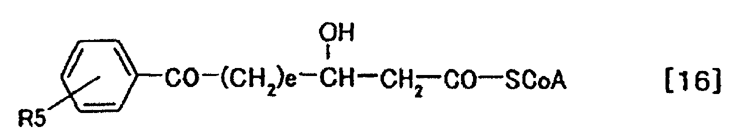 formule dans laquelle -SCoA représente un coenzyme A lié à un acide alcanoïque, "e" correspond à "e" dans le motif monomère représenté par la formule [5] et représente n'importe quel nombre entier de 1 à 8, et R5 correspond à R5 dans le motif monomère représenté par la formule [5] et représente n'importe quel groupe choisi dans le groupe consistant en un atome d'hydrogène (H), un atome d'halogène, des groupes -CN, -NO₂, -CF₃, -C₂F₅, -C₃F₇, -CH₃, -C₂H₅ et -C₃H₇ ; 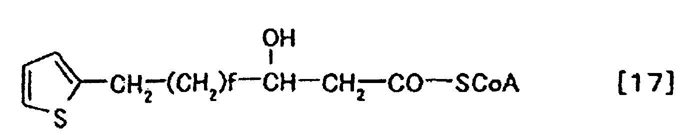 formule dans laquelle -SCoA représente un coenzyme A lié à un acide alcanoïque et "f" correspond à "f" dans le motif monomère représenté par la formule [6] et représente n'importe quel nombre entier de 0 à 7 ; 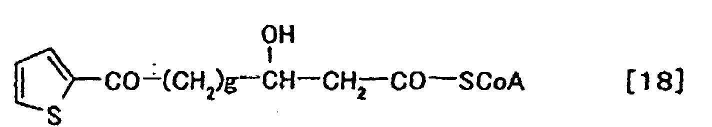 formule dans laquelle -SCoA représente un coenzyme A lié à un acide alcanoïque et "g" correspond à "g" dans le motif monomère représenté par la formule [7] et représente n'importe quel nombre entier de 1 à 8 ; 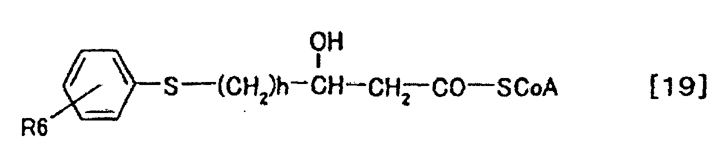 formule dans laquelle -SCoA représente un coenzyme A lié à un acide alcanoique, "h" correspond à "h" dans le motif monomère représenté par la formule [8] et représente n'importe quel nombre entier de 1 à 7 et R6 correspond à R dans le motif monomère représenté par la formule [8] et représente n'importe quel groupe choisi dans le groupe consistant en un atome d'hydrogène (H), un atome d'halogène, des groupes -CN, -NO₂, -COOR', -SO₂R", -CH₃, -C₂H₅, -C₃H₇, -CH(CH₃) et -C(CH₃)₃, dans lesquels R' représente n'importe quel groupe choisi entre un atome d'hydrogène (H), des groupes Na, K, -CH₃ et -C₂H₅ et R" représente n'importe quel groupe choisi entre des groupes -OH, -ONa, -OK, un atome d'halogène, des groupes -OCH₃ et -OC₂H₅ ; 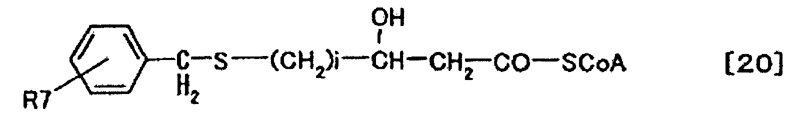 formule dans laquelle -SCoA représente un coenzyme A lié à un acide alcanoïque, "i" correspond à "i" dans le motif monomère représenté par la formule [9] et représente n'importe quel nombre entier de 1 à 7 et R7 correspond à R7 dans le motif monomère représenté par la formule [9] et représente n'importe quel groupe choisi dans le groupe consistant en un atome d'hydrogène (H), un atome d'halogène, des groupes -CN, -NO₂, -COOR' et -SO₂R", dans lesquels R' représente n'importe quel groupe choisi entre un atome d'hydrogène (H), des groupes Na, K, -CH₃ et -C₂H₅ et R" représente n'importe quel groupe choisi entre des groupes -OH, -ONa, -OK, un atome d'halogène, des groupes -OCH₃ et -OC₂H₅ ; et 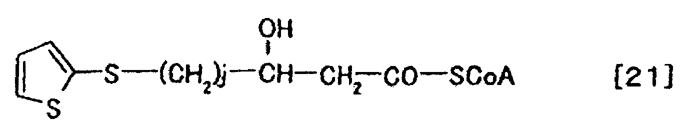 formule dans laquelle -SCoA représente un coenzyme A lié à un acide alcanoïque et "j" correspond à "j" dans le motif monomère représenté par la formule 10 et représente n'importe quel nombre entier de 1 à 9.

20. Procédé de production suivant la revendication 19, dans lequel le polyhydroxyalcanoate possède un groupe fonctionnel hydrophile.

21. Procédé de production suivant la revendication 20, dans lequel le polyhydroxyalcanoate possède un groupe fonctionnel anionique.

22. Procédé de production suivant la revendication 21, dans lequel le polyhydroxyalcanoate possède un groupe carboxyle.

23. Procédé de production suivant la revendication 22, dans lequel le groupe carboxyle est introduit par au moins un motif monomère choisi dans le groupe consistant en les motifs monomères représentés par la formule [11], et son 3-hydroxyacyl-coenzyme A correspondant est n'importe lequel des 3-hydroxyacyl-coenzyme A représentés par la formule [22] 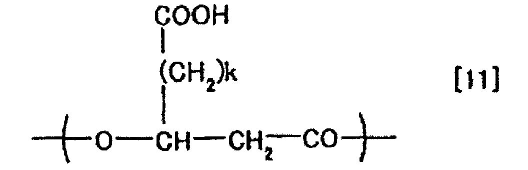 formule dans laquelle "k" représente n'importe quel nombre entier de 1 à 10 ; 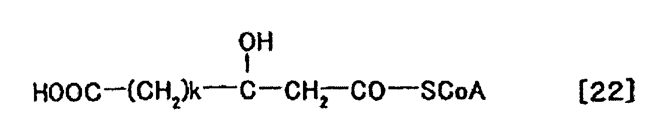 formule dans laquelle -SCoA représente un coenzyme A lié à un acide alcanoïque et "k" correspond à "k" dans le motif monomère représenté par la formule [11] et représente n'importe quel nombre entier de 1 à 10.

24. Procédé de production suivant la revendication 19, dans lequel la composition en motifs acide 3-hydroxyalcanoïque du polyhydroxyalcanoate est modifiée dans le sens de l'intérieur de la matière colorante vers l'extérieur en modifiant la composition du 3-hydroxyacyl-coenzyme A au cours du temps.

25. Procédé de production suivant la revendication 19, qui comprend en outre une étape de modification chimique d'au moins une partie du polyhydroxyalcanoate couvrant les particules de pigment.

26. Procédé de production suivant la revendication 25, dans lequel l'étape de modification chimique est une étape d'addition d'une chaîne greffée à au moins une partie du polyhydroxyalcanoate.

27. Procédé de production suivant la revendication 26, dans lequel l'étape d'addition de la chaîne greffée est une étape de réaction d'au moins une partie du polyhydroxyalcanoate avec un composé ayant un groupe fonctionnel réactif à son extrémité.

28. Procédé de production suivant la revendication 27, dans lequel le polyhydroxyalcanoate est un polyhydroxyalcanoate contenant au moins un motif monomère ayant un groupe époxy.

29. Procédé de production suivant la revendication 27 ou 28, dans lequel le composé ayant un groupe fonctionnel réactif à son extrémité est un composé ayant un groupe amino.

30. Procédé de production suivant la revendication 29, dans lequel le composé ayant un groupe amino est un composé à modification amino terminale.

31. Procédé de production suivant la revendication 30, dans lequel le composé à modification amino terminale est au moins un composé choisi dans le groupe consistant en polyvinylamine, polyéthylèneimine et polysiloxane à modification amino terminale.

32. Procédé de production suivant la revendication 25, dans lequel l'étape de modification chimique est une étape de réticulation d'au moins une partie du polyhydroxyalcanoate.

33. Procédé de production suivant la revendication 32, dans lequel l'étape de réticulation est une étape de réaction d'au moins une partie du polyhydroxyalcanoate avec un agent de réticulation.

34. Procédé de production suivant la revendication 33, dans lequel le polyhydroxyalcanoate est un polyhydroxyalcanoate contenant au moins un motif monomère ayant un groupe époxy.

35. Procédé de production suivant la revendication 33 ou 34, dans lequel l'agent de réticulation est au moins un composé choisi dans le groupe consistant en une diamine, l'anhydride succinique et le 2-méthyl-4-méthylimidazole.

36. Composition colorante suivant la revendication 35, dans laquelle la diamine est l'hexaméthylènediamine.

37. Procédé de production suivant la revendication 32, dans lequel l'étape de réticulation est une étape d'irradiation du polyhydroxyalcanoate avec un faisceau d'électrons.

38. Procédé de production suivant l'une quelconque des revendications 19 à 23, dans lequel l'enzyme de synthèse de polyhydroxyalcanoate est une enzyme de synthèse de polyhydroxyalcanoate produite par un microorganisme ayant l'aptitude à produire l'enzyme ou par un transformant obtenu en introduisant un gène qui contribue à cette capacité de production dans un microorganisme hôte.

39. Procédé de production suivant la revendication 38, dans lequel le microorganisme ayant l'aptitude à produire l'enzyme synthétisant un polyhydroxyalcanoate est un microorganisme appartenant à Pseudomonas sp.

40. Procédé de production suivant la revendication 39, dans lequel le microorganisme présentant l'aptitude à produire l'enzyme synthétisant un polyhydroxyalcanoate est au moins un microorganisme choisi dans le groupe consistant en la souche *Pseudomonas putida* P91 (FERM BP-7373), la souche *Pseudomonas cichorii* H45 (FERM BP-7374), la souche *Pseudomonas cichorii* YN2 (FERM BP-7375) et la souche *Pseudomonas jessenii* P161 (FERM BP-7376).

41. Procédé de production suivant la revendication 38, dans lequel le microorganisme ayant l'aptitude à produire l'enzyme synthétisant un polyhydroxyalcanoate est un microorganisme appartenant à *Burkholderia sp*.

42. Procédé de production suivant la revendication 41, dans lequel le microorganisme ayant l'aptitude à produire l'enzyme synthétisant un polyhydroxyalcanoate est au moins un microorganisme choisi dans le groupe consistant en la souche *Burkholderia cepacia* KK01 (FERM P-4235), la souche *Burkholderia* sp. OK3 (FERM P-17370) et la souche *Burkholderia sp.* OK4 (FERM P-17371).

43. Procédé de production suivant la revendication 38, dans lequel le microorganisme ayant l'aptitude à produire l'enzyme synthétisant un polyhydroxyalcanoate est un microorganisme appartenant à *Alcaligenes* sp.

44. Procédé de production suivant la revendication 43, dans lequel le microorganisme ayant l'aptitude à produire l'enzyme synthétisant un polyhydroxyalcanoate est la souche Alcaligenes sp. TL2 (FERM BP-6913).

45. Procédé de production suivant la revendication 38, dans lequel le microorganisme ayant l'aptitude à produire l'enzyme synthétisant un polyhydroxyalcanoate est un microorganisme appartenant à Ralstonia *sp.*

46. Procédé de production suivant la revendication 45, dans lequel le microorganisme ayant l'aptitude à produire l'enzyme synthétisant un polyhydroxyalcanoate est la souche *Ralstonia eutropha* TB64 (FERM BP-6933).

47. Procédé de production suivant la revendication 38, dans lequel le microorganisme hôte du transformant ayant l'aptitude à produire l'enzyme synthétisant un polyhydroxyalcanoate est *Escherichia coli*.
